# EUROPEAN PATENT APPLICATION

(11) **EP 2 883 856 A1**
(43) Date of publication of application: **17.06.2015**
(21) Application number: 15151118.5
(22) Date of filing: 01.08.2011
(51) Int. Cl.: C07C 1/00

(54) **A method of deoxygenation of fatty acids for preparation of hydrocarbons**

(30) Priority: 02.08.2010 US 848887
(62) Divisional of application: 11815143.0
(71) Applicant: Battelle Memorial Institute, Richland, WA 99352 (US)
(72) Inventor: Hallen, Richard T., Richland, WA Washington 99352 (US); Albrecht, Karl O., Richland, WA Washington 99352 (US); Brown, Heather M., Richland, WA Washington 99352 (US); White, James F., Richland, WA Washington 99352 (US)
(74) Representative: Bond, Christopher William

(57) **Abstract**

Embodiments of methods for making renewable diesel by deoxygenating fatty acids to produce hydrocarbons are disclosed. Fatty acids are exposed to a catalyst selected from a) M¹/M²/M³O₂ where M¹ is a transition metal, a transition metal oxide, or a combination thereof, wherein the transition metal is Fe, Mn, Mo, V, or W, M² is Pt, PtO, PtO₂, or a combination thereof, and M³ is Ti or Zr, or b) Pt/Ge or Pt/Sn on carbon, and the catalyst decarboxylates at least 10% of the fatty acids. Deoxygenation is performed without added hydrogen and at less than 100 psi. Disclosed embodiments of the catalysts deoxygenate at least 10% of fatty acids in a fatty acid feed, and remain capable of deoxygenating fatty acids for at least 200 minutes to more than 350 hours.

## Description

### CROSS REFERENCE TO RELATED APPLICATION

This application claims the benefit of the earlier filing date of U.S. Application No. 12/848,887, filed August 2, 2010, which is incorporated in its entirety herein by reference.

### FIELD

Disclosed herein are embodiments of fatty acid deoxygenation (decarboxylation/decarbonylation/dehydration) catalysts and methods of making and using the same.

### BACKGROUND

The terms "green diesel" and "renewable diesel" broadly refer to diesel-quality, non-FAME (fatty acid methyl ester) fuels derived from renewable resources *(e.g.,* plant and/or animal sources) that are suitable for direct use in most ordinary compression ignition diesel engines. Renewable diesel is chemically distinguishable from biodiesel, which is primarily composed of fatty-acid-derived mono alkyl esters. The oxygen content of biodiesel is too high to be suitable as a direct replacement for conventional petroleum diesel. In contrast, renewable diesel is substantially oxygen-free and is indistinguishable from petroleum diesel. Thus, renewable diesel can replace petroleum diesel and/or be used in blends with petroleum diesel. Renewable diesel also has higher energy content per volume compared to biodiesel. Renewable diesel may be used or blended in aircraft fuel where oxygen-containing fuels are not allowed.

Conventional processes for converting renewable oils or fats, such as vegetable oil or animal fat, to renewable diesel include catalytic or thermal decarboxylation (removal of carbon dioxide), catalytic decarbonylation (removal of carbon monoxide) and catalytic hydrocracking. The products are expected to be simple hydrocarbons or olefins. The feed for these processes can be a triglyceride or a free fatty acid.

Commercially available deoxygenation catalysts suffer from several disadvantages such as poor stability, low activity, undesirable side reactions, and/or a need to operate under high pressure conditions in the presence of hydrogen gas.

### SUMMARY

Embodiments of methods for making renewable fuel (such as renewable gasoline, renewable diesel, or renewable aviation fuel) by deoxygenating fatty acids to produce hydrocarbons are disclosed. Embodiments of highly active, selective catalysts for deoxygenating fatty acids and embodiments of methods for making and using the catalysts also are disclosed. Embodiments of the disclosed catalysts comprise (i) a Group VIII metal, a Group VIII metal oxide, or a combination thereof, (ii) a support material, and (iii) a transition metal, a transition metal oxide, a non-transition metal, or a combination thereof. In particular embodiments, the Group VIII metal is platinum. In some embodiments, the support material is carbon, a metal oxide, or a metalloid oxide. In some embodiments, the support is a metal oxide, and the catalyst further includes a transition metal oxide. In other embodiments, the support is carbon, and the catalyst further includes one or more non-transition metals *(e.g.,* Ge, Sn, Pb, Bi).

In certain embodiments, the catalyst is a) M¹/M²M³O₂, where M¹ is a transition metal, a transition metal oxide, or a combination thereof, wherein the transition metal is Fe, Mn, Mo, V, W, or a combination thereof, M² is Pt, PtO, PtO₂, or a combination thereof, and M³O₂ is the support where M³ is Ti or Zr, b) Pt/Ge/C, c) Pt/Sn/C, or d) a mixture thereof. When reference is made to M¹ or M², it is to be understood that each metal may be present in its elemental form, as an oxide, or as a combination thereof unless otherwise specified. In some embodiments, the catalyst comprises 0.1 wt% to 1.5 wt% M² and 1.5 wt% to 10 wt% M¹, where M¹ is Fe, Mn, W or a combination thereof, on ZrO₂, relative to the total mass of catalyst (including M¹, M², and M³O₂). In one embodiment, the catalyst comprises 0.7 wt% Pt and 12 wt% WO₃ on ZrO₂. In one embodiment, the catalyst comprises 0.7 wt% to 1 wt% Pt and 9.5 wt% W on ZrO₂. In one embodiment, the catalyst is W/Pt/ZrO₂ and at least a portion of the W is in a reduced form, *i.e.,* its elemental form. In one embodiment, the catalyst comprises 0.7 wt% Pt and 2.9 wt% Fe on ZrO₂. In one embodiment, the catalyst comprises 0.7 wt% Pt and 2.8 wt% Mn on ZrO₂. In other embodiments, the catalyst comprises 1 wt% to 5 wt% Pt and 0.1 wt% to 5 wt% Ge and/or Sn on carbon. In certain embodiments, the catalyst comprises a) 5 wt% Pt and b) 0.5 wt% Ge, 0.5 wt% Sn, or 0.5 wt% of a combination of Ge and Sn, relative to the total mass of the catalyst (Pt, Ge and/or Sn, and C).

Embodiments of methods for deoxygenating fatty acids with the disclosed catalysts are also disclosed. In one embodiment, fatty acids are exposed to a catalyst selected from a) M¹/M²/M³O₂ where M¹ is a transition metal, a transition metal oxide, or a combination thereof, wherein the transition metal is Fe, Mn, Mo, V, W, or a combination thereof, M² is Pt, PtO, PtO₂, or a combination thereof, and M³O₂ is the support where M³ is Ti or Zr, or b) Pt/Ge or Pt/Sn on carbon, and the catalyst deoxygenates at least 10% of the fatty acids in a fatty acid composition. Some embodiments of the disclosed catalysts deoxygenate at least 80% of the fatty acids.

The fatty acids may be obtained from a plant oil, a plant fat, an animal fat, or any combination thereof. In some embodiments, at least 90% of the fatty acids in the fatty acid composition are saturated fatty acids. In other embodiments, at least some of the fatty acids are unsaturated fatty acids having one or more double and/or triple bonds. In some embodiments, exposing unsaturated fatty acids to the catalyst results in cyclization and/or aromatization of up to 10% of the fatty acids. In certain embodiments, exposing unsaturated fatty acids to the catalyst results in isomerization, cracking, alkylation, cyclization and/or aromatization of greater than 10% of the fatty acids.

In some embodiments, the fatty acids in the composition are free fatty acids, fatty acid alkyl esters, fatty acid monoglycerides, fatty acid diglycerides, fatty acid triglycerides, or any combination thereof. In certain embodiments, at least 90% of the fatty acids in the fatty acid composition are free fatty acids. The free fatty acids can be obtained, for example, by hydrolyzing triglycerides or fatty acid alkyl esters. In some embodiments, triglycerides are hydrolyzed to produce free fatty acids and glycerol. In certain embodiments, the free fatty acids are separated from the glycerol, and the glycerol is recovered. In some embodiments, the fatty acids include unsaturated fatty acids, and the unsaturated fatty acids are hydrogenated before exposure to the catalyst. In particular embodiments, triglycerides comprising unsaturated fatty acids are hydrogenated before hydrolyzing the triglycerides to produce free saturated fatty acids and glycerol.

In certain embodiments, deoxygenation is performed at a temperature of at least 250°C. In one embodiment, the fatty acid composition is preheated to a temperature of at least 50°C before exposure to the catalyst. In another embodiment, the composition is not preheated before exposure to the catalyst. In yet another embodiment, the composition is heated in the presence of the catalyst at a temperature of at least 50°C, and deoxygenation is performed subsequently at a temperature of at least 250°C. In another embodiment, the composition is exposed to a first catalyst in a first catalyst bed at a temperature of at least 50°C, and at least 10% of the fatty acids are deoxygenated by subsequently exposing the composition to a second catalyst in a second catalyst bed at a temperature of at least 250°C. The first and second catalysts may have the same or different chemical compositions.

In certain embodiments, the catalyst is disposed within a column, and the composition is flowed through the column. In particular embodiments, deoxygenation is performed without added hydrogen and/or at a pressure of less than 250 psi. In one embodiment, deoxygenation is performed at less than 100 psi. In another embodiment, deoxygenation is performed at ambient pressure. In some embodiments, the fatty acids are flowed through a column at a weight hourly space velocity of 0.1-2.0 hr⁻¹ or 0.3-1.0 hr⁻¹. A gas may flow concurrently through the column with the composition. In certain embodiments, the gas is an inert gas *(e.g.,* nitrogen or argon), hydrogen, air, or oxygen. In other embodiments, the gas is a mixture of inert gas with hydrogen, air, oxygen, or a combination thereof.

In certain embodiments, at least a portion of the hydrocarbons produced by exposure to the catalyst are unsaturated hydrocarbons, and the unsaturated hydrocarbons are further hydrogenated to produce saturated hydrocarbons. In some embodiments, the hydrocarbons produced by exposure to the catalyst are further fractionated to produce one or more hydrocarbon fractions.

In one embodiment, the hydrocarbons are utilized as a fuel in an engine. In another embodiment, the hydrocarbons are utilized as an aviation fuel. In yet another embodiment, the hydrocarbons are blended with petroleum fuel to produce a blended fuel. In another embodiment, at least a portion of the hydrocarbons are utilized as a reactant in a chemical synthesis reaction.

Some embodiments of the disclosed catalysts, when exposed to a composition comprising fatty acids, remain capable of deoxygenating at least 10% of the fatty acids in the composition for at least 200 minutes at a temperature of 200-500°C and a WHSV of 0.1-2.0 hr⁻¹. Certain embodiments of the catalysts remain capable of deoxygenation for at least 15,000 minutes.

In some embodiments, exposing a composition comprising fatty acids to a catalyst comprising platinum and a non-transition metal on a support dehydrogenates at least 10% of the fatty acids to produce a product comprising branched, cyclic, and/or aromatic compounds. In certain embodiments, the catalyst also deoxygenates at least 10% of the product. In particular embodiments, at least 10% of the fatty acids in the composition are unsaturated fatty acids and transfer hydrogenation occurs.

Embodiments of mixtures suitable for use as a renewable fuel are disclosed. The mixtures are primarily comprised of hydrocarbons produced by fatty acid deoxygenation, primarily via decarboxylation. In some embodiments, the mixtures comprise greater than 70%, greater than 80%, or greater than 90% C15-C17 hydrocarbons.

The foregoing and other objects, features, and advantages of the invention will become more apparent from the following detailed description, which proceeds with reference to the accompanying figures.

### BRIEF DESCRIPTION OF THE DRAWINGS

FIG. 1 is a graph of percent pentadecane yield versus percent palmitic acid conversion for various catalysts.
FIG. 2 is a graph of percent pentadecane yield versus percent palmitic acid conversion for various catalyst supports.
FIG. 3 is a graph of palmitic acid feedstock conversion versus percent platinum loading for WO₃/Pt/ZrO₂ catalysts.
FIG. 4 is a graph of palmitic acid feedstock conversion versus percent WO₃ loading for WO₃/Pt/ZrO₂ catalysts.
FIG. 5 is a bar graph illustrating percent conversion, mass recovery, and products formed when palmitic acid was exposed to WO₃/Pt on various ZrO₂ supports.
FIG. 6 is a graph of pentadecane yield versus percent conversion when palmitic acid was exposed to WO₃/Pt on various ZrO₂ supports.
FIG. 7 is a bar graph illustrating percent conversion, mass recovery, and products formed when palmitic acid was exposed to various carbon-based catalysts.
FIG. 8 is a bar graph illustrating percent conversion, mass recovery, and products formed when oleic acid was exposed to various catalysts.
FIG. 9 is a bar graph illustrating the percent conversion, yield of C17 hydrocarbons, and yield of stearic acid formed when oleic acid was exposed to various carbon-based catalysts.
FIG. 10 is a gas chromatography trace of products formed when oleic acid was exposed to one embodiment of the disclosed catalysts.
FIG. 11 is a mass spectroscopy fragmentation pattern of the peak obtained at 4.911 minutes in FIG. 10.
FIG. 12 is a mass spectroscopy fragmentation pattern of the peak obtained at 5.002 minutes in FIG. 10.
FIG. 13 is a mass spectroscopy fragmentation pattern of the peak obtained at 5.125 minutes in FIG. 10.
FIG. 14 is a mass spectroscopy fragmentation pattern of the peak obtained at 5.262 minutes in FIG. 10.
FIG. 15 is an overlay of GC-FID traces of products formed when palmitic acid and oleic acid were exposed to a Pt/Ge/C catalyst.
FIG. 16 is a bar graph illustrating products formed and mass balance recovered when palmitic acid was exposed to one embodiment of the disclosed catalysts under the conditions of Run 1 as described in the Examples.
FIG. 17 is a graph of percent conversion and percent decarboxylation versus time-on-stream for Run 1.
FIG. 18 is a bar graph illustrating products formed and mass balance recovered when palmitic acid was exposed to one embodiment of the disclosed catalysts under the conditions of Run 2 as described in the Examples.
FIG. 19 is a graph of percent conversion and percent decarboxylation versus time-on-stream for Run 2.
FIG. 20 is a bar graph illustrating products formed and mass balance recovered when oleic acid, followed by palmitic acid, was exposed to one embodiment of the disclosed catalysts under the conditions of Run 3 as described in the Examples.
FIG. 21 is a graph of percent conversion and percent decarboxylation versus time-on-stream for Run 3.
FIG. 22 is a bar graph illustrating products formed and mass balance recovered when palmitic acid was exposed to one embodiment of the disclosed catalysts under the conditions of Run 4 as described in the Examples.
FIG. 23 is a graph of percent conversion and percent decarboxylation versus time-on-stream for Run 4.
FIG. 24 is a bar graph illustrating products formed and mass balance recovered when oleic acid, followed by palmitic acid, was exposed to one embodiment of the disclosed catalysts under the conditions of Run 5 as described in the Examples.
FIG. 25 is a graph of percent conversion and percent decarboxylation versus time-on-stream for Run 5.
FIG. 26 is a bar graph illustrating products formed and mass balance recovered when a mixture of oleic acid and palmitic acid, followed by palmitic acid, was exposed to one embodiment of the disclosed catalysts under the conditions of Run 6 as described in the Examples.
FIG. 27 is a graph of percent conversion of each fatty acid and overall percent decarboxylation versus time-on-stream for Run 6.
FIGS. 28a-b are a bar graph (FIG. 28a) illustrating products formed and mass balance recovered when a mixture of stearic acid (SA) and palmitic acid (PA) was exposed to one embodiment of the disclosed catalysts under the conditions of Run 7 (FIG 28b) as described in the Examples.
FIG. 29 is a graph of percent material balance recovered and overall percent decarboxylation versus time-on-stream for Run 7.
FIGS. 30a-b are a bar graph (FIG. 30a) illustrating products formed and mass balance recovered when oleic acid followed by a mixture of linoleic acid and oleic acid was exposed to one embodiment of the disclosed catalysts under the conditions of Run 8 (FIG. 30b) as described in the Examples.
FIG. 31 is a graph of percent material balance recovered and overall combined percent decarboxylation and decarbonylation versus time-on-stream for Run 8.
FIG. 32 is a bar graph illustrating products formed and percent stearic acid conversion when stearic acid was exposed to embodiments of the catalyst comprising platinum with manganese or iron on zirconia or niobia supports.
FIG. 33 is a bar graph illustrating products formed, mass recovery, and percent stearic acid conversion when stearic acid was exposed to embodiments of the catalyst comprising platinum with manganese or iron on zirconia supports.
FIG. 34 is a bar graph illustrating products formed and mass recovery when stearic acid was exposed to embodiments of the catalyst comprising platinum with additional metals on carbon supports.
FIG. 35 is a bar graph illustrating products formed, mass recovery, and percent stearic acid conversion when stearic acid was exposed to embodiments of the catalyst comprising platinum with additional metals on titania or zirconia supports.
FIG. 36 is a bar graph illustrating products formed, mass recovery, and percent stearic acid conversion when stearic acid was exposed to embodiments of the catalyst comprising platinum prepared from various precursors, with additional metals, on titania or zirconia supports.
FIG. 37 is a bar graph illustrating products formed, mass recovery, and percent conversion when oleic acid or stearic acid was exposed to embodiments of the catalyst comprising platinum prepared from various precursors, with additional metals, on carbon, zirconia, or titania supports.
FIG. 38 is a bar graph illustrating products formed, mass recovery, and percent conversion when stearic acid was exposed to an embodiment of the catalyst having a Pt/Fe alloy on a carbon support.
FIG. 39 is a bar graph illustrating products formed, mass recovery, and percent conversion when stearic acid was exposed to embodiments of the catalyst comprising platinum, with additional metals, on zirconia supports.
FIG. 40 is a bar graph illustrating products formed, mass recovery, and percent conversion when stearic acid was exposed toembodiments of regenerated catalysts comprising platinum, with additional metals, on zirconia.
FIG. 41 is a bar graph illustrating products formed, mass recovery, and percent conversion when various feed stocks are exposed to embodiments of the catalyst comprising tungsten/platinum on a zirconia support.
FIG. 42 is a bar graph illustrating products formed, mass recovery, and percent conversion when stearic acid was exposed to embodiments of fresh and regenerated catalysts comprising platinum and additional metals on zirconia supports.
FIG. 43 is a bar graph illustrating the results when stearic acid was exposed to an embodiment of the catalyst comprising tungsten/platinum on zirconia in the presence of a hydrocarbon solvent.

### DETAILED DESCRIPTION

Disclosed herein are embodiments of methods for making renewable fuel (such as renewable gasoline, renewable diesel, or renewable aviation fuel) by deoxygenating fatty acids via decarboxylation, decarbonylation, and/or dehydration to produce hydrocarbons. Also disclosed are embodiments of highly active, selective catalysts for deoxygenating free fatty acids. Catalytic deoxygenation of free fatty acids directly produces diesel-fraction hydrocarbons suitable for various transportation fuels, including but not limited to personal and industrial diesel-powered devices such as cars, trucks, buses, trains, ferries, and airplanes. Renewable diesel has several advantages compared to biodiesel. For example, oxygen-containing biodiesel is unsuitable for use in aviation and typically is blended with petroleum diesel to be used in other applications. Renewable diesel produced by embodiments of the disclosed catalysts can be used without further modification or blending.

Embodiments of the disclosed catalysts are capable of deoxygenating fatty acids to produce hydrocarbons in the absence of added hydrogen, thus allowing economical production of hydrocarbons at sites without a readily available source of hydrogen. Deoxygenation of unsaturated free fatty acids in the absence of added hydrogen also has the potential to produce olefins of chemical value, such as building blocks for other products of value.

### I. Terms and Definitions

The following explanations of terms and abbreviations are provided to better describe the present disclosure and to guide those of ordinary skill in the art in the practice of the present disclosure. As used herein, "comprising" means "including" and the singular forms "a" or "an" or "the" include plural references unless the context clearly dictates otherwise. The term "or" refers to a single element of stated alternative elements or a combination of two or more elements, unless the context clearly indicates otherwise.

Unless explained otherwise, all technical and scientific terms used herein have the same meaning as commonly understood to one of ordinary skill in the art to which this disclosure belongs. Although methods and materials similar or equivalent to those described herein can be used in the practice or testing of the present disclosure, suitable methods and materials are described below. The materials, methods, and examples are illustrative only and not intended to be limiting. Other features of the disclosure are apparent from the following detailed description and the claims.

Unless otherwise indicated, all numbers expressing quantities of components, percentages, temperatures, times, and so forth, as used in the specification or claims are to be understood as being modified by the term "about." Accordingly, unless otherwise indicated, implicitly or explicitly, the numerical parameters set forth are approximations that may depend on the desired properties sought and/or limits of detection under standard test conditions/methods. When directly and explicitly distinguishing embodiments from discussed prior art, the embodiment numbers are not approximates unless the word "about" is recited.

Definitions of particular terms, not otherwise defined herein, may be found in Richard J. Lewis, Sr. (ed.), Hawley's Condensed Chemical Dictionary, published by John Wiley & Sons, Inc., 1997 (ISBN 0-471-29205-2).

In order to facilitate review of the various embodiments of the disclosure, the following explanations of specific terms are provided:
**Catalyst:** A substance, usually present in small amounts relative to reactants, that increases the rate of a chemical reaction without itself being consumed or undergoing a chemical change. A catalyst also may enable a reaction to proceed under different conditions (e.g., at a lower temperature) than otherwise possible. Catalysts typically are highly specific with respect to the reactions in which they participate. Some catalysts have a limited lifetime, after which they must be replaced or regenerated. For example, reaction products or byproducts may deposit on the catalyst's surface, reducing its activity. Embodiments of catalysts disclosed herein comprise (i) a Group VIII metal, a Group VIII metal oxide, or a combination thereof, (ii) a support material, and (iii) a transition metal, a transition metal oxide, a non-transition metal, or a combination thereof.
**Cetane number:** A measurement of a diesel fuel composition's combustion quality during compression ignition. The cetane number is comparable to the octane-number rating for gasoline. The higher the cetane number, the more easily the fuel can be ignited. The cetane number is the percentage of cetane (C₁₆H₃₄) that must be mixed with heptamethylnonane (cetane number = 0) to give the same ignition performance under standard conditions as the fuel being rated.
**Cloud point:** The temperature at which a waxy solid material begins to appear as a diesel fuel is cooled, resulting in a cloudy appearance of the fuel. The presence of solidified waxes thickens the fuel and can clog fuel filters and fuel injectors. Wax also can accumulate on cold surfaces.
**Cracking:** A refining process involving decomposition and molecular recombination of long-chain hydrocarbons into shorter hydrocarbons. Thermal cracking exposes the hydrocarbons to temperatures of about 500-950°C for varying periods of time. Catalytic cracking occurs when heated hydrocarbon vapors (about 400°C) are passed over metal oxide and/or metallic catalysts (e.g., silica-alumina or platinum). In hydrocracking, a catalyst is used and hydrogen is added to produce primarily saturated hydrocarbons.
**Decarboxylation:** A chemical reaction in which carbon dioxide is removed from a chemical compound. For example, a fatty acid may be decarboxylated to produce a hydrocarbon and carbon dioxide: R-COOH → R-H + CO₂.
**Deoxygenation:** A chemical reaction in which oxygen is removed from a chemical compound. As used herein, deoxygenation may include decarboxylation, decarbonylation (removal of a carbonyl group), and/or dehydration (removal of water).
**Fatty acid:** A carboxylic acid having a long, unbranched, aliphatic chain or tail. Naturally occurring fatty acids commonly contain from 4 to 28 carbon atoms (usually an even number) including the carbon atom in the carboxyl group. **Free fatty acids** can be represented by the general formula RCOOH, where R is a saturated (*i.e.,* all single bonds) or unsaturated (*i.e.,* contains one or more double or triple bonds) aliphatic chain. **Saturated fatty acids** have only single bonds in the carbon chain and can be described by the general formula CH₃(CH₂)ₓCOOH. **Unsaturated fatty acids** have one or more double or triple bonds in the carbon chain. Most natural fatty acids have an aliphatic chain that has at least eight carbon atoms and an even number of carbon atoms (including the carbon atom in the carboxyl group). The fatty acid may be a liquid, semisolid, or solid. As used herein, the term "fatty acids" refers to a composition comprising molecules, mono-, di-, and/or triglycerides of a single fatty acid, *e.g.,* oleic acid, or a composition comprising molecules, mono-, di-, and/or triglycerides of a mixture of fatty acids, *e.g.,* oleic acid and palmitic acid.
**Olefin:** An unsaturated aliphatic hydrocarbon having one or more double bonds. Olefins with one double bond are alkenes; olefins with two double bonds are alkadienes or diolefins. Olefins typically are obtained by cracking petroleum fractions at high temperatures (e.g., 800-950°C).
**Pore:** One of many openings or void spaces in a solid substance of any kind. Pores are characterized by their diameters. According to IUPAC notation, **micropores** are small pores with diameters less than 2 nm. A microporous material has pores with a mean diameter of less than 2 nm. **Mesopores** are mid-sized pores with diameters from 2 nm to 50 nm. A mesoporous material has pores with a mean diameter from 2 nm and 50 nm. **Macropores** are large pores with diameters greater than 50 nm. A macroporous material has pores with a mean diameter greater than 50 nm.
**Porous:** A term used to describe a matrix or material that is permeable to at least some fluids (such as liquids or gases). For example, a porous matrix is a matrix that is permeated by a network of pores (voids) that may be filled with a fluid. In some examples, both the matrix and the pore network (also known as the pore space) are continuous, so as to form two interpenetrating continua.
**Pour point:** The lowest temperature at which a liquid will pour or flow under prescribed conditions.
**Renewable diesel:** Diesel-quality, non-FAME (fatty acid methyl ester) fuels derived from renewable resources that are suitable for use in most ordinary compression ignition engines. Renewable diesel is substantially oxygen-free and is a direct replacement for petroleum diesel.
**Renewable fuel:** Fuel (*e.g*., gasoline, diesel, aviation) derived from renewable resources, *e.g*., plant and/or animal resources.
**TOS:** Time-on-stream. As used herein, TOS is the length of time that the catalyst has been converting feed to product.
**Transfer hydrogenation:** A reaction in which the hydrogen produced by dehydrogenating one molecule is transferred to a second molecule, thereby hydrogenating the second molecule.
**WHSV:** Weight hourly space velocity. As used herein, WHSV is the weight of feed flowing per weight of catalyst per hour.

### II. Catalysts for Conversion of Fatty Acids to Hydrocarbons

The disclosed catalysts are suitable for conversion of saturated and/or unsaturated fatty acids to hydrocarbon products. The disclosed catalysts are capable of deoxygenating saturated and/or unsaturated fatty acids via decarboxylation. In some embodiments, decarbonylation, alkylation, isomerization, cracking, hydrogenation/dehydrogenation, cyclization, and/or aromatization also occur. The hydrocarbon products are suitable for use as a renewable fuel. Some fractions of the fuel may be suitable for use as gasoline or aviation fuel.

Embodiments of the catalysts comprise a Group VIII metal, a support material, and a transition metal, a transition metal oxide, a non-transition metal, or a combination thereof.

The support material is carbon, a metal oxide, or a metalloid oxide. Typically the support material is, at least in part, porous. In some embodiments where the support is a metal oxide or metalloid oxide, the catalyst further includes a transition metal or a transition metal oxide. In other embodiments where the support is carbon, the catalyst further includes one or more non-transition metals.

In some embodiments, the Group VIII metal is selected from Co, Ir, Ni, Pd, Pt, Ru, or a combination thereof. In some embodiments, the Group VIII metal is in its reduced, elemental state. In certain embodiments, the Group VIII metal may be at least partially oxidized. For example, if the Group VIII metal is iridium, a portion of the iridium may be present as IrO₂. In some embodiments, at least 70% at least 80%, at least 90%, at least 95%, at least 98%, at least 99%, 70-100%, 80-100%, 90-100%, 95-100%, 98-100%, or 99-100% of the Group VIII metal is in its reduced, elemental state. In particular embodiments, the Group VIII metal is Pt.

In some embodiments, the catalyst includes a Group VIII metal, a metal oxide or metalloid oxide support, and a transition metal, a transition metal oxide, or a combination thereof. In such embodiments, the catalyst has a general formula M¹/M²/M³Oₓ where M¹ is a transition metal, a transition metal oxide, or a combination thereof, M² is a Group VIII metal, a Group VIII metal oxide, or a combination thereof, and M³Oₓ is a metal oxide or metalloid oxide support. It is to be understood that M¹ and M² refer to an elemental (reduced) metal, a metal oxide, or a combination thereof, unless otherwise specified. For instance, when M¹ is iron, iron may be present as Fe, FeO, Fe₂O₃, or any combination thereof, unless otherwise stated. The value of x is based upon the oxidation state of M³. In some embodiments, M³ is Al, Nb, Si, Ti, Zr, or a combination thereof, and 1 ≤ x ≤ 3. If M³ represents a single metal, then x typically is an integer. For example, if M³ is Zr, x is 2, and M³Oₓ is ZrO₂. However, if M³ represents a combination of metals, *e.g*., Al and Si, then x may not be an integer and the value of x will depend at least in part on the relative abundance of each metal. In some embodiments, the metal oxide or metalloid oxide support, M³Oₓ, is selected from Al₂O₃, NbO₂, SiO₂, TiO₂, ZrO₂, or a combination thereof. In certain embodiments, the metal oxide support was TiO₂ or ZrO₂.

In some embodiments, the M¹ is iron, managanese, molybdenum, tungsten, or vanadium. In particular embodiments, the M¹ is iron, manganese, or tungsten. In some embodiments, at least a portion of the M¹ is in the form of a transition metal oxide such as iron (II or III) oxide, manganese (II, IV, or VII) oxide, molybdenum (VI) oxide, tungsten (VI) oxide, or vanadium (V) oxide. In certain embodiments, M¹ is substantially in the form of a metal oxide. For example, at least 70%, at least 80%, at least 90%, at least 95%, 70-100%, 80-100%, 90-100%, or 95-100% of M¹ may be present as a metal oxide. In other embodiments, M¹ is substantially in its reduced, elemental form. For example, at least 70%, at least 80%, at least 90%, at least 95%, 70-100%, 80-100%, 90-100%, or 95-100% of M¹ may be present in its reduced, elemental form.

In some embodments, M² is platinum, *i.e.,* Pt, PtO, PtO₂, or a combination thereof. In particular embodiments, the Pt is substantially in its reduced form, *e.g.,* at least 80% reduced, at least 90% reduced, at least 95% reduced, at least 98% reduced, at least 99% reduced, at least 99.9% reduced, 80-100% reduced, 90-100% reduced, 95-100% reduced, 98-100% reduced, or 99-100% reduced. Exemplary catalysts include Fe/Pt/ZrO₂, Mn/Pt/ZrO₂, Mo/Pt/ZrO₂, and W/Pt/ZrO₂.

In some embodiments, the catalyst includes a Group VIII metal, a carbon support, and one or more additional metals, typically a non-transition metal *(e.g.,* Ge, Sn, Pb, Bi). In certain embodiments, the non-transition metal is Ge or Sn. In particular embodiments, the non-transition metal is present substantially in its reduced, elemental state. For example, at least 70%, at least 80%, at least 90%, at least 95%, 70-100%, 80-100%, 90-100%, or 95-100% of the non-transition metal is present in a reduced, elemental state. Exemplary catalysts having carbon supports include Pt/Ge/C, Pt/Ru/C, and Pt/Sn/C.

Surprisingly superior results were obtained with W/Pt/ZrO₂, Fe/Pt/ZrO₂, Mn/Pt/ZrO₂, Mo/Pt/ZrO₂, Pt/Ge/C, and Pt/Sn/C, where Pt was substantially reduced, *e.g.,* at least 80% reduced, at least 90% reduced, at least 95% reduced, at least 98% reduced, at least 99% reduced, at least 99.9% reduced, 80-100% reduced, 90-100% reduced, 95-100% reduced, 98-100% reduced, 99-100% reduced, or 99.9-100% reduced.

As discussed in detail in Example 1, out of the more than 100 catalyst samples investigated, one composition, *i.e.,* WO₃/Pt/ZrO₂, worked surprisingly well for deoxygenating saturated fatty acids via decarboxylation with up to 100% conversion. WO₃/Pt/ZrO₂ is believed to be an acidic catalyst. At the time of the invention, conventional thought was that acidic catalysts would be unsuitable for a continuous-flow process because of their tendency to build up surface coke deposits during hydrocarbon processing, thereby losing activity. Sooknoi *et al.,* for example, investigated deoxygenation of methyl esters over zeolite catalysts, including NaX, and stated that, typical of acid catalysts, rapid deactivation was observed with NaX and was probably due to coke formation over the acid sites. *(*J. of Catalysis, 258 (2008) 199-209.) However, surprisingly, addition of platinum to tungstated zirconia ameliorated the problem of coke formation, allowing the catalyst to remain active for relatively long periods of time. In one embodiment, a WO₃/Pt/ZrO₂ catalyst was shown to produce 90-100% palmitic acid conversion for up to 800 minutes in a continuous-flow process. In another embodiment, a WO₃/Pt/ZrO₂ catalyst was shown to still be capable of 60-90% palmitic acid conversion after 18,000 minutes (300 hours) in a continuous-flow process. Likewise, unexpectedly superior results for decarboxylation of saturated fatty acids, *e.g*., stearic acid, also were obtained with certain of the disclosed catalysts, Fe/Pt/ZrO₂ and Mn/Pt/ZrO₂ (see, *e.g.,* Example 4).

Catalysts comprising platinum/germanium or platinum/tin on carbon supports also were investigated and shown to produce unexpectedly superior results, particularly with respect to decarboxylating unsaturated fatty acids. Some Group VIII metals on carbon, *e.g.,* 5 wt% Pd/C, are capable of decarboxylating saturated fatty acids. However, Pd/C has low activity with unsaturated fatty acids, and exhibits poor stability when used in a liquid-phase continuous process. Additionally, double-bond rearrangement and side reactions such as cracking can hinder decarboxylation activity. An initial screening assay (Example 1) demonstrated that a Pt/Ge/C catalyst converted more than 95% of an oleic acid feed to heptadecane. A Pt/Sn/C catalyst converted more than 85% of the oleic acid feed to heptadecane. In contrast, a Pt/C catalyst converted less than 60% of the oleic acid feed to heptadecane. As described in Example 3, one embodiment of a Pt/Sn/C catalyst deoxygenated about 60% of an oleic acid feed for up to 500 hours in a liquid-phase, continuous-flow process. Surprisingly, while WO₃/Pt/ZrO₂ catalysts were less effective than carbon-supported catalysts for deoxygenating unsaturated fatty acids, a hydrogen-reduced W/Pt/ZrO₂ catalyst was shown to deoxygenate oleic acid with unexpectedly relatively high activity (Example 14).

The following exemplary catalyst compositions are not meant to be exact or limiting. Because platinum is expensive, it is typically advantageous to minimize the amount of platinum in the catalyst. In some embodiments, the mass of platinum relative to the mass of the catalyst is less than or equal to 5 wt%, less than 2 wt%, or less than 1 wt%. For example, the platinum may be present in an amount of 5 wt%, 1 wt% to 5 wt%, 0.4 wt% to 2 wt%, 0.5 wt% to 1.5 wt%, or 0.7 wt%. Typically, 1 wt% to 5 wt% platinum is used in conjunction with the carbon-based supports and non-transition metals disclosed herein.

Although platinum may be present in concentrations up to 5 wt% on metal oxide or metalloid oxide supports, smaller amounts *(e.g.,* 0.5 wt% to 1.5 wt%) can be used in conjunction with at least some metal oxide-based supports, such as TiO₂ or ZrO₂.

In some embodiments, the mass of M¹ (based on the mass of elemental metal) relative to the total mass of the catalyst (including the support) is 0.5-10 wt%, such as 1.5-10 wt%, 1-6 wt%, 2.5-6 wt%, 1-3 wt%, or 1.5-3 wt%. In certain embodiments, M¹ is W at a concentration of 9-10 wt%, such as 9.5 wt% of the total catalyst mass. In other embodiments, M¹ is Mn or Fe at a concentration of 2.5-3 wt%, such as 2.8-2.9 wt% of the total catalyst mass.

In some embodiments, the catalyst satisfies the formula M¹/Pt/ZrO₂. In certain embodiments, M¹ is Fe, Mn, W, Mo, an oxide thereof, or a combination thereof. Pt may be present as Pt, PtO, PtO₂, or a combination thereof. The catalyst includes M¹ and Pt in a relative weight ratio ranging from 300:1 to 1:1, based upon the mass of the non-oxidized metals, such as a weight ratio from 100:1 to 1:1, a weight ratio from 25:1 to 1:1, or a weight ratio from 15:1 to 1.5:1. For example, in some embodiments, the catalyst comprises 0.1 wt% to 1.5 wt% Pt and 1.5 wt% to 10 wt% M¹ on ZrO₂, relative to the total mass of catalyst. In a particular embodiment, the effects of Pt and WO₃ concentration on palmitic acid conversion (primarily via decarboxylation) to hydrocarbon products were evaluated, and a WO₃/Pt/ZrO₂ catalyst having 12 wt% WO₃ and 0.7 wt% Pt on a ZrO₂ support provided unexpected and superior results. This catalyst also may be represented as 9.5 wt% W/0.7 wt% Pt/ZrO₂. In another embodiment, Fe/Pt/ZrO₂ catalysts having 1.5-3 wt% Fe and 1-1.5 wt% Pt, Mn/Pt/ZrO₂ catalysts having 2.5-6 wt% Mn and 1-1.5 wt% Pt, and Fe/Pt/NbO₂ catalysts having 1.5-3 wt% Fe and 1-1.5% Pt provided superior results for stearic acid conversion (primarily via decarboxylation) to hydrocarbon products. In another embodiment, a catalyst having 7.8 wt% MoO₃ and 0.7 wt% Pt on a ZrO₂ support also provided unexpected, superior results.

Embodiments of carbon-based catalysts may include platinum and a non-transition metal in a relative weight ratio of 50:1 to 1:1, such as a weight ratio of 10:1 to 3:1. For example, the catalyst may include 0.5 wt% to 5 wt% Pt or 1.5 wt% to 5 wt% Pt, relative to the total mass of catalyst, such as 1.5 wt%, 3 wt%, or 5 wt%. Disclosed embodiments of the carbon-based catalysts also include 0.1 wt% to 5 wt% Ge or Sn, relative to the total mass of the catalyst. Catalysts including 5 wt% Pt and 0.5-1 wt% Ge on carbon or 1.5 wt% Pt/0.15 wt% Sn on carbon were found, unexpectedly, to be effective catalysts for decarboxylating palmitic acid. Certain embodiments concerning oleic acid conversion to deoxygenated product demonstrated unexpectedly superior results with Pt/Ge/C and Pt/Sn/C catalysts.

### III. Catalyst Synthesis and Regeneration

### A. Group VIII Metal and Transition Metal and/or Transition Metal Oxide on Metal Oxide or Metalloid Oxide Support

Catalysts comprising Group VIII metals, such as platinum, and a transition metal and/or transition metal oxide on a metal oxide or metalloid oxide support are disclosed. Zirconia, silica, alumina, niobia, and titania supports may be prepared by calcining the metal oxide or metalloid oxide at 450-850°C for 2-6 hours, *e.g.,* at 450°C for 2 hours. In some embodiments, zirconia may include a binder, such as graphite or cornstarch. In certain embodiments, the metal oxide or metalloid oxide is ground and sieved prior to calcination.

When preparing catalyst compositions including Pt and a transition metal or transition metal oxide, the transition metal typically is added after calcination and before addition of Pt. Typically, aqueous soluble metal salts are used, *e.g.,* ammonium tungstate in water, manganese nitrate in dilute nitric acid, or iron (III) nitrate nonahydrate in water. For example, an aqueous transition metal solution (e.g., ammonium metatungstate hydrate) may be added to the support by the incipient wetness technique. Incipient wetness impregnation is performed by dissolving a metal salt in an appropriate solvent, and then adding the solution to a porous catalyst support. The amount of the solution added corresponds to the pore volume of the catalyst support. The concentration of solution is selected such that the desired mass of metal salt is added to the support. Capillary action draws the solution into the support's pores. The catalyst is then dried and/or calcined, depositing the metal salt on the catalyst surface. In some embodiments, an ammonium metatungstate solution was added to a calcined zirconia support. The impregnated support was then dried and subsequently calcined.

A Group VIII metal (M²), *e.g*., platinum, is then added to the impregnated and subsequently calcinced support (M¹/M³Oₓ). In some embodiments, an aqueous platinum ethanolamine solution is added via the incipient wetness technique. The Pt-impregnated catalyst is then dried, calcined, and optionally ground and sieved.

In certain embodiments, the Group VIII metal is added to the catalyst support first, followed by addition of the transition metal. In some embodiments, the Group VIII metal and transition metal are added simultaneously.

In other embodiments, platinum is added by combining M¹/M³Oₓ (*e.g.,* tungstated zirconia) and platinum acetylacetonate in a round-bottom flask, which is placed on a rotary evaporator and heated under vacuum. The catalyst then is calcined to produce M¹/M²/M³Oₓ. In one embodiment, a WO₃/Pt/ZrO₂ catalyst subsequently is reduced in a hydrogen atmosphere at 350°C, thereby likely reducing at least a portion of the WO₃ to W.

Platinum acetylacetonate may be used as described above to add platinum to titania supports. The titania support optionally is calcined, *e.g.,* at 450-900°C. The titania support may be ground and sieved before adding platinum.

In some embodiments, MoO₃/Pt/ZrO₂ catalysts are prepared by first calcining a zirconia support, *e.g.,* at 450°C. An aqueous solution of ammonium heptamolybdate hydrate is added by the incipient wetness technique, followed by drying and calcination, *e.g*., at 850°C. An aqueous solution of platinum ethanolamine subsequently is added by the incipient wetness technique, followed by drying and calcination.

In some embodiments, Pt/ZrO₂ catalysts are prepared by calcining a zirconia support, and then adding Pt by the incipient wetness technique using an aqueous solution of platinum ethanolamine, followed by drying and calcination. In certain embodiments, a zirconia support is ground and sieved first to provide improved platinum dispersion on the zirconia surface. Platinum is added using platinum acetylacetonate, as described above. After calcination, the catalyst may be reduced, such as in a hydrogen atmosphere at 350°C.

In still other embodiments, Pt(NO₃)₃, [Pt(NH₃)₄](NO₃)₂, chloroplatinic acid (CPA), IrCl₃, Ir-acetate, Mo(NO₃)₃, or Co(NO₃)₂ may be used to impregnate M¹/M³Oₓ with a group VIII metal. Catalysts produced with Pt(NO₃)₃, [Pt(NH₃)₄](NO₃)₂ or CPA typically are reduced in flowing hydrogen prior to use. When using platinum in some embodiments, platinum ethanolamine and Pt(NO₃)₃ provided superior results compared to [Pt(NH₃)₄](NO₃)₂ and CPA.

### B. Group VIII Metal/Non-transition Metal on Carbon Support

Carbon-supported catalysts, such as platinum/germanium/carbon and platinum/tin/carbon catalysts, may be prepared via several techniques. Incipient wetness techniques may be used to add metals to a carbon support. Addition of the Group VIII metal and a non-transition metal may be done simultaneously or sequentially. For simultaneous addition, a suitable Group VIII metal precursor (e.g., platinum ethanolamine, chloroplatinic acid, iridium acetate, etc.) and a suitable non-transition metal precursor such as the chloride or oxide form of the metal are mixed with a sufficient concentration of acid *(e.g.,* HCl) to prevent precipitation and produce an impregnation solution. The volume of the impregnation solution is then adjusted with either acid or deionized water such that the volume of the solution will fill pores of the carbon support and the metals remain soluble. The impregnation solution is then added to the carbon support. The catalyst is dried. In some instances, the catalyst is calcined and/or reduced prior to application. For example, if CPA is used as a platinum precursor, the catalyst may be reduced in flowing hydrogen prior to use. In one embodiment, a platinum/carbon catalyst is prepared with CPA and reduced for 3 hours at 500°C.

Alternatively, the Group VIII metal and a non-transition metal may be added sequentially. A suitable Group VIII metal precursor (e.g., platinum ethanolamine, chloroplatinic acid) is first dissolved to make an impregnation solution, and the volume is adjusted to fill the pore volume of the carbon support using deionized water or other appropriate solvent, such as an alcohol (e.g., methanol, ethanol) or a ketone (e.g., acetone, methyl-isobutyl ketone). The dissolved Pt solution is then slowly added such that the incipient wetness point of the support is reached when the solution is consumed. The Pt-impregnated support may then be dried, calcined and/or chemically reduced. Next, a suitable non-transition metal precursor, such as a chloride or oxide precursor, is dissolved in a sufficient concentration of acid or solvent (e.g., ethanol) to prevent precipitation. In certain embodiments, chloride precursors produced less active or inactive catalysts. The solution volume is then adjusted with HCl, deionized water, or additional solvent such that upon addition of the solution to the Pt- supported carbon the incipient wetness point is reached. The catalyst is then dried and can be calcined and/or reduced prior to application.

### C. Catalyst Regeneration

In some embodiments, the disclosed catalysts are regenerated after use for reuse. When deoxygenation is performed as a batch process, catalysts may be regenerated after each batch or may be regenerated after a plurality of batches have been deoxygenated. When deoxygenation is performed as a continuous or substantially continuous process, such as when a feedstock is flowed through a column comprising a packed catalyst bed, regeneration may be performed after a given quantity of feedstock has been deoxygenated, after a given period of time, or after deoxygenation diminishes to a predetermined level.

In some embodiments, inorganic catalysts (*i.e.,* those having a metal oxide or metalloid oxide support) are regenerated by calcining the used catalyst in air at an effective temperature and for an effective period of time. In certain embodiments, the effective temperature is 400-700°C, 450-650°C, 450°C, 550°C, or 650°C. The effective time ranges from 1-5 hours, such as 2-4 hours or 2-3 hours. In some examples, inorganic catalysts were regenerated by calcination in air at 450°C for 2 hours. In certain embodiments, the inorganic catalyst is reduced after calcination. In some examples, the catalyst was reduced in flowing hydrogen at 450°C for 2 hours after calcination. In certain embodiments, it may be advantageous to wash the used inorganic catalyst with a solvent capable of dissolving unreacted fatty acids and/or hydrocarbons. Suitable solvents may be nonpolar or relatively nonpolar. Exemplary solvents may include alkanes (e.g., C6-C12 alkanes such as hexane or dodecane), aromatic solvents (e.g., toluene), or relatively nonpolar halogenated solvents (e.g., chloroform). Washing may be performed before calcination and/or reduction.

In some embodiments, organic catalysts (*i.e.,* those having a carbon support) may be regenerated by washing the used catalyst with a solvent as described above. After washing with solvent, the catalyst is dried. In certain embodiments, the catalyst may further be calcined and/or reduced in flowing hydrogen or a hydrogen/inert gas mixture (e.g., argon).

### IV. Fatty Acid Conversion and Deoxygenation by Decarboxylation and/or Decarbonylation

Naturally occurring fatty acids (*i.e.,* animal fats and plant-based oils/fats) typically are found in triglycerides, where three fatty acids are esterified to a glycerol backbone 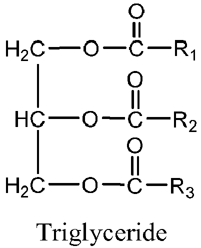 where R₁, R₂, and R₃ are unbranched aliphatic chains. R₁, R₂, and R₃ may be the same or different from one another. For example, R₁, R₂, and R₃ may be different in length from one another. Additionally, R₁, R₂, and R₃ may differ in the number and/or placement of any double and/or triple bonds.

Suitable fatty acid sources comprise plant-based oils, plant-based fats, animal fats, or any combination thereof. The terms "plant-based" oil or "plant-based" fat as used herein encompass oils or fats obtained from any part of a plant, including the leaves, stems, roots, flowers, seeds, fruits, or any other part of the plant. In some embodiments, the fatty acid source comprises a plurality of plant-based oils, plant-based fats, animal fats, or any combination thereof.

In some embodiments, the fatty acids are separated from the glycerol backbone by hydrolyzing the ester bonds to produce glycerol and free fatty acids having the generic formula RCOOH. Hydrolysis can be performed by any suitable method known to one of ordinary skill in the art. The glycerol and free fatty acids are separated, and the free fatty acids are then deoxygenated. The recovered glycerol has significant economic value and can be used in other processes and formulations. Hydrolysis typically separates up to 100% of the fatty acids from the glycerol backbone. For example, hydrolysis may separate at least 10%, at least 50%, at least 80%, or at least 95% of the fatty acids from the glycerol backbone.

In some embodiments, the fatty acids are hydrogenated to form saturated fatty acids prior to deoxygenation. Hydrogenation may be performed before or after removal of the glycerol backbone. For example, soybean oil, which typically includes about 80% unsaturated fatty acids, may be hydrogenated by any suitable method known to one of ordinary skill in the art prior to de-esterification and decarboxylation. Hydrogenation typically saturates at least 10%, at least 50%, at least 80%, at least 95%, or 100% of the double and/or triple bonds in a sample comprising unsaturated fatty acids. In some embodiments, hydrogenation may be used to improve the stability of the fatty acid feed for storage prior to deoxygenation. For example, soybean oil comprises a large amount of linoleic acid, which can react with air, thereby turning the oil rancid. In some embodiments, the fatty acid feed may be pretreated by any suitable method known to those skilled in the art to remove undesirable compounds (*e.g*., phospholipids) before hydrolysis, hydrogenation, and/or deoxygenation.

Contacting embodiments of the disclosed catalysts with fatty acids results in deoxygenation of at least some of the fatty acids via decarboxylation. Decarboxylation of the fatty acids removes CO₂, producing a hydrocarbon. In the case of palmitic acid, a saturated fatty acid having 16 carbons, decarboxylation produces pentadecane: 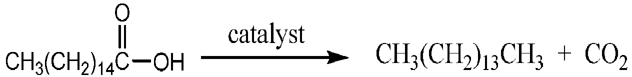 Although triglycerides are usually hydrolyzed prior to deoxygenation so that the glycerol can be recovered, triglycerides may be deoxygenated with embodiments of the disclosed catalysts. However, triglyceride deoxygenation typically decomposes and gasifies a substantial portion of the glycerol backbone, thereby eliminating economic benefits associated with recovery and subsequent use of glycerol. Other esters of fatty acids also may be processed with certain embodiments of the disclosed catalysts to provide hydrocarbon products.

Embodiments of the disclosed catalysts deoxygenate, via decarboxylation, from 10% to 100% of the fatty acids when a composition comprising fatty acids is exposed to the catalysts. The catalyst may provide additional deoxygenation via decarbonylation and dehydration. In some embodiments, the disclosed catalysts are capable of deoxygenating at least 10%, at least 20%, at least 25%, at least 50%, at least 75%, at least 80%, at least 90%, or at least 95% of the fatty acids in a fatty acid composition. For example, the disclosed catalysts may deoxygenate 20-80%, 50-80%, 60-95%, or 80-100% of the fatty acids. The fatty acid composition may consist essentially of fatty acids, or may comprise fatty acids diluted in a suitable solvent *(e.g.,* a liquid hydrocarbon solvent). The fatty acids may be free fatty acids, fatty acid alkyl esters, fatty acid monoglycerides, fatty acid diglycerides, fatty acid triglycerides, or any combination thereof in any ratio. In particular embodiments, up to 100% of the fatty acids are free fatty acids. For example, at least 10%, at least 50%, at least 80%, or at least 95% of the fatty acids are free fatty acids.

Deoxygenation can be performed as a batch process, in which a catalyst and fatty acids are combined (e.g., in a slurry) and allowed to react for a period of time. Typically fatty acids are used without dilution. However, the fatty acids may be diluted with a solvent, particularly if the fatty acids are waxy or in solid form. Suitable solvents include hydrocarbon solvents, particularly liquid hydrocarbon solvents. In certain embodiments, the hydrocarbon solvent is recycled hydrocarbons produced by decarboxylation of fatty acids.

In some embodiments, the catalyst is exposed to substrate at a ratio ranging from 1:2 to 1:8 by weight. For example, the catalyst:substrate ratio may be 1:2, 1:3, 1:4, 1:5, 1:6, 1:7, or 1:8.

In some examples, the reaction time is 2-6 hours. In some embodiments, the reaction time is 3 hours or 4 hours. The reaction mixture may be heated to a temperature of 200-500°C, such as 250-350°C. In some embodiments, the temperature is 300°C. Optionally, the slurry is mixed continuously or periodically throughout the reaction time by suitable means such as mechanical stirring or shaking.

In other embodiments, deoxygenation is a continuous or substantially continuous process in which a fatty acid feed contacts the catalyst by flowing across and/or through a catalyst bed. For example, a column containing a packed catalyst bed is prepared, and a fatty acid feed is flowed through the column. The fatty acids may be free fatty acids, or they may be in the form of monoglycerides, diglycerides, triglycerides, fatty acid alkyl esters, or mixtures thereof. Typically the fatty acids are used without dilution. However, in some instances (e.g., if the fatty acids are a wax or solid) the fatty acids may be diluted with a hydrocarbon solvent, particularly a hydrocarbon solvent that is a liquid at ambient temperature. In certain embodiments, the hydrocarbon solvent is recycled hydrocarbons produced by deoxygenating fatty acids with an embodiment of the disclosed catalysts.

In some embodiments, deoxygenation is performed in mixtures comprising a plurality of catalyst particles having a first composition selected from a) M¹/M²/M³O₂ where M¹ is a transition metal, a transition metal oxide, or a combination thereof, wherein the transition metal is Fe, Mn, Mo, V, W, or a combination thereof, M² is a Group VIII metal, a Group VIII metal oxide, or a combination thereof, wherein the Group VIII metal is Co, Ir, Mn, or Pt, and M³ is Nb, Ti, or Zr, b) Pt, Ge and C, c) Pt, Sn, and C, or d) any combination thereof, with a second composition comprising fatty acids, wherein the second composition is put into fluid contact with the first composition.

The second composition may comprise triglycerides (*e.g*., in the form of plant-based oils/fats or animal fats) or free fatty acids. In some embodiments, free fatty acids are obtained by hydrolyzing triglycerides to produce free fatty acids and glycerol. In certain embodiments, the free fatty acids and glycerol are at least partially separated, and at least a portion of the glycerol is removed prior to putting the second composition into contact with the first composition.

In some embodiments, the mixture further comprises hydrocarbons. In one embodiment, the hydrocarbons are formed when the second composition is put into contact with the first composition. In another embodiment, the second composition comprises a mixture of fatty acids and a hydrocarbon solvent. In one embodiment, the hydrocarbon solvent is obtained by recycling hydrocarbons formed by deoxygenating fatty acids with an embodiment of the disclosed catalysts.

In some embodiments, deoxygenation is performed using a column, such as an up-flow column. With an up-flow column, the fatty acid feed flows into the bottom of the column, and the decarboxylated hydrocarbons and CO₂ flow out the top of the column. Typically the column is heated to a temperature of 200-500°C, such as 250-350°C, 275-325°C, or 300°C. In some embodiments, the fatty acid feed also is preheated before flowing into the column. For example, if the fatty acid feed is a wax or solid at ambient temperature, it may be heated to form a liquid. The fatty acids may be preheated to at least 50°C, at least 100°C, 70-350°C, 100-350°C, or to the operating temperature of the column, *e.g*., 200-500°C, 250-350°C, or 275-325°C. In other embodiments, the fatty acid feed is not preheated and is introduced into the column at ambient temperature. Unsaturated fatty acids inherently are more reactive than saturated fatty acids, and may undergo at least some dimerization and/or oligomerization if preheated before exposure to the catalyst. As the temperature increases, more cracking occurs, producing more light hydrocarbons *(e.g.,* C1-C4 hydrocarbons) and increasing product heterogeneity.

A person of ordinary skill in the art will appreciate that fatty acid flow rates through the column are determined based upon a number of variables including, but not limited to, catalyst composition, column dimensions, temperature, fatty acid feed composition, and combinations thereof. In some examples, the flow rate has a weight hourly space velocity (WHSV) of 0.1-2.0 hr⁻¹ or 0.3-1.0 hr⁻¹. In some embodiments, flow rates near the lower end of the WHSV range increase fatty acid conversion, catalyst lifetime, and/or product distribution or heterogeneity. For example, increasing the catalyst contact time *(e.g.,* by decreasing WHSV) may increase the amount of cracking, rearrangement, and/or cyclization of the product hydrocarbons. The broader product distribution can lower the cloud point and/or freezing point of the product, and may make the product more suitable for aviation use. In particular embodiments, the WHSV is 0.3-0.4 hr⁻¹.

In some embodiments, the column is purged with an inert gas, *e.g.,* N₂, before starting the fatty acid feed. In other embodiments, the column may be purged with air or a gas including some oxygen. Oxygen acts as a hydrogen scavenger and can remove hydrogen associated with the catalyst surface, thereby increasing the catalyst activity for reactions involving dehydrogenation. In some embodiments, the catalyst is purged with oxygen at a lower temperature (*e.g*., 50-150°C) before or while being contacted with the fatty acids to promote dehydrogenation; the fatty acids are later contacted with the same or another catalyst at typical operating temperatures of 200-500°C. Purging with an inert gas also can remove at least some hydrogen associated with the catalyst surface via diffusion.

The disclosed catalysts demonstrate deoxygenation (typically decarboxylation) activity in the absence of added hydrogen and/or high pressure. For example, the disclosed catalysts can be used at any desired operating temperature at pressures ranging from ambient pressure to less than 250 psi. In some embodiments, the catalysts are used at pressures less than 100 psi. In certain systems, the columns are operated at pressure of 80 psi to facilitate mechanical operation such as maintaining pump operation and sealed valves. In contrast, current commercially available decarboxylation catalysts typically require hydrogen to maintain catalytic activity and are used in a 3-phase system: solid catalyst, liquid fatty acid feed, and gaseous hydrogen. Because the catalyst is coated with the liquid fatty acid feed, hydrogen must be solubilized in the liquid to reach the catalyst surface. Solubilization is attained by operating the system under high pressure, *e.g*., 2,000 psi. The disclosed catalysts' ability to perform deoxygenation via decarboxylation without added hydrogen enables deoxygenation plants to be located near a fatty acid source without also being located near a hydrogen source. Furthermore, operating at lower pressures enables less expensive process equipment such as lower pressure pumps, lower pressure valves and piping, and lower pressure-rated catalyst columns to be used, thereby reducing the cost of building the deoxygenation system and providing economic viability for a commercial scale operation.

Additionally, certain embodiments of the disclosed catalysts are well suited for use in continuous, liquid-flow systems and remain capable of deoxygenating at least 10% of the fatty acids in a fatty acid feed for at least 200 minutes at temperatures of 200-500°C and WHSV of 0.1-2.0 hr⁻¹. Under such conditions, certain embodiments of the disclosed catalysts decarboxylate at least 80% of the fatty acids in a fatty acid feed for at least 400 minutes or at least 700 minutes. Some embodiments of the disclosed catalysts demonstrate deoxygenation activity for more than 350 hours. In certain embodiments, deoxygenation activity remains for at least 300 minutes, at least 500 minutes, at least 800 minutes, at least 1,000 minutes, or at least 20,000 minutes. In one example, the percent deoxygenation after 22,000 minutes (367 hours) was substantially the same as the initial percent deoxygenation.

Certain embodiments of the disclosed catalysts produce at least some isomerization during deoxygenation, resulting in methyl-branched hydrocarbons. For example, deoxygenation of palmitic acid may also produce 2-, 3-, 4-, or 5-methyltetradecane along with pentadecane. The methyl group may be located at any position along the carbon chain. The presence of methyl-branched hydrocarbons in renewable diesel can be advantageous by lowering the cloud point and pour point of the fuel. The methyl group reduces the ability of the fuel to solidify and/or become waxy by disrupting the "stacking" of adjacent saturated hydrocarbons. 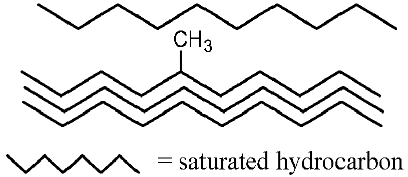 Although a single methyl group is beneficial, additional branching reduces the cetane value of the fuel. Catalyst compositions including WO₃/Pt/ZrO₂ were unexpectedly found to provide surprisingly superior results with respect to producing mono-methyl-branched hydrocarbons. Little-to-no methyl branching was seen with catalyst embodiments comprising Pt/Ge or Pt/Sn on carbon.

Catalyst compositions comprising W/Pt/ZrO₂, Fe/Pt/ZrO₂, Mn/Pt/ZrO₂, Mo/Pt/ZrO₂ (wherein at least a portion of the transition metal may be oxidized) produced unexpectedly superior results when exposed to saturated fatty acids. While WO₃/Pt/ZrO₂ was surprisingly found to provide excellent results as a catalyst for deoxygenating saturated fatty acids, it was found to alkylate unsaturated fatty acids, making it less suitable as a catalyst for feeds including a substantial percentage of unsaturated fatty acids. For example, alkylation occurred when oleic acid was exposed to WO₃/Pt/ZrO₂ catalysts. In one embodiment, up to 60-70% of the products were alkylated, forming heavy, non-distillable products. Such alkylated compounds are too heavy to be useful as renewable diesel, making alkylation an undesirable reaction when preparing renewable diesel. Thus, M¹/Pt/ZrO₂ and M¹/Pt/TiO₂ (M¹ = W, Fe, Mn, Mo, or their respective oxides, or a combination thereof) catalysts are suitable catalysts for fatty acid feeds including less than 50 wt% unsaturated fatty acids. For example, M¹/Pt/ZrO₂ or M¹/Pt/TiO₂ catalysts are selected when the fatty acid feed contains at least 50 wt%, at least 75 wt%, or at least 95 wt% saturated fatty acids. Alternatively, a fatty acid feed including a substantial amount (e.g., greater than 50 wt%) of unsaturated acids can be hydrogenated and subsequently deoxygenated with a M¹/Pt/ZrO₂ catalyst.

Embodiments of the disclosed carbon-based catalysts, such as Pt/Ge or Pt/Sn on carbon, provide unexpectedly superior results for deoxygenation of fatty acid feeds including a substantial amount of unsaturated fatty acids. These carbon supports are non-acidic and do not promote extensive alkylation and/or oligomerization reactions. Thus, they can be utilized to deoxygenate unsaturated fatty acids such as oleic acid and linoleic acid. Pt/Ge and/or Pt/Sn on carbon catalysts are suitable catalysts for fatty acid feeds including at least 1 wt%, at least 50 wt%, at least 80 wt%, or at least 99 wt% unsaturated fatty acids.

Surprisingly, hydrogen-reduced 9.5 wt% W/0.7 wt% Pt/ZrO₂ catalysts also exhibited relatively high deoxygenation activity with unsaturated feedstocks. Without being bound by any particular theory, it is believed that these catalysts exhibit transfer hydrogenation activity and decarboxylate unsaturated fatty acids via a saturated fatty acid intermediate. For example, oleic acid may undergo deoxygenation to C₁₇ hydrocarbons via a stearic acid intermediate.

In some embodiments, the disclosed catalysts partially dehydrogenate free fatty acids in a sample, resulting in subsequent branching, cyclization and/or aromatization. Cyclization and/or aromatization can enhance the products' suitability for use in fuels by lowering the cloud point and pour point of the fuel. Concomitantly, the released hydrogen may react with other unsaturated fatty acids in the mixture, producing saturated hydrocarbons. Additionally, rearrangements may occur in which the double bond is moved to a different position along the carbon chain. For example, the double bond in oleic acid may be moved from the omega-9 position (*i.e.,* ninth bond from the end of the carbon chain) to the alpha, or first, position or any other position along the hydrocarbon chain. Branching, cyclization and/or aromatization can result in products suitable for aviation fuels. The aviation fuel JP-8, for example, typically contains 29% isoparaffins (*i.e.,* branched-chain hydrocarbons), 20% cycloparaffins and 20% aromatics.

Dehydrogenation and cyclization/aromatization reactions can occur with embodiments of the disclosed catalysts. For instance, certain embodiments of the disclosed catalysts dehydrogenate and aromatize a portion of the molecules in a fatty acid feed, producing aromatic compounds such as alkylated benzenes. These compounds may have high value, *e.g.,* as surfactants. Although these reactions occur with both types of catalysts and all feeds, they are more prevalent with embodiments of the disclosed carbon-based catalysts, *i.e.,* Pt/Ge/C or Pt/Sn/C and feed containing unsaturated fatty acids. While aromatic compounds (e.g., alkylated benzenes) are the predominant cyclic product, non-aromatic rings of other sizes also may be formed, particularly when M¹/Pt/ZrO₂ catalysts are used. Without being bound by any particular theory, it is believed that a first dehydrogenation event may cyclize a fatty acid chain and produce, *e.g.,* a 6-membered ring with release of a hydrogen molecule. With an unsaturated fatty acid, an internal alkylation can occur producing a ring compound. The 6-membered ring can further dehydrogenate to form an aromatic ring with release of an additional three H₂ molecules. The released hydrogen is transferred to and reacts with unsaturated fatty acid molecules in the feed (*i.e.,* transfer hydrogenation), forming saturated fatty acids, which deoxygenate to hydrocarbons. Transfer hydrogenation reduces the incidence of alkylation and/or oligomerization reactions between adjacent unsaturated fatty acid molecules. Additionally, the released hydrogen maintains the catalyst in a reduced state. Thus, certain embodiments of the disclosed catalysts result in both deoxygenation and transfer hydrogenation of fatty acid molecules, producing deoxygenated hydrocarbons, a portion of which are cyclic and/or aromatic, while minimizing undesirable dimerization and/or oligomerization reactions.

Catalysts exhibited transfer hydrogenation in particular embodiments, including, *e.g.,* 5 wt% Pt/0.5 wt% Ge/C, 5 wt% Pt/0.5 wt% Sn/C, and hydrogen-reduced 9.5 wt% W/0.7 wt% Pt/ZrO₂. These catalysts can be used to hydrogenate unsaturated fatty acids to produce saturated fatty acids for subsequent deoxygenation. Particular embodiments, *e.g.,* 5 wt% Pt/0.5 wt% Ge/C and 5 wt% Pt/0.5 wt% Sn/C exhibit both transfer hydrogenation and decarboxylation activity with unsaturated fatty acids. Surprisingly, hydrogen-reduced 9.5 wt% W/0.7 wt% Pt/ZrO₂ also exhibits both transfer hydrogenation and high decarboxylation activity with unsaturated feedstocks. In one embodiment, when the fatty acid feed was oleic acid, more than 90% of the resulting hydrocarbons were saturated, with heptadecane being the major product.

Dehydrogenation can be increased by maintaining a hydrogen-starved system. Operating in a hydrogen-starved atmosphere is advantageous when production of unsaturated hydrocarbons is desirable. In addition to having utility as a fuel, the unsaturated hydrocarbons may be useful as starting reactants for further conversions and chemical syntheses. Thus, in certain embodiments, deoxygenation is performed in a hydrogen-free, or hydrogen-deficient, atmosphere. A hydrogen-deficient atmosphere can be facilitated by flowing an inert, non-hydrogen gas *(e.g.,* N₂, Ar) through the column with the fatty acid feed. The gas facilitates removal of hydrogen via diffusion as some hydrogen diffuses from the catalyst surface to the gas. Alternatively, a hydrogen scavenger can be used to increase the yield of alkyl-branched aromatics. When the fatty acid feed includes a substantial percentage of unsaturated fatty acids, the feed itself acts as a hydrogen scavenger. In some embodiments, hydrogen produced by dehydrogenating one fatty acid molecule is transferred to a nearby unsaturated fatty acid molecule, *i.e*., transfer hydrogenation. Transfer hydrogenation reduces concomitant dimerization and/or oligomerization of the fatty acids, which can occur in the absence of transfer hydrogenation. Oxygen can also be used as a hydrogen scavenger. Flowing air or a gas including oxygen *(e.g.,* 1% to 100%) through the column will facilitate maintaining a hydrogen-deficient atmosphere.

In some embodiments, a fatty acid feed is heated in the presence of catalyst at a temperature of at least 50°C to facilitate dehydrogenation and subsequent deoxygenating is performed at a temperature of at least 250°C. These processes can be performed using a single catalyst bed or column having different temperature zones, *e.g.,* a first temperature zone of at least 50°C and a second temperature zone of at least 250°C. In one embodiment, dehydrogenation is performed in a first catalyst bed at a temperature of at least 50°C and deoxygenation is performed in a second catalyst bed at a temperature of at least 250°C. Catalyst in the first and second catalyst beds may have substantially the same chemical composition, *e.g*., 12 wt% WO₃/0.7 wt% Pt/ZrO₂. Alternatively, the two catalyst beds may contain catalysts with different compositions, *i.e.,* different ratios of components or different chemical compositions. For example, the first catalyst bed may have a Pt/Ge/C catalyst, and the second catalyst bed may have a M¹/Pt/ZrO₂ catalyst. In one embodiment, the first and second catalyst beds are in separate columns, which may be operated under the same or different conditions (e.g., temperature, WHSV, purge gas, etc.). In another embodiment, the two catalyst beds are within a single column such that, for example, a first zone within the column contains the first catalyst bed and a second zone within the column contains the second catalyst bed. The zones may be at the same or different temperatures.

In one embodiment, exposing a fatty acid feed to a platinum/non-transition metal carbon-supported catalyst (e.g., Pt/Ge/C or Pt/Sn/C) dehydrogenates at least 10% of the fatty acids to produce branched, cyclic, and/or aromatic compounds. In another embodiment, the platinum/non-transition metal catalyst also deoxygenates at least 10% of the fatty acids.

In some embodiments, the hydrocarbons produced by exposure to the catalyst are subjected to one or more additional processes to stabilize the fuel and/or improve the yield of a specific, desired fuel fraction. For example, in certain embodiments, at least a portion of the hydrocarbons produced by exposure to the catalyst are unsaturated hydrocarbons, and the unsaturated hydrocarbons are further hydrogenated to produce saturated hydrocarbons. Increased saturation may improve fuel stability for storage; at least some unsaturated hydrocarbons can react with air, thereby degrading the fuel quality.

Following deoxygenation, a preliminary product can be recovered. In some embodiments, the preliminary product is further processed. For example, the preliminary product may be fractionated, such as by fractional distillation or other suitable means, to produce one or more hydrocarbon fractions. The hydrocarbon fractions are free of trace metals.

In some embodiments, the preliminary product is a mixture comprising hydrocarbons in a liquid state and trace amounts of Pt, one or more transition metals *(e.g.,* W, Fe, Mn, Mo, and/or V), and/or Zr. In one embodiment, the mixture comprises a) hydrocarbons in a liquid state and b) at least one part per million (ppm) Pt, at least 1 ppm W, Fe, Mn, Mo, V, or a combination thereof, and/or at least 1 ppm Zr. In another embodiment, the mixture comprises a) hydrocarbons in a liquid state and b) at least 1 ppm Pt, at least 10 ppm W, Fe, Mn, Mo, V, or a combination thereof, and/or at least 10 ppm Zr. In another embodiment, the mixture comprises a) hydrocarbons in a liquid state and b) at least 1 ppm Pt, at least 10 ppm W, Fe, Mn, Mo, V, or a combination thereof, and/or at least 50 ppm Zr.

In other embodiments, the preliminary product is a mixture comprising hydrocarbons in a liquid state and Pt, Ge, and/or Sn. In one embodiment, the mixtures comprise a) hydrocarbons in a liquid state and b) at least 1 ppm Pt and/or at least 0.5 ppm Ge and/or at least 0.5 ppm Sn. For example, a mixture may include a) liquid hydrocarbons, b) at least 1 ppm Pt, and c) at least 1 ppm Ge or at least 1 ppm Sn or at least 1 ppm of a combination of Ge and Sn. In another embodiment, the mixtures comprise a) hydrocarbons in a liquid state and b) at least 5 ppm Pt and/or at least 0.5 ppm Ge and/or at least 0.5 ppm Sn.

Embodiments of the disclosed catalysts and methods for using the catalysts produce compositions and mixtures suitable for use as a renewable diesel fuel. The compositions and mixtures are primarily comprised of hydrocarbons produced by fatty acid deoxygenation, primarily via decarboxylation. In some embodiments, the mixtures comprise greater than 70%, greater than 80%, or greater than 90% C15-C17 hydrocarbons.

### V. Examples

### Example 1

### Higlh-Throughput Catalyst Screening

**Catalyst Preparation:** Most of the catalysts tested in the high throughput screening were commercially available or prepared as described below. All extrudate or engineered-form catalysts were ground to a 30-100 mesh size before screening. Powder catalysts were used as obtained.

A few catalysts were prepared using high-throughput robotics for screening purposes. These catalysts were WO₃/Pt on ZrO₂ supports, and were prepared by incipient wetness impregnation. The ZrO₂ supports were calcined at 450°C for 6 hours and sized to 30-80 mesh. The supports were added to quartz vials and placed on a vertical shaker on a liquid handling robot. The vertical shaker allowed the supports to be agitated during impregnation. Metal impregnation of the supports was a two step process. Bulk aqueous solutions of ammonium metatungstate hydrate and platinum ethanolamine (Pt-A) were prepared and placed on a liquid handling robot. Two sets of metal solution were then robotically prepared from these bulk solutions. The first set was a range of tungsten solutions, the second a range of platinum solutions. The tungsten solutions were added first to the supports, drop-wise, while agitating the solids. Once the supports were dried, agitation was stopped. The supports were transferred to a furnace and calcined at 850°C for 2 hours in air. The second impregnation was done with the platinum solutions. Once dried, the supports were calcined at 450°C for 2 h in air. The finished catalysts were tested as described in the general high throughput screening procedure.

**Catalyst Screening:** High throughput catalyst screening for the decarboxylation of free fatty acids was conducted using a high-temperature batch 24-well reactor made by Symyx. The 24 vials were loaded with catalyst and free fatty acid feedstock, in a 2 to 1 weight ratio. The vials were sealed under a nitrogen atmosphere with a Kapton^{®}-backed graphite sheet. Once loaded into the high temperature reactor and sealed, the reactor headspace was pressurized with 40 psig nitrogen to discourage leaking of the individual vials. The reactor was placed into a stationary furnace and heated to 300°C for 4 hours. After completion the reactor was removed from the furnace and allowed to cool to room temperature.

Analytical work-up of each sample involved BSTFA/pyridine derivatization, which was carried out as follows. The sample was diluted with chloroform containing 1 mg/mL heptadecanoic acid as an internal standard, mixed well, and centrifuged. A 500 µL aliquot was removed and added to a 2 mL vial. To this second vial was added 500 µL ofN,O-bis[trimethylsilyl]trifluoroacetamide (BSTFA) and 500 µL of pyridine. The vial was mixed well, capped, and heated to 70°C for 1 hour. GC-FID and GC-MS were utilized for quantification and identification of the product mixture. Analysis was performed using a DB5-HT column (15 m x 250 µm x 0.10 µm nominal film thickness). The injector was held at 340°C with a 150:1 split. With a flow rate of 2 mL/min H₂, the column was heated from 80°C to 350°C at 25°C/min and then held at 350°C for 9.2 min.

**Effect of Metals on Palmitic Acid Decarboxylation:** The catalysts shown in Table 1 were screened to determine the effect of various metals on palmitic acid deoxygenation via decarboxylation. Some of the catalyst compositions yielded more symmetrical ketone dimers, CH₃-(CH₂)₁₄-C=O-(CH₂)₁₄-CH₃, via deoxygenation than hydrocarbon product. In general the catalysts giving symmetrical ketone dimers were of a basic metal oxide nature such as manganese dioxide. The ketone would require additional deoxygenation/cracking to provide hydrocarbon product.

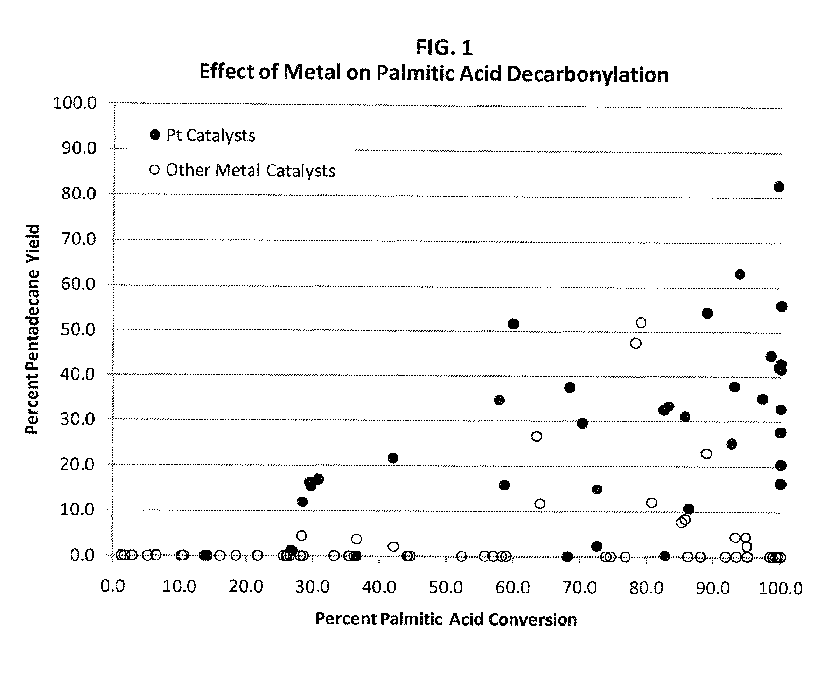

Due to the screening nature of these tests and use of high throughput technology, mass recovery data are provided as an indication of the potential integrity of the sample during testing. A low mass recovery is indicative of an individual vial leak, and data may not be of equal quality to data with high mass recovery since the more volatile components, generally the hydrocarbon product, would be more prone to vaporization and leaking from the individual vial. The results are depicted graphically in FIG. 1. In general, superior results were obtained when catalysts contained platinum metal.

Included in the testing of more than 100 catalyst samples were some WO₃/Pt/ZrO₂ catalysts. These catalysts were initially thought to likely be unsuitable for decarboxylation because they are acid catalysts, and acid catalysts have been reported to build up coke deposits during hydrocarbon processing and lose activity. Nonetheless, WO₃/Pt/ZrO₂ catalysts were included in the high-throughput screening simply because they were available. Surprisingly, the WO₃/Pt/ZrO₂ catalysts showed an unexpectedly high conversion percentage compared to either Pt/ZrO₂, or WO₃/ZrO₂ catalysts. As shown in Table 1, Pt/ZrO₂ catalysts produced conversions of 28-60%. A WO₃/ZrO₂ catalyst produced only 44% conversion. However, the WO₃/Pt/ZrO₂ catalysts produced 68-100% conversion. It is believed that the presence of Pt may make the catalyst "self-cleaning," which aids in maintaining activity.

**Table 1**

| | **Catalyst** | **Composition Details** | **Mass Recovery** | **Conversion** | **Pentadecane Yield** | **Ketone Yield** | **Others Yield** |
|---|---|---|---|---|---|---|---|
| 1 | Pt/Ge/C | 5% Pt/Ge on carbon powder | 61.0 | 100.0 | 107.5 | 0.0 | 3.4 |
| 2 | Pt/C | * | 48.9 | 83.2 | 33.4 | 0.0 | 9.4 |
| 3 | Pt/Sn/C | 1.5% Pt/ 0.15% Sn on carbon powder | 57.7 | 85.7 | 31.1 | 0.3 | 6.9 |
| 4 | Pt/C | 5% Pt on Norit^{®} ROX acid-washed carbon | 46.3 | 100.0 | 16.3 | 0.0 | 3.1 |
| 5 | Pt/Ru/C | 1.5%Pt / 0.15%Ru on carbon powder | 83.8 | 58.6 | 15.8 | 0.2 | 10.6 |
| 6 | Pt(S)/C | 3% Pt (sulphited) on carbon powder | 76.5 | 26.8 | 1.1 | 0.0 | 8.4 |
| 7 | Pt/Al2O3 | 2% Pt on Al2O3 | 80.4 | 70.2 | 29.5 | 3.7 | 7.8 |
| 8 | Pt/ZrO2 | 5% Pt on ZrO2 | 93.4 | 59.8 | 51.8 | 0.3 | 0.5 |
| 9 | Pt/TiO2 | 5% Pt on TiO2 | 78.9 | 99.5 | 82.7 | 0.0 | 16.3 |
| 10 | Pt/Al2O3 | 5% Pt on Al2O3 | 90.6 | 93.8 | 63.1 | 0.4 | 4.3 |
| 11 | WO3/Pt/ ZrO2 | 12% WO3 / 0.7% Pt on ZrO2 | 90.0 | 88.8 | 54.4 | 0.9 | 27.9 |
| 12 | WO3/Pt/ ZrO2 | 12% WO3 / 0.7% Pt on ZrO2 | 64.6 | 97.2 | 35.1 | 0.2 | 17.6 |
| 13 | Pt/ZrO2 | 0.7% Pt on ZrO2 | 93.5 | 30.6 | 16.9 | 0.2 | 7.1 |
| 14 | Pt/ZrO2 | 0.7% Pt on ZrO2 | 92.8 | 29.7 | 15.5 | 0.4 | 11.5 |
| 15 | Pt/ZrO2 | 0.7% Pt on ZrO2 | 92.5 | 29.4 | 16.3 | 0.4 | 7.5 |
| 16 | Pt/ZrO2 | 0.7% Pt on ZrO2 | 93.3 | 28.4 | 12.0 | 1.1 | 12.8 |
| 17 | MoO3/Pt/ ZrO2 | 7.8% MoO3 / 0.7% Pt on ZrO2 | 88.7 | 57.8 | 34.6 | 0.5 | 10.6 |
| 18 | MoO3/Pt/ ZrO2 | 7.8% MoO3 / 0.7% Pt on ZrO2 | 92.4 | 42.0 | 21.7 | 1.6 | 4.3 |
| 19 | WO3/Pt/ ZrO2 | 12% WO3 / 0.7% Pt on ZrO2 | 70.7 | 99.6 | 42.1 | 0.2 | 10.8 |
| 20 | WO3/Pt/ ZrO2 | 12% WO3 / 0.7% Pt on ZrO2 | 82.0 | 93.0 | 37.8 | 0.5 | 11.4 |
| 21 | Pt/ZrO2 | 0.7% Pt on ZrO2 | 81.8 | 36.4 | 0.0 | 0.3 | 7.9 |
| 22 | WO3/Pt/ ZrO2 | 12% WO3 / 0.7% Pt on ZrO2 | 64.0 | 100.0 | 27.8 | 0.0 | 8.4 |
| 23 | WO3/Pt/ ZrO2 | 12% WO3 / 0.7% Pt on ZrO2 | 78.4 | 100.0 | 41.7 | 0.0 | 13.5 |
| 24 | WO3/Pt/ ZrO2 | 12% WO3 / 0.7% Pt on ZrO2 | 70.6 | 92.6 | 25.1 | 0.0 | 8.9 |
| 25 | WO3/Pt/ ZrO2 | 12% WO3 / 0.7% Pt on ZrO2by MVD | 82.6 | 82.5 | 32.6 | 0.0 | 13.0 |
| 26 | Pt/TiO2 | 0.7% Pt on TiO2 (900C calcine) | 93.1 | 13.7 | 0.0 | 0.0 | 0.2 |
| 27 | Pt/TiO2 | 0.7% Pt on TiO2 (450C calcine) | 72.1 | 68.1 | 0.0 | 7.7 | 8.0 |
| 28 | Pt/TiO2 | 0.7% Pt on TiO2 (uncalcined) | 79.8 | 72.5 | 15.0 | 0.0 | 13.5 |
| 29 | WO3/Pt/ ZrO2 | 12% WO3 / 0.7% Pt on ZrO2 | 75.3 | 100.0 | 56.0 | 0.2 | 28.8 |
| 30 | WO3/Pt/ ZrO2 | 12% WO3 / 0.7% Pt on ZrO2 | 81.8 | 98.4 | 44.7 | 0.3 | 31.7 |
| 31 | WO3/Pt/ ZrO2 | 12% WO3 / 0.7% Pt on ZrO2 | 78.6 | 100.0 | 43.0 | | |
| 32 | WO3/Pt/ ZrO2 | 12% WO3 / 0.7% Pt on ZrO2 | 78.0 | 68.3 | 37.5 | 0.2 | 21.7 |
| 33 | WO3/Pt/ ZrO2 | 12% WO3 / 0.7% Pt on ZrO2 | 65.6 | 100.0 | 32.8 | 0.0 | 10.8 |
| 34 | WO3/Pt/ ZrO2 | 12% WO3 / 0.7% Pt on ZrO2 | 62.5 | 100.0 | 20.4 | | |
| 35 | Pt/Al2O3 | 3% Pt on Al2O3 | 81.9 | 72.4 | 2.3 | 4.4 | 5.0 |
| 36 | Pt/Al2O3 | 3% Pt on Al2O3 | 83.0 | 82.6 | 0.3 | 2.2 | 2.7 |
| 37 | Pt/Al2O3 | 2% Pt on Al2O3 | 56.9 | 86.3 | 10.6 | 1.8 | 4.3 |
| 38 | Re/X5327 C | Re on Engelhard X5327 C | 88.2 | 78.9 | 52.3 | 3.7 | 11.9 |
| 39 | Escat 140 | 5.0% Pd on carbon | 69.7 | 78.2 | 47.6 | 0.0 | 6.8 |
| 40 | Re/C | 5% Re on Engelhard X5327 | 84.8 | 63.4 | 26.7 | 5.2 | 8.4 |
| 41 | Ru/Ni | | 78.6 | 88.9 | 23.1 | 3.3 | 8.4 |
| 42 | G-69B | 50% Ni on SiO2 | 77.0 | 80.7 | 12.0 | 1.5 | 10.6 |
| 43 | Ni/Al2O3 | | 91.0 | 63.9 | 11.8 | 1.3 | 7.4 |
| 44 | Ni/Al2O3 | 46% Ni on Al2O3 | 85.3 | 85.8 | 8.4 | 2.7 | 6.1 |
| 45 | Cu/Ni | 1 % Cu on BASF G1-80 Ni | 86.2 | 85.2 | 7.7 | 2.2 | 10.4 |
| 46 | Pd/Al2O3 | | 97.2 | 28.2 | 4.4 | 3.3 | 2.9 |
| 47 | Ru/Ni | 1 % Ru on BASF G1-80 Ni | 81.7 | 94.8 | 4.4 | 1.1 | 4.5 |
| 48 | Ni/SiO2 | 55% Ni on SiO2 | 70.0 | 93.3 | 4.3 | 0.7 | 6.7 |
| 49 | Ru/TiO2 | | 94.6 | 36.5 | 3.8 | 6.5 | 4.8 |
| 50 | Co-1079 | Co on SiO2 | 90.9 | 95.0 | 2.4 | 6.7 | 7.7 |
| 51 | Ni/C | 5% Ni on Norit^{®} ROX | 87.3 | 42.0 | 2.1 | 0.0 | 7.5 |
| 52 | Pd/C | 0.5% Pd on carbon (Englehard) | 93.4 | 26.6 | 1.4 | 0.0 | 3.2 |
| 53 | MnO2 10200-133-3 | | 86.2 | 100.0 | 0.0 | 6.9 | 3.5 |
| 54 | CaO | | 99.2 | 100.0 | 0.0 | 0.0 | 0.0 |
| 55 | Co-0127 | 33% Co on Keiselguhr | 90.1 | 100.0 | 0.0 | 8.3 | 2.9 |
| 56 | Co-0138 | | 93.8 | 100.0 | 0.0 | 1.0 | 0.5 |
| 57 | G-9 | Cu/Mn | 89.6 | 100.0 | 0.0 | 5.8 | 0.8 |
| 58 | C61-1 | CuO/ZnO | 94.1 | 100.0 | 0.0 | 0.0 | 0.5 |
| 59 | Ag2O/MnO2 | | 91.1 | 99.6 | 0.0 | 16.8 | 4.6 |
| 60 | Co-0138 | | 96.1 | 99.3 | 0.0 | 7.3 | 1.7 |
| 61 | MnO2-activated | | 83.8 | 98.8 | 0.0 | 38.4 | 6.5 |
| 62 | γ-MnO2 | | 88.6 | 98.4 | 0.0 | 44.5 | 6.5 |
| 63 | Co-Re/Al2O3 | Co/Re on Al2O3 | 85.6 | 95.0 | 0.0 | 5.2 | 17.9 |
| 64 | Co-Re/Al2O3 | | 96.0 | 93.4 | 0.0 | 3.4 | 1.4 |
| 65 | Pentasil | Sud-Chemie zeolite | 66.3 | 91.8 | 0.0 | 0.2 | 5.1 |
| 66 | G-62 | 33-45% CoO/SiO2 | 89.6 | 88.0 | 0.0 | 4.1 | 10.4 |
| 67 | Proc. Montmorillonite | | 79.4 | 88.0 | 0.0 | 1.0 | 0.9 |
| 68 | 1%Cu/Ni | | 93.3 | 86.1 | 0.0 | 4.0 | 3.2 |
| 69 | FeO(OH) | | 94.9 | 76.8 | 0.0 | 14.6 | 1.5 |
| 70 | Grade F-100 | | 89.8 | 74.5 | 0.0 | 0.0 | 38.3 |
| 71 | Grade F-1 | | 86.8 | 73.8 | 0.0 | 0.1 | 2.5 |
| 72 | Davicat ZL 5151 | WR Grace synthetic zeolite | 85.3 | 58.8 | 0.0 | 0.4 | 6.4 |
| 73 | Co/Al2O3 | 8% Co on Al2O3 | 95.2 | 58.2 | 0.0 | 5.4 | 1.5 |
| 74 | Grade F-4 | | 86.8 | 57.0 | 0.0 | 0.0 | 20.8 |
| 75 | CoS/MoS | | 96.2 | 55.8 | 0.0 | 5.8 | 0.0 |
| 76 | Ru/TiO2 | 5% Ru on TiO2 | 79.7 | 52.2 | 0.0 | 5.2 | 13.2 |
| 77 | WO3/ZrO2 | | 99.7 | 44.5 | 0.0 | 0.4 | 0.4 |
| 78 | Co/Al2O3 | | 88.1 | 44.2 | 0.0 | 5.6 | 5.9 |
| 79 | CBV 720 | Zeolyst International zeolite | 94.3 | 44.0 | 0.0 | 0.2 | 3.8 |
| 80 | Pd/Al2O3 | 0.5% Pd on Al2O3 | 89.9 | 36.2 | 0.0 | 7.0 | 6.6 |
| 81 | Pd/C | 0.5% Pd on carbon (Degussa) | 89.9 | 35.5 | 0.0 | 0.0 | 1.5 |
| 82 | Rh/C | 5% Rh on carbon powder (Johnson-Matthey) | 68.1 | 35.3 | 0.0 | 0.0 | 1.1 |
| 83 | Rh/Al2O3 | 0.5% Rh on Al2O3 | 95.6 | 33.1 | 0.0 | 2.5 | 1.2 |
| 84 | Rh/Al2O3 | | 97.4 | 28.5 | 0.0 | 3.3 | 0.4 |
| 85 | 6757-49-1 | | 83.7 | 28.1 | 0.0 | 5.2 | 2.1 |
| 86 | ALZ5C-4D | | 95.7 | 28.0 | 0.0 | 0.1 | 13.3 |
| 87 | Nb2O5/ Al2O3 | | 98.6 | 26.5 | 0.0 | 4.0 | 62.4 |
| 88 | Ru/C | 0.7% Ru on carbon | 94.1 | 26.1 | 0.0 | 0.0 | 3.7 |
| 89 | Ni/Re/ZrO2 | 4.9% Ni / 0.7% Re on ZrO2 | 88.7 | 25.9 | 0.0 | 0.3 | 7.6 |
| 90 | P25 | | 98.5 | 25.6 | 0.0 | 4.2 | 0.6 |
| 91 | Ag2O/CuO | | 91.1 | 21.7 | 0.0 | 0.4 | 15.6 |
| 92 | G-89 | Cu Cr/Mn | 90.0 | 21.6 | 0.0 | 0.3 | 1.1 |
| 93 | Cr-0211T | Cr/ZrO2 on alumina | 94.8 | 18.4 | 0.0 | 2.2 | 0.0 |
| 94 | Ni/Re/TiO2 | 4.9% Ni/1% Re on rutile TiO2 | 93.7 | 16.0 | 0.0 | 0.6 | 6.7 |
| 95 | Rh/Al2O3 | 1 % Rh on Al2O3 | 94.8 | 14.1 | 0.0 | 0.6 | 8.4 |
| 96 | Pd/C | 1.5% Pd on carbon (G277) | 90.2 | 14.0 | 0.0 | 0.0 | 1.6 |
| 97 | MELCAT 880/01 | | 94.5 | 13.7 | 0.0 | 4.9 | 4.5 |
| 98 | MoO3/ZrO2 | | 98.6 | 10.5 | 0.0 | 6.7 | 0.9 |
| 99 | G-22/2 | 47% CuO/ 34% Cr2O3/ 6% BaO on SiO2 | 97.4 | 10.2 | 0.0 | 0.2 | 1.4 |
| 100 | Rh/Al2O3 | | 98.8 | 6.5 | 0.0 | 0.8 | 2.4 |
| 101 | Cr-0211T | | 99.1 | 6.4 | 0.0 | 1.7 | 0.6 |
| 102 | Rh/C | 5% Rh on carbon powder (Engelhard) | 80.3 | 5.2 | 0.0 | 0.0 | 1.6 |
| 103 | ZrO2/SO4 | | 94.7 | 5.2 | 0.0 | 3.9 | 0.9 |
| 104 | ZrO2/WO3 | | 99.5 | 2.8 | 0.0 | 2.6 | 1.0 |
| 105 | T-869 Si/Al | | 99.4 | 1.8 | 0.0 | 1.1 | 0.6 |
| 106 | Zr-0404 | | 99.4 | 1.3 | 0.0 | 1.4 | 0.3 |
| 107 | Shot Coke | | 97.8 | 1.2 | 0.0 | 0.0 | 0.4 |

| | | | | | | | |
|---|---|---|---|---|---|---|---|
| Composition details are not available for some commercially-obtained catalysts. | | | | | | | |

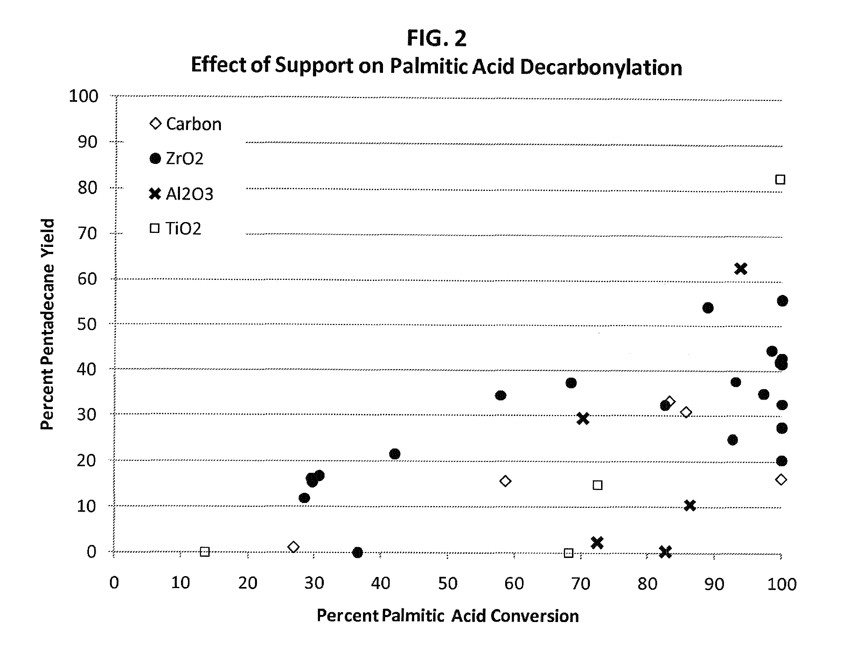

**Effect of Support Material on Palmitic Acid Decarboxylation:** Four support materials (carbon, ZrO₂, Al₂O₃, and TiO₂) were evaluated for their effect on palmitic acid decarboxylation. The results are shown in Table 2 and FIG. 2. Complete conversion of palmitic acid was obtained with various catalysts on carbon, ZrO₂, Al₂O₃, and TiO2 supports.

**Table 2**

| | **Catalyst** | **Composition Details** | **Mass Recovery** | **Conversion** | **Pentadecane Yield** | **Ketone Yield** | **Others Yield** |
|---|---|---|---|---|---|---|---|
| 1 | Pt/Ge/C | 5% Pt/Ge on carbon powder | 61.0 | 100.0 | 107.5 | 0.0 | 3.4 |
| 2 | Pt/C | | 48.9 | 83.2 | 33.4 | 0.0 | 9.4 |
| 3 | Pt/Sn/C | 1.5% Pt/0.15% Sn on carbon powder | 57.7 | 85.7 | 31.1 | 0.3 | 6.9 |
| 4 | Pt/C | 5% Pt on Norit^{®} ROX | 46.3 | 100.0 | 16.3 | 0.0 | 3.1 |
| 5 | Pt/Ru/C | 1.5% Pt/ 0.15% Ru on carbon powder | 83.8 | 58.6 | 15.8 | 0.2 | 10.6 |
| 6 | Pt(S)/C | 3% Pt (sulphited) on carbon powder | 76.5 | 26.8 | 1.1 | 0.0 | 8.4 |
| 7 | WO3/Pt/ZrO2 | 12% WO3/0.7% Pt on ZrO2 | 90.0 | 88.8 | 54.4 | 0.9 | 27.9 |
| 8 | WO3/Pt/ZrO2 | 12% WO3/0.7% Pt on ZrO2 | 64.6 | 97.2 | 35.1 | 0.2 | 17.6 |
| 9 | Pt/ZrO2 | 0.7% Pt on ZrO2 | 93.5 | 30.6 | 16.9 | 0.2 | 7.1 |
| 10 | Pt/ZrO2 | 0.7% Pt on ZrO2 | 92.8 | 29.7 | 15.5 | 0.4 | 11.5 |
| 11 | Pt/ZrO2 | 0.7% Pt on ZrO2 | 92.5 | 29.4 | 16.3 | 0.4 | 7.5 |
| 12 | Pt/ZrO2 | 0.7% Pt on ZrO2 | 93.3 | 28.4 | 12.0 | 1.1 | 12.8 |
| 13 | MoO3/Pt/ ZrO2 | 7.8% MoO3/0.7% Pt on ZrO2 | 88.7 | 57.8 | 34.6 | 0.5 | 10.6 |
| 14 | MoO3/Pt/ ZrO2 | 7.8% MoO3/0.7% Pt on ZrO2 | 92.4 | 42.0 | 21.7 | 1.6 | 4.3 |
| 15 | WO3/Pt/ZrO2 | 12% WO3/0.7% Pt on ZrO2 | 70.7 | 99.6 | 42.1 | 0.2 | 10.8 |
| 16 | WO3/Pt/ZrO2 | 12% WO3/0.7% Pt on ZrO2 | 82.0 | 93.0 | 37.8 | 0.5 | 11.4 |
| 17 | Pt/ZrO2 | 0.7% Pt on ZrO2 | 81.8 | 36.4 | 0.0 | 0.3 | 7.9 |
| 18 | WO3/Pt/ZrO2 | 12% WO3/0.7% Pt on ZrO2 | 64.0 | 100.0 | 27.8 | 0.0 | 8.4 |
| 19 | WO3/Pt/ZrO2 | 12% WO3/0.7% Pt on ZrO2 | 78.4 | 100.0 | 41.7 | 0.0 | 13.5 |
| 20 | WO3/Pt/ZrO2 | 12% WO3/0.7% Pt on ZrO2 | 70.6 | 92.6 | 25.1 | 0.0 | 8.9 |
| 21 | WO3/Pt/ZrO2 | 12% WO3/0.7% Pt on ZrO2 by MVD | 82.6 | 82.5 | 32.6 | 0.0 | 13.0 |
| 22 | WO3/Pt/ZrO2 | 12% WO3/0.7% Pt on ZrO2 | 75.3 | 100.0 | 56.0 | 0.2 | 28.8 |
| 23 | WO3/Pt/ZrO2 | 12% WO3/0.7% Pt on ZrO2 | 81.8 | 98.4 | 44.7 | 0.3 | 31.7 |
| 24 | WO3/Pt/ZrO2 | 12% WO3/0.7% Pt on ZrO2 | 78.6 | 100.0 | 43.0 | | |
| 25 | WO3/Pt/ZrO2 | 12% WO3/0.7% Pt on ZrO2 | 78.0 | 68.3 | 37.5 | 0.2 | 21.7 |
| 26 | WO3/Pt/ZrO2 | 12% WO3/0.7% Pt on ZrO2 | 65.6 | 100.0 | 32.8 | 0.0 | 10.8 |
| 27 | WO3/Pt/ZrO2 | 12% WO3/0.7% Pt on ZrO2 | 62.5 | 100.0 | 20.4 | | |
| 28 | Pt/Al2O3 | 2% Pt on Al2O3 | 80.4 | 70.2 | 29.5 | 3.7 | 7.8 |
| 29 | Pt/Al2O3 | 5% Pt on Al2O3 | 90.6 | 93.8 | 63.1 | 0.4 | 4.3 |
| 30 | Pt/Al2O3 | 3% Pt on Al2O3 | 81.9 | 72.4 | 2.3 | 4.4 | 5.0 |
| 31 | Pt/Al2O3 | 3% Pt on Al2O3 | 83.0 | 82.6 | 0.3 | 2.2 | 2.7 |
| 32 | Pt/Al2O3 | 2% Pt on Al2O3 | 56.9 | 86.3 | 10.6 | 1.8 | 4.3 |
| 33 | Pt/TiO2 | 5% Pt on TiO2 | 78.9 | 99.5 | 82.7 | 0.0 | 16.3 |
| 34 | Pt/TiO2 | 0.7% Pt on TiO2 (900C calcine) | 93.1 | 13.7 | 0.0 | 0.0 | 0.2 |
| 35 | Pt/TiO2 | 0.7% Pt on TiO2 (450C calcine) | 72.1 | 68.1 | 0.0 | 7.7 | 8.0 |
| 36 | Pt/TiO2 | 0.7% Pt on TiO2 (uncalcined) | 79.8 | 72.5 | 15.0 | 0.0 | 13.5 |
| 37 | Pt/ZrO2 | 5% Pt on ZrO2 | 93.4 | 59.8 | 51.8 | 0.3 | 0.5 |

### Effect of Pt and WO₃ Concentrations on Palmitic Acid Decarboxylation:

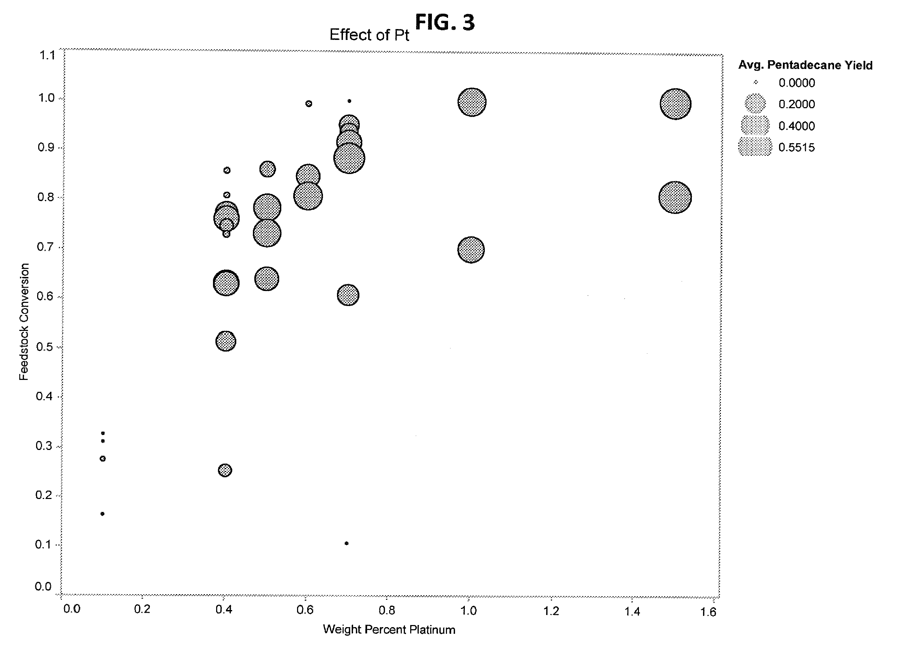

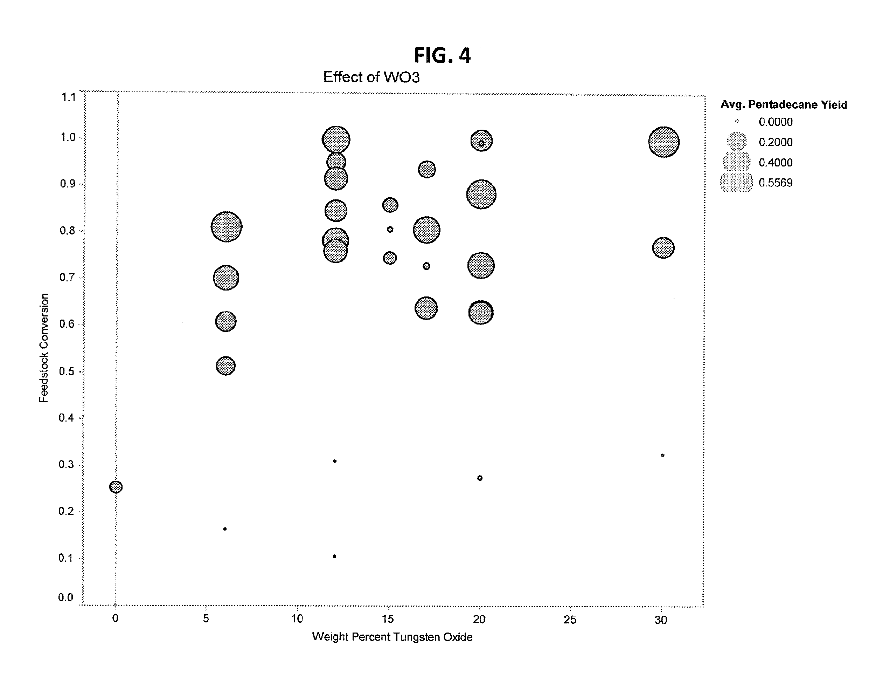

A WO₃/Pt/ZrO₂ catalyst formulation was selected for further development. The effects of percent Pt and WO₃ were evaluated to determine suitable combinations with a desirable balance between palmitic acid conversion and pentadecane yield and metal loading. Catalysts ranging from 6-30 wt% WO₃ and 0.1-1.5 wt% Pt, relative to total catalyst mass were prepared and evaluated. Unexpectedly superior results were obtained with catalysts of low metal loading, having 6 - 12 wt% WO₃ and 0.4 - 0.7 wt% Pt. Lower metal loading reduces the value/cost of the catalyst, especially important for expensive metals such as Pt. The results are shown in Table 3 and FIGS. 3 and 4. In FIG. 3, the amount of conversion reached a plateau around 0.7 wt% Pt, where the addition of more platinum did not improve the amount of conversion of the feedstock. A similar plateau can be seen in FIG. 4; starting at 12 wt% WO₃. The addition of more tungsten oxide did not improve the amount of conversion. In addition a significantly higher yield of pentadecane was not noted when the amounts of either metal were increased beyond 12 wt% WO₃ and/or 0.7 wt% Pt.

Due to the screening nature of the tests and use of high throughput technology, mass recovery data provides an indication of the potential integrity of the sample during testing. Data scatter is attributable to running several different batch tests. Variances in mass balance produce more scatter. A low mass recovery is indicative of an individual vial leak, and data may not be of equal quality to data with high mass recovery since the more volatile components would be more prone to vaporization and leaking from the individual vial.

**Table 3**

| **Catalyst** | **Pt %** | **WO3 %** | **Mass Recovery** | **Conversion** | **Pentadecane Yield** | **Others Yield** |
|---|---|---|---|---|---|---|
| 1.5% Pt / 30% WO3 | *1.5* | *30* | 89.3% | 100.0% | 64.7% | 11.6% |
| 1% Pt / 30% WO3 | *1* | *30* | 76.5% | 100.0% | 46.7% | 8.7% |
| 1.5% Pt / 12% WO3 | *1.5* | *12* | 74.1% | 100.0% | 43.6% | 11.5% |
| 1.5% Pt / 20% WO3 | *1.5* | *20* | 73.6% | 100.0% | 41.2% | 9.7% |
| 1% Pt / 20% WO3 | *1* | *20* | 71.4% | 100.0% | 37.4% | 10.0% |
| 0.7% Pt / 20% WO3 | *0.7* | *20* | 41.1% | 100.0% | 0.0% | 0.8% |
| 0.6% Pt / 20% WO3 | *0.6* | *20* | 46.9% | 99.3% | 1.4% | 1.6% |
| 0.7% Pt / 12% WO3 | *0.7* | *12* | 65.0% | 95.2% | 20.2% | 8.1% |
| 0.7% Pt / 17% WO3 | *0.7* | *17* | 65.2% | 93.7% | 16.6% | 7.2% |
| 0.7% Pt / 12% WO3 | *0.7* | *12* | 80.4% | 91.7% | 32.2% | 13.1% |
| 0.7% Pt / 20% WO3 | *0.7* | *20* | 91.4% | 88.5% | 49.3% | 14.9% |
| 0.5% Pt / 15% WO3 | *0.5* | *15* | 67.4% | 86.1% | 12.3% | 6.7% |
| 0.4% Pt / 12% WO3 | *0.4* | *12* | 57.8% | 85.8% | 1.4% | 3.0% |
| 0.6% Pt / 12% WO3 | *0.6* | *12* | 80.9% | 84.8% | 28.5% | 10.7% |
| 1.5% Pt / 6% WO3 | *1.5* | *6* | 92.0% | 81.2% | 55.2% | 10.9% |
| 0.4% Pt / 15% WO3 | *0.4* | *15* | 60.8% | 80.9% | 1.4% | 3.6% |
| 0.6% Pt / 17% WO3 | *0.6* | *17* | 92.1% | 80.8% | 42.6% | 12.0% |
| 0.5% Pt / 12% WO3 | *0.5* | *12* | 92.3% | 78.4% | 39.9% | 13.9% |
| 0.4% Pt / 30% WO3 | *0.4* | *30* | 84.5% | 77.3% | 26.0% | 10.0% |
| 0.4% Pt / 12% WO3 | *0.4* | *12* | 92.4% | 76.2% | 33.0% | 14.4% |
| 0.4% Pt / 15% WO3 | *0.4* | *15* | 73.9% | 74.7% | 9.1% | 8.0% |
| 0.5% Pt / 20% WO3 | *0.5* | *20* | 93.0% | 73.2% | 40.7% | 12.3% |
| 0.4% Pt / 17% WO3 | *0.4* | *17* | 64.7% | 73.0% | 2.1% | 4.1% |
| 1% Pt / 6% WO3 | *1* | *6* | 93.0% | 70.2% | 37.0% | 9.6% |
| 0.5% Pt / 17% WO3 | *0.5* | *17* | 93.1% | 64.0% | 30.1% | 10.4% |
| 0.4% Pt / 20% WO3 | *0.4* | *20* | 93.8% | 63.1% | 34.9% | 11.5% |
| 0.4% Pt / 20% WO3 | *0.4* | *20* | 93.9% | 63.0% | 31.4% | 11.5% |
| 0.7% Pt / 6% WO3 | *0.7* | *6* | 89.5% | 60.8% | 23.7% | 8.8% |
| 0.4% Pt / 6% WO3 | *0.4* | *6* | 94.9% | 51.3% | 20.0% | 9.6% |
| 0.1% Pt / 30% WO3 | *0.1* | *30* | 86.0% | 32.6% | 0.0% | 3.3% |
| 0.1% Pt / 12% WO3 | *0.1* | *12* | 92.9% | 31.0% | 0.0% | 5.3% |
| 0.1% Pt / 20% WO3 | *0.1* | *20* | 97.0% | 27.5% | 1.0% | 7.5% |
| 0.4% Pt | *0.4* | *0* | 97.5% | 25.3% | 8.1% | 6.4% |
| 0.1% Pt / 6% WO3 | *0.1* | *6* | 98.5% | 16.4% | 0.0% | 4.7% |
| 0.7% Pt / 12% WO3 | *0.7* | *12* | 98.8% | 10.6% | 0.0% | 1.8% |
| 30% WO3 | *0* | *30* | 99.3% | -1.6% | 0.0% | 1.6% |

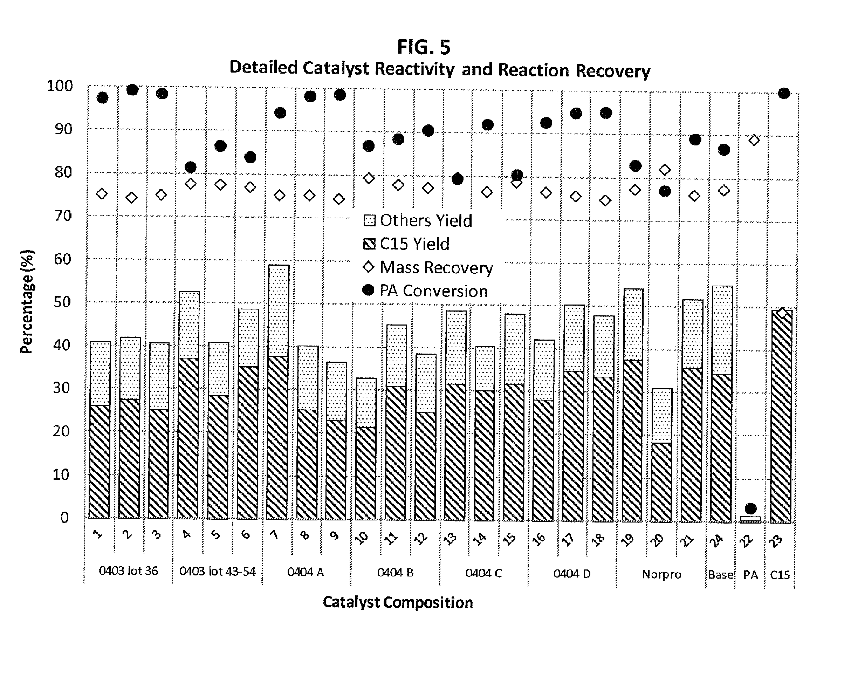

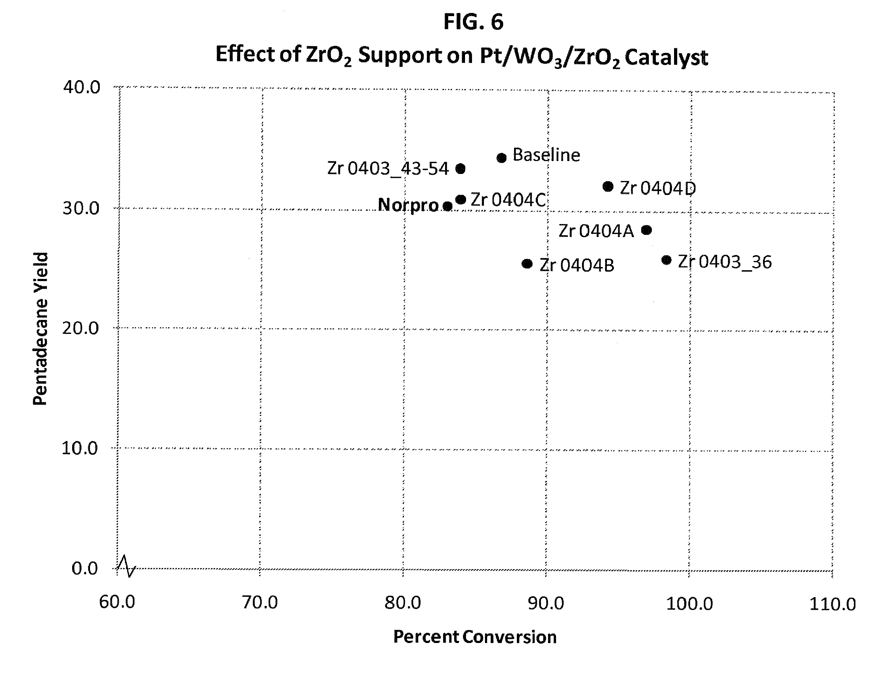

**Effect of ZrO₂ Support on Palmitic Acid Decarboxylation:** Seven ZrO2 supports were tested and compared to the support used for the initial catalyst preparation, 12% WO₃ / 0.7% Pt on Engelhard ZrO2 support lot 0403 (BASF Corporation, Florham Park, NJ). Each catalyst was prepared by the same robotic system at equivalent metal loading relative to the total mass of the catalyst. The results are shown in Table 4 and FIGS. 5 and 6. FIG. 5 includes the data for each individual trial, and FIG. 6 provides an average for all samples of a particular catalyst. In general, palmitic acid conversion and product yields were quite consistent. In each case, the major product was C15.

**Table 4**

| **Catalyst** | **Mass Recovery** | **Conversion** | **C15 Yield** | **Others Yield** |
|---|---|---|---|---|
| Zr 0403_36¹ | 74.8 | 98.3 | 26.0 | 15.0 |
| Zr 0403_43-54¹ | 77.3 | 83.8 | 33.4 | 13.9 |
| Zr 0404A¹ | 74.9 | 96.9 | 28.5 | 16.6 |
| Zr 0404B¹ | 78.1 | 88.5 | 25.6 | 13.1 |
| Zr 0404C¹ | 78.2 | 83.9 | 30.9 | 14.7 |
| Zr 0404D¹ | 75.6 | 94.2 | 32.1 | 14.6 |
| NorPro² | 78.4 | 83.0 | 30.3 | 15.3 |
| Baseline | 77.3 | 86.7 | 34.3 | 20.6 |

| | | | | |
|---|---|---|---|---|
| ¹BASF Corporation, Florham Park, NJ ²Saint-Gobain NorPro, Canton, OH | | | | |

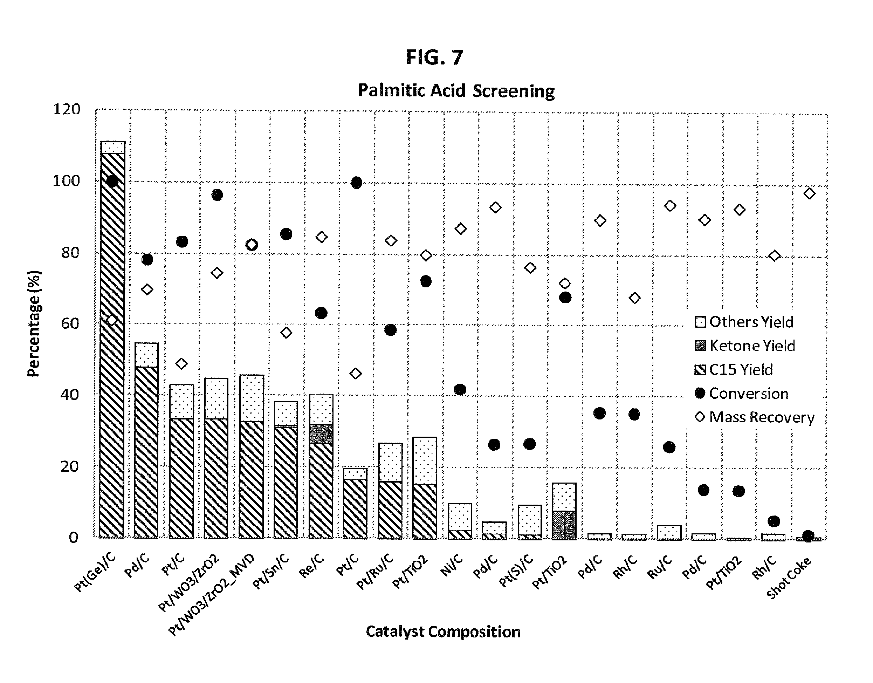

**Effect of Carbon Support on Palmitic Acid Decarboxylation:** Screening experiments were conducted with various catalysts with carbon supports to evaluate their ability to decarboxylate palmitic acid. The catalysts also were compared to catalysts having inorganic supports such as ZrO2 and TiO₂. As shown in FIG. 7, the primary product was pentadecane in most instances. Surprisingly superior results were obtained with the 5%Pt/Ge/C with more than 95% of the product being pentadecane within the experimental error of the screening tests. In contrast, two different Pt/C catalysts resulted in products including less than 40% pentadecane or less than 20% pentadecane.

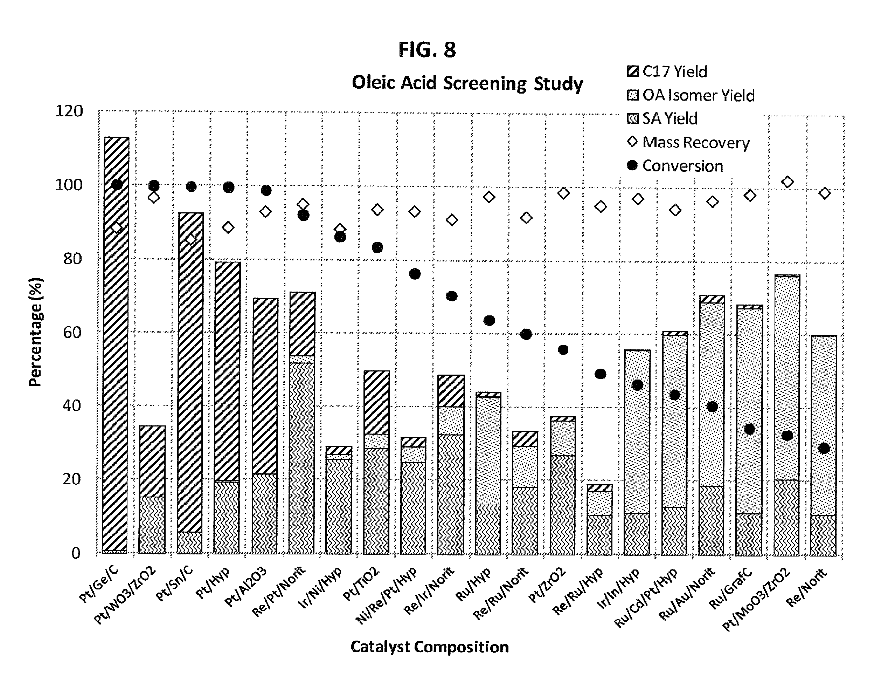

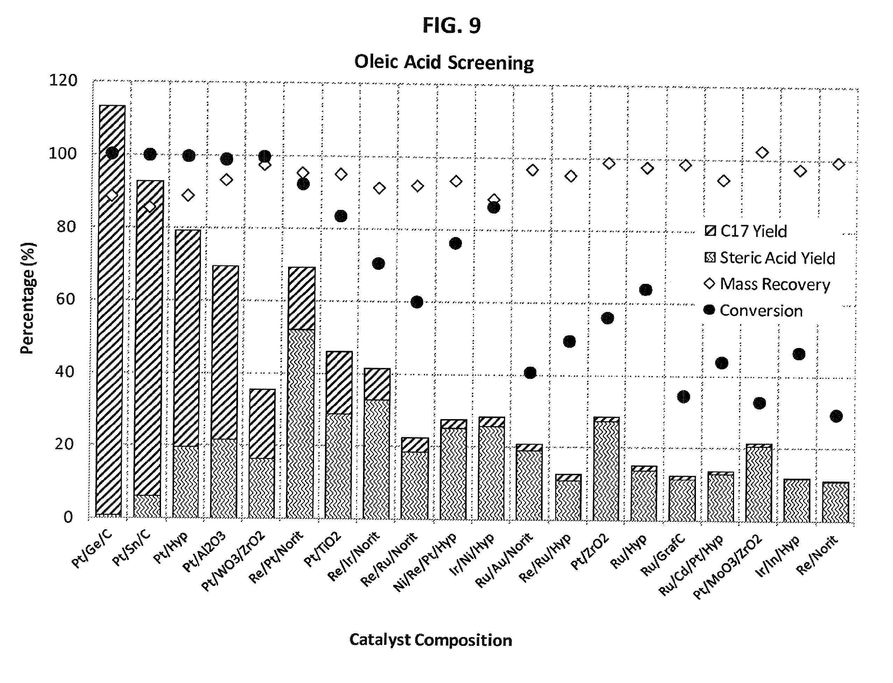

**Catalyst Screening for Oleic Acid Decarboxylation:** Catalysts were screened for their ability to deoxygenate oleic acid. Due to its double bond, oleic acid is capable of undergoing several reactions when exposed to the disclosed catalysts. These reactions include deoxygenation/decarboxylation/decarbonylation/dehydration, hydrogenation (saturation), cracking, dehydrogenation/aromatization, alkylation/cyclization/dimerization/oligomerization, and isomerization. The results are shown in FIGS. 8 and 9 and Table 5. FIG. 8 shows the effects of various catalyst compositions on oleic acid. The most common products included C 17, stearic acid, and unsaturated C18 isomers of oleic acid. C 17 refers to compounds having 17 carbon atoms. The major C17 product was heptadecane; other products included alkyl-branched aromatics. The C17 and stearic acid yields produced by several of the catalysts are shown in FIG. 9. Pt/Ge and Pt/Sn on carbon provided superior results for decarboxylating oleic acid with no dimerization or oligomerization. When Pt/Ge/C was the catalyst, more than 95% of the product was heptadecane, with the remaining products including pentadecane and alkyl-branched aromatics. When Pt/Sn/C was the catalyst, more than 85% of the product was heptadecane. In contrast, when using a Pt/C catalyst, less than 60% of the product was heptadecane.

**Table 5**

| | **Catalyst Composition** | **Composition Details** | **Mass Recovery** | **Conversion** | **Stearic Acid Yield** | **C17 Yield** |
|---|---|---|---|---|---|---|
| 1 | Pt/Ge/C | 5% Pt/Ge on carbon | 88.5 | 100.0 | 0.6 | 112.2 |
| 2 | Pt/Sn/C | 1.5% Pt / 0.15% Sn on carbon | 85.5 | 99.6 | 5.9 | 86.7 |
| 3 | Pt/Hyp | 5% Pt on Hyperion carbon | 88.7 | 99.4 | 19.4 | 59.6 |
| 4 | Pt/Al2O3 | 5% Pt on Al2O3 | 93.1 | 98.8 | 21.6 | 47.8 |
| 5 | WO3/Pt/ZrO2 | 12% WO3 / 0.7% Pt on ZrO2 | 97.3 | 99.6 | 16.3 | 18.9 |
| 6 | Re/Pt/Norit^{®} | 5% Re / 2% Pt on Norit^{®} carbon | 95.1 | 92.1 | 51.8 | 17.4 |
| 7 | Pt/TiO2 | 5% Pt on TiO2 | 94.9 | 83.3 | 28.7 | 17.3 |
| 8 | Re/Ir/Norit^{®} | 5% Re / 5% Ir on Norit^{®} | 91.2 | 70.3 | 32.6 | 8.6 |
| 9 | Re/Ru/Norit^{®} | 5% Re / 3% Ru on Norit | 91.9 | 60.0 | 18.3 | 4.0 |
| 10 | Ni/Re/Pt/Hyp | 5% Ni / 1% Re / 0.02% Pt on Hyperion | 93.4 | 76.3 | 24.9 | 2.4 |
| 11 | Ir/Ni/Hyp | 7% Ir / 3% Ni on Hyperion | 88.4 | 86.2 | 25.6 | 2.4 |
| 12 | Ru/Au/Norit^{®} | 4.8% Ru / 1 % Au on Norit^{®} | 96.6 | 40.5 | 18.8 | 2.0 |
| 13 | Re/Ru/Hyp | 5% Re / 3% Ru on Hyperion | 95.1 | 49.3 | 10.7 | 1.9 |
| 14 | Pt/ZrO2 | 5% Pt on ZrO2 | 98.7 | 55.8 | 27.0 | 1.4 |
| 15 | Ru/Hyp | 5% Ru on Hyperion | 97.5 | 63.7 | 13.5 | 1.4 |
| 16 | Ru/GrafC | 7% Ru on 1,8-mm graphitic carbon (Engelhard No. PM 0400007, BASF) | 98.4 | 34.3 | 11.3 | 1.0 |
| 17 | Ru/Cd/Pt/Hyp | 5% Ru / 0.5% Cd / 0.02% Pt on Hyperion | 94.3 | 43.6 | 12.8 | 0.9 |
| 18 | MoO3/Pt/ZrO2 | 7.8% MoO3 /0.7% Pt on ZrO2 | 102.2 | 32.7 | 20.6 | 0.7 |
| 19 | Ir/In/Hyp | 7% Ir / 3% In on Hyperion | 97.2 | 46.4 | 11.4 | 0.3 |
| 20 | Re/Norit^{®} | 5% Re on Norit^{®} | 99.2 | 29.2 | 10.8 | 0.2 |

| | | | | | | |
|---|---|---|---|---|---|---|
| Note: GrafC (graphitic carbon, BASF Corporation, Florham Park, NJ), Hyp (multi-walled carbon nanotubes, Hyperion Catalysis International, Cambridge, MA) and Norit^{®} (Norit^{®} ROX, acid-washed, extruded activated carbon, Norit Americas, Inc., Marshall, TX) are all forms of carbon. | | | | | | |

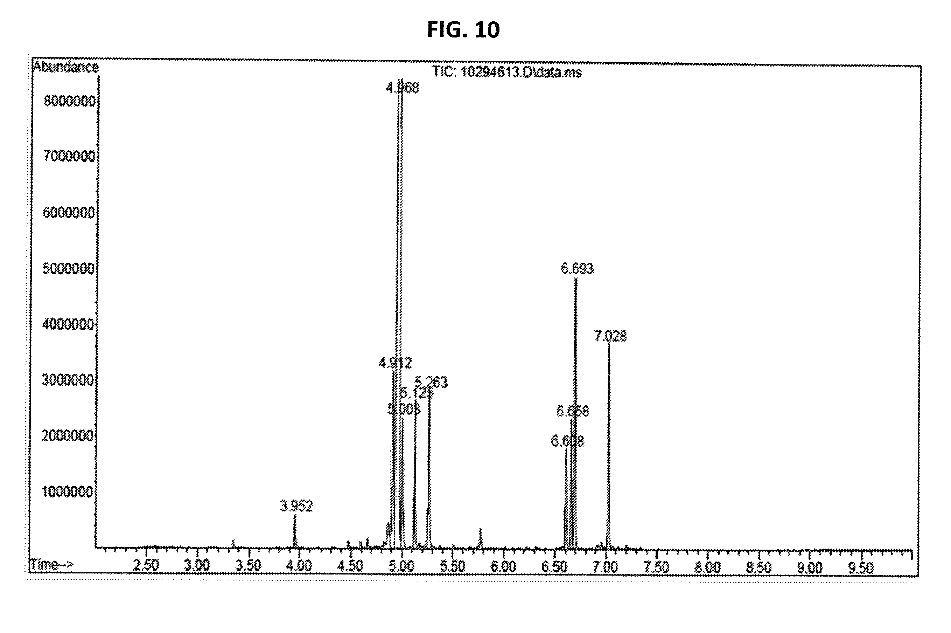

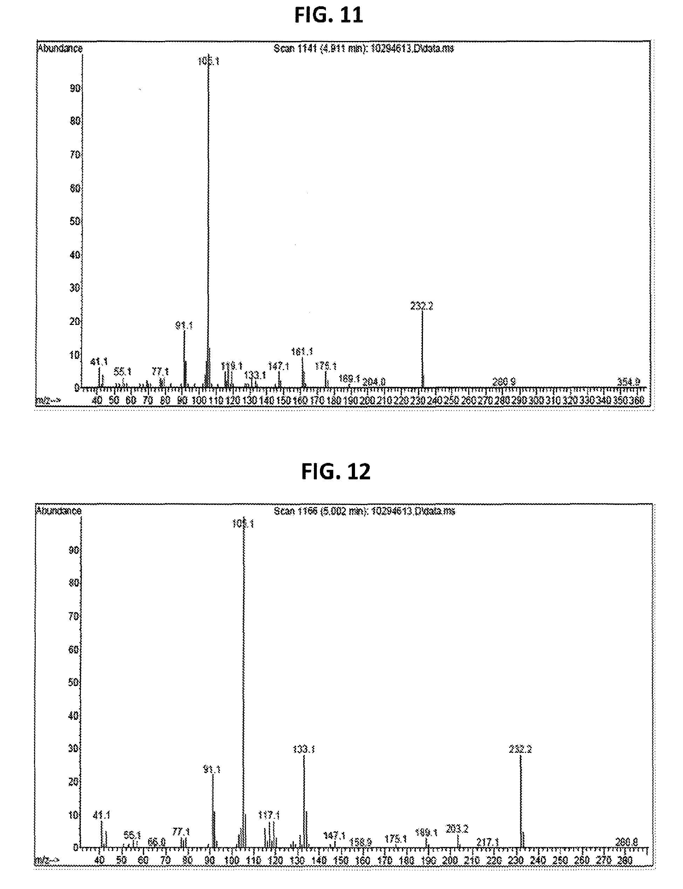

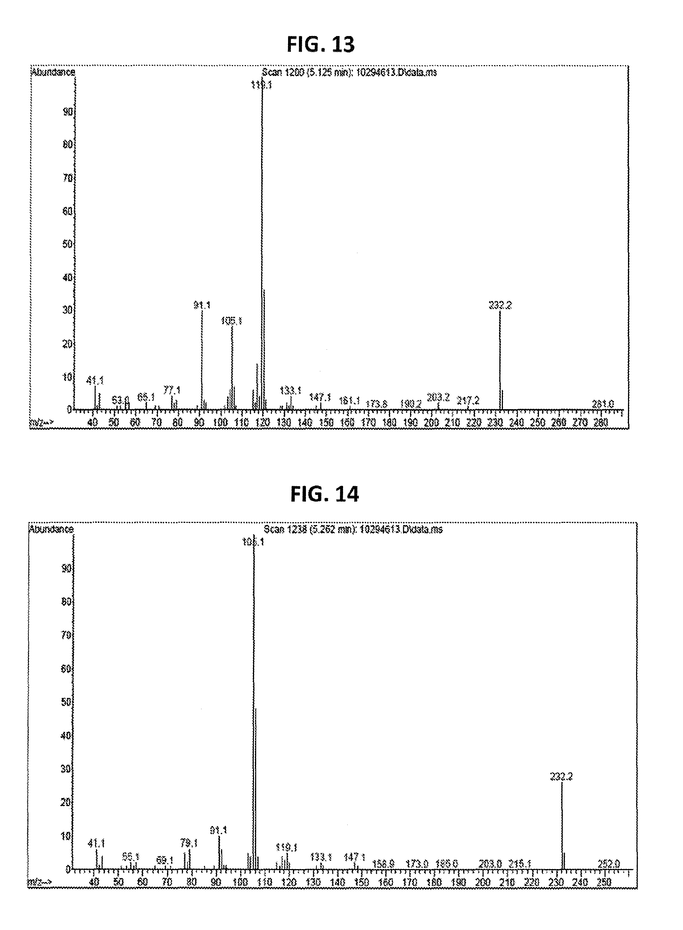

The compounds produced by exposing oleic acid to a catalyst having 1.5 wt% Pt and 0.15 wt% Sn on carbon powder were evaluated by gas chromatography/mass spectroscopy (GC/MS). FIG. 10 is a GC trace of the products. The MS fragmentation patterns corresponding to the aromatic compound with a mass of 232 amu were identified as the chromatographic peaks obtained at 4.911 minutes, 5.002 minutes, 5.125 minutes, and 5.262 minutes, and are shown in FIGS. 11-14, respectively. Although no matches were found in MS libraries, the closest C17 aromatic compounds appeared to be 2-methyl-2-phenyl decane (molecular weight fragments of 119, 91, 120, and 105) and 2-phenyl undecane (molecular fragments of 105, 106, 91, and 232). Other close MS fragmentation matches included methyl isobutyl benzene and 1,3-dimethylbutyl benzene but these compounds are of different mass.

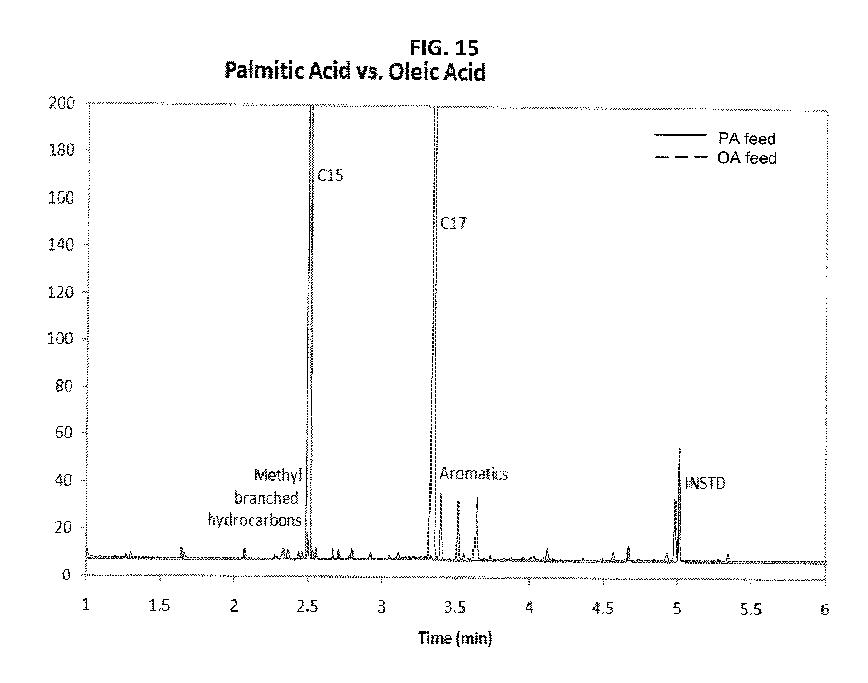

**Comparison of Products Produced from Palmitic Acid and Oleic Acid Using a 5% Pt/Ge/C Catalyst:** Palmitic acid and oleic acid were individually exposed to a 5% Pt/Ge/C catalyst in screening tests, and the products were analyzed by gas chromatography with a flame ionization detector (GC-FID). FIG. 15 is an overlay of the GC-FID traces of the products formed from catalysis of palmitic acid and oleic acid. The palmitic acid products are shown as a solid line, and the oleic acid products are shown as a dashed line. In each case, methyl-branched hydrocarbons exited the column first, followed by straight-chain hydrocarbons and then aromatic compounds. The tall, overlapping peaks at about 2.5 minutes are pentadecane. The tall peak at about 3.35 minutes is heptadecane. The shoulder peak just in front of heptadecane is an aromatic compound, as are the peaks following it. The peaks from about 3.4 to about 3.7 minutes are thought to be alkylsubstituted aromatic compounds. The small peaks seen from about 1-3 minutes are thought to be mono-methyl branched hydrocarbons. Thus, the major product of palmitic acid decarboxylation was pentadecane with a small amount of hexadecane and about 3% of other products. Oleic acid decarboxylation produced primarily heptadecane with a small amount of pentadecane and minor amounts of other products. It can be seen that the oleic acid products included a much higher ratio of aromatic compounds to methyl-branched hydrocarbons as compared to the palmitic acid products.

### Example 2

### Platinum on Metal Oxide Catalysts

### Catalyst synthesis:

**Catalyst 1 (WO₃/Pt/ZrO₂):** BASF Zr-0403 (BASF Corporation, Florham Park, NJ), an engineered (tableted) zirconia support with a cornstarch binder, was used as the catalyst support. The support was calcined at 450°C for 6 hr in air. A 5°C/min ramp from room temperature to 450°C and 10°C/min ramp back to room temperature were employed. Identical temperature ramps were subsequently used in all calcination steps in this catalyst preparation. Next, an ammonium metatungstate hydrate solution was added drop-wise to the support to the point of incipient wetness. The amount of ammonium metatungstate hydrate was added so that the amount of tungstate present on the catalyst would be 12 wt% WO₃. The support was first dried in flowing warm air from a heat gun for 30 min and subsequently dried at 120°C for 2.0 hr. Following drying, the catalyst was calcined at 850°C for 2.0 hr. After calcination, an aqueous platinum ethanolamine (Pt-A) solution was added drop-wise to the catalyst support such that the support again reached incipient wetness. Pt-A solution was added so that the final catalyst would be 0.7 wt% Pt. The pellets were dried under flowing heated air produced from a heat gun while tumbling for 30 min and further dried in air at 120°C for 2.5 hr. The catalyst was calcined at 450°C for 2 hr. After calcination, Catalyst 1 was ground with an alumina mortar and pestle and the -30/+80 mesh fraction was collected via sieving and used in Runs 1-5.

**Catalyst 2 (WO₃/Pt/ZrO₂):** NorPro^{®} SZ31164 engineered (tableted) zirconia support was initially ground with an alumina mortar and pestle. The - 30/+80 mesh fraction was then collected via sieving. The zirconia support was calcined at 450°C for 6 hr, with 5°C/min and 10°C/min ramps from calcination temperature and back to room temperature, respectively. Identical temperature ramps were subsequently used in all calcination steps in this catalyst preparation. Following calcination, an aqueous solution of ammonium metatungstate hydrate was added to the zirconia such that the incipient wetness point was reached. The amount of ammonium metatungstate hydrate was added so that 12 wt% WO₃ would be present on the catalyst following calcination. After the addition of the ammonium metatungstate hydrate, the support was dried in flowing heated air from a heat gun while tumbling for 45 min, followed by drying at 120°C for 1.0 hr in air. The support was then calcined at 850°C for 2.0 hr. After calcination, aqueous platinum ethanolamine (Pt-A) solution was added drop-wise to the support such that incipient wetness point of the support was again reached. Pt-A solution was added so that the final catalyst would be 0.7 wt% Pt. After addition of the Pt-A solution, the catalyst was dried for 45 min while tumbling in air at room temperature followed by drying at 120°C for 1.0 hr. The support was subjected to a final calcination at 450°C for 2.0 hr. Catalyst 2 was used in Run 6 without further modification.

**Catalyst 3 (WO₃/Pt/ZrO₂):** BASF Zr-0403, an engineered ZrO₂ support, was used in this preparation. The support contained a graphite binder. The support was calcined at 450°C for 6 hr using a 10°C/min ramp and taken out of the oven at the end of the 6 hr soak and placed in a desiccator. Upon cooling, this support was subjected to tungstate addition using an aqueous ammonium metatungstate hydrate solution via the incipient wetness technique. The amount of ammonium metatungstate hydrate was added so that 12 wt% WO₃ would be present on the catalyst following calcination. After drying, the sample was calcined at 850°C for 2 hr using 5°C/min and 10°C/min ramps from calcination temperature and back to room temperature, respectively. Identical temperature ramps were subsequently used in all calcination steps in this catalyst preparation. Pt was then added to the tungstated support via the incipient wetness technique such that 0.7 wt% Pt was present. The support was dried in flowing heated air from a heat gun for 1.5 hr and further dried for 2 hr at 120°C. After calcination at 450°C for 2 hr, this catalyst was designated Catalyst 3.

**Catalysts 4 and 5 (Pt/ZrO₂):** Two lots of BASF Zr-0403 were calcined at 850°C for 2 hr using 5°C/min and 10°C/min ramps from calcination temperature and back to room temperature, respectively. The supports were designated G and C for the graphite and cornstarch binder supports, respectively.

A portion of supports G and C were separately treated with aqueous Pt-A solution to produce a Pt/ZrO₂ catalyst with 0.7 wt% Pt. The solution was added via the incipient wetness technique. After application of the aqueous Pt-A solution, the supports were dried in heated flowing air from a heat gun for 15-20 min. The catalysts were then dried for 6-7 hrs at 120°C and subsequently calcined at 450°C for 2 hr. The Pt/ZrO₂ catalyst prepared from graphite bound support was designated Catalyst 4 while the catalyst prepared from cornstarch bound support was designated Catalyst 5.

**Catalyst 6 (MoO₃/Pt/ZrO₂):** BASF Zr-0403 with a graphite binder was prepared with MoO₃ instead of WO₃. The Zr-0403 was calcined at 450°C for 6 hr using a with 5°C/min and 10°C/min ramps from calcination temperature and back to room temperature, respectively. Identical temperature ramps were subsequently used in all calcination steps in this catalyst preparation. Next, an aqueous solution of ammonium heptamolybdate hydrate was added to the catalyst via the incipient wetness technique. The amount of molybdate was added such that the concentration would be 7.8 wt% MoO₃, which is equivalent on a molar basis to 12 wt% WO₃. The support was then dried with flowing heat from a heat gun for 30 min, flowing by heating in air 120°C for 2 hr and subsequently calcined at 850°C for 2 hr. The MoO₃/ZrO₂ support was then divided and one portion was impregnated with 0.7 wt% Pt via an aqueous Pt-A solution using the incipient wetness technique. Heat was applied from a heat gun while tumbling for 0.5 hr followed by drying at 120°C for 2.25 hr. The catalyst was then calcined at 450°C for 2 hr and designated Catalyst 6.

**Catalyst 7 (WO₃/Pt/ZrO₂, prepared with platinum acetylacetonate):** An Engelhard-0403 engineered (tableted) zirconia support (BASF Corporation) was initially calcined at 450°C for 4.5 hr, with 5°C/min and 10°C/min ramps from calcination temperature and back to room temperature. The support was then ground with an alumina mortar and pestle. The -30/+80 mesh fraction was then collected via sieving. Next, an aqueous solution of ammonium metatungstate hydrate was added to the zirconia such that the incipient wetness point was reached. The amount of ammonium metatungstate hydrate was added so that 12 wt% WO₃ would be present on the catalyst following calcination. After the addition of the ammonium metatungstate hydrate, the support was dried at room temperature while tumbling for 15 min, followed by drying at 120°C for 2.0 hr in air. The support was then calcined at 850°C for 2.0 hr with ramps identical to the first calcination step.

The catalyst support and platinum acetylacetonate (Pt-acac) were charged to a 50 mL round bottom flask. The amount of Pt-acac added was such that the final Pt loading of the catalyst would be 0.7 wt%. The round bottom flask was placed on a rotary evaporator and vacuum was applied to the flask; the pressure was set to 10 torr. The flask was set to rotate at 120 rpm. The rotating flask was then lowered so that it was rotating in contact with a heating mantle. The heating mantle was controlled with a Variac^{®}. A thermocouple was placed between the heating mantle and rotating round bottom flask. Additionally, a heat gun was positioned approximately 4 inches above the rotating flask so that the heat gun was aimed at the top of the round bottom flask.

Initially, the flask was set to rotating for 10 min with no heat applied in order to induce mixing of the catalyst support and Pt-acac. Next, heat was applied with the heating mantle and heat gun such that the thermocouple between the round bottom flask and heating mantle read 180°C. The ramp from room temperature to 180°C took 5-10 min. After 10 min at 180°C, the temperature was increased to 220°C and held for 30 min. The ramp from 180°C to 220°C took 3-5 min. After treatment at 220°C, the temperature was increased a final time to 240°C and held for 30 min. The ramp from 220°C to 240°C took 3-5 min. After treatment at 240°C, the samples were cooled and subsequently calcined at 350°C for 3 hr in air with a 5°C/min ramp from room temperature and a 10°C/min ramp back to room temperature. The WO₃/Pt/ZrO₂ catalyst prepared in this manner was designated Catalyst 7.

**Catalysts 8-10 (Pt/TiO₂):** Three titania supports were prepared from Degussa TiO₂ Lot DFH-14-231E. One titania support was uncalcined, a second was calcined at 450°C for 2 hr and a third was calcined at 900°C for 2 hr. Ramps of 5°C/min and 10°C/min to and from calcination temperature were used in all heat treatments. After calcination, each support was ground with an alumina mortar and pestle and the -30/+80 mesh fraction was collected via sieving.

Separately, each catalyst support was charged to a 50 mL round bottom flask with Pt-acac. The amount of Pt-acac added was such that the final Pt loading of the catalyst would be 0.7 wt%. The round bottom flask was placed on a Rotovap and vacuum was applied to flask; the pressure was set to 10 torr. The flask was set to rotate at 120 rpm. The rotating flask was then lowered so that it was rotating in contact with a heating mantle. The heating mantle was controlled with a Variac^{®}. A thermocouple was placed between the heating mantle and rotating round bottom flask. Additionally, a heat gun was positioned approximately 4 inches above the rotating flask so that the heat gun was aimed at the top of the round bottom flask.

Initially, the flask was set to rotating for 10 min with no heat applied in order to induce mixing of the catalyst support and Pt-acac. Next, heat was applied with the heating mantle and heat gun such that the thermocouple between the round bottom flask and heating mantle read 180°C. The ramp from room temperature to 180°C took 5-10 min. After 10 min at 180°C, the temperature was increased to 220°C and held for 30 min. The ramp from 180°C to 220°C took 3-5 min. After treatment at 220°C, the temperature was increased a final time to 240°C and held for 30 min. The ramp from 220°C to 240°C took 3-5 min. After treatment at 240°C, the samples were cooled and subsequently calcined at 350°C for 3 hr in air with a 5°C/min ramp from room temperature and a 10°C/min ramp back to room temperature. The Pt/TiO₂ catalysts prepared above were designated Catalysts 8, 9, and 10 for the supports calcined at 900°C, 450°C and uncalcined, respectively.

**Catalyst 11 (Pt/ZrO₂):** BASF Zr-0404 ZrO₂ support was ground and sieved to -30/+80 mesh. Pt was then applied via a Pt-acac precursor in a similar manner to the above catalyst preps. The amount of Pt added was such that the catalyst would contain 0.7 wt% Pt. A key difference from the previously described Pt-acac catalyst preparation method was the temperature was ramped directly from room temperature to 240 and held for 20 min as opposed to intermediate soaks at 180°C and 220°C. Additionally, the round bottom flask was rotated at 85 RPM as opposed to 120 RPM. After calcination at 350°C for 3 hr, this catalyst was designated Catalyst 11. The catalyst was reduced at 350°C in H₂ flowing at 200 SCCM for 4 hr prior to Combi testing.

**Catalyst 12 (WO₃/Pt/ZrO₂):** A support was prepared from BASF Zr-0403 with a graphite binder present. The support was calcined at 450°C for 6 hr with a 10°C/min ramp to calcination temperature. The support was then removed from the oven while still hot at the end of the 6 hr soak at 450°C. An aqueous solution of ammonium metatungstate hydrate was applied to the support via the incipient wetness technique such that the nominal concentration of WO₃ would be 12 wt%. The support was then calcined at 850°C for 2 hr using a 5°C/min ramp to calcination temperature and a 10°C/min ramp back to room temperature. The support was then ground and the -30/+80 mesh fraction was collected via sieving. Pt-acac was then applied in an identical manner as used during the preparation of Catalyst 11. After calcination at 350°C for 3 hr, this catalyst was designated Catalyst 12. The catalyst was reduced 350°C in H₂ flowing at 200 SCCM for 4 hr prior to Combi testing.

**Catalyst 13 (WO₃/Pt/ZrO₂):** BASF Zr-0403 (BASF Corporation, Florham Park, NJ), an engineered (tableted) zirconia support with a cornstarch binder, was used as the catalyst support. The support was ground with a mortar and pestle and the -30/+80 mesh fraction was collected via sieving. The support was calcined at 450°C for 6 hr in air. A 10°C/min ramp from room temperature to 450°C and 20°C/min ramp back to room temperature were employed. After calcination, an ammonium metatungstate hydrate solution was added drop-wise to the support to the point of incipient wetness. The amount of ammonium metatungstate hydrate was added so that the amount of tungstate present on the catalyst would nominally be 12 wt% WO₃. The support was first dried in flowing warm air from a heat gun for 35 min and subsequently dried at 120°C. Following drying, the catalyst was calcined at 850°C for 2.0 hr with a ramp of 5°C from room temperature to 850°C and a 10°C/min ramp back to room temperature. After calcination, an aqueous platinum ethanolamine (Pt-A) solution was added drop-wise to the catalyst support such that the support again reached incipient wetness. Pt-A solution was added so that the final catalyst would be 0.7 wt% Pt. The catalyst was dried under flowing room temperature air while tumbling for 1.0 hr. Heated air was then applied to the catalyst while tumbling for 45 min. Finally, the catalyst was dried in air at 120°C for 4 hr. After drying, the catalyst was calcined at 450°C for 2 hr with a temperature ramp of 5°C/min to 450°C and a 10°C/min ramp back to room temperature.

### Catalyst 1 Analysis:

**Run 1:** Catalyst 1 was evaluated for its ability to decarboxylate palmitic acid in Run 1. An up-flow, 6 cm³ column was packed with 13.68 g of Catalyst 1, which had been ground and sieved to -30/+80 mesh. The column was brought to an initial temperature of 250°C and purged with 2.5 mL/min N₂ before beginning a feed of palmitic acid. The N₂ remained on at 2.5 mL/min for the duration of the experiment. Nine samples were taken, with sample acquisition times of 20-50 min. In other words, each sample was collected over a 20-50 minute period of time. The temperature was increased to 275°C at the beginning of sample 4 acquisition and maintained at 275°C for samples 4-9. The column was operated at a weight hourly space velocity (WHSV) of 0.37 hr⁻¹ for samples 1-6, and 0.74 hr⁻¹ for samples 7-9. Samples 1-9 were analyzed via GC-FID as described in Example 1 to determine the percentage of deoxygenated products, the amount of palmitic acid remaining, and the total mass balance recovered. The amount of CO₂ released was determined using the off-gas flow rate and gas composition data obtained by GC. CO₂ measurement was not performed on samples 2, 5, and 8.

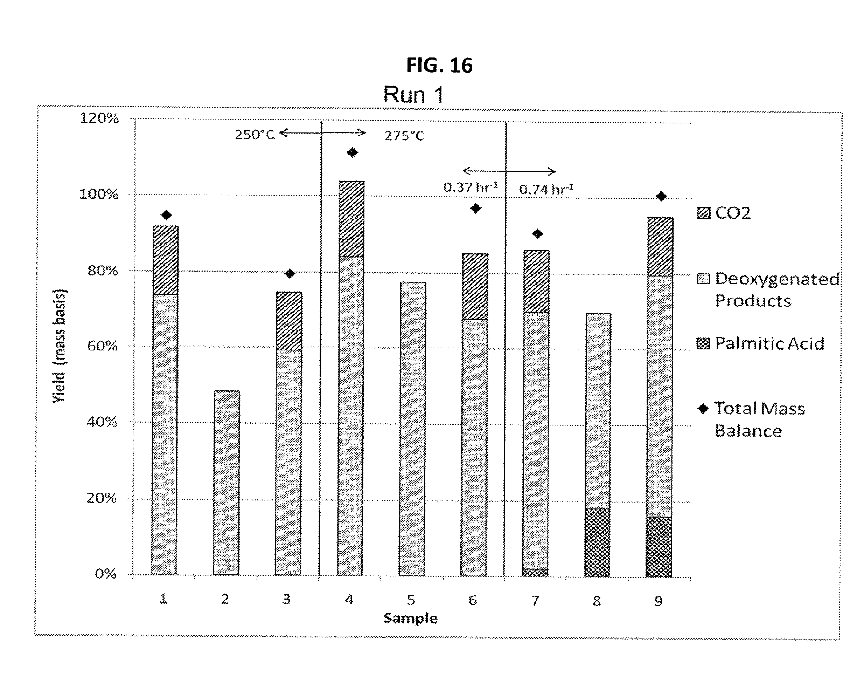

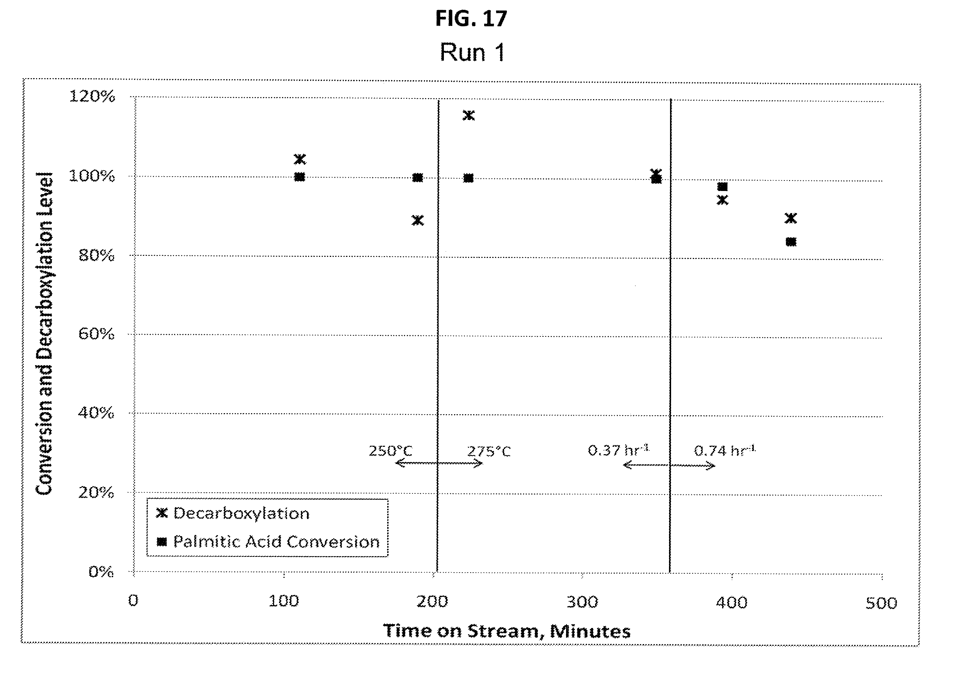

The results of Run 1 are shown in FIGS. 16 and 17. As shown in FIG. 16, samples 1-6 contained no residual palmitic acid after exposure to the catalyst, and were completely converted to deoxygenated products (e.g., pentadecane) and CO₂. FIG. 17 provides a comparison of percent decarboxylation and percent palmitic acid conversion over about 450 minutes time-on-stream (TOS). Palmitic acid conversion was at or near 100% through 400 minutes, with a slight decrease after 400 minutes. Notably, percent decarboxylation is closely correlated to percent palmitic acid conversion, indicating that the primary product was decarboxylated palmitic acid, primarily pentadecane.

**Run 2:** Catalyst 1 was used for Run 2. Conditions were similar to Run 1, but the temperature was initially 280°C and was increased to 290°C after sample 2. In Run 2, the column was operated at WHSV = 0.37 hr⁻¹, with 40-90 minute sample acquisition times. Ten samples were collected and analyzed.

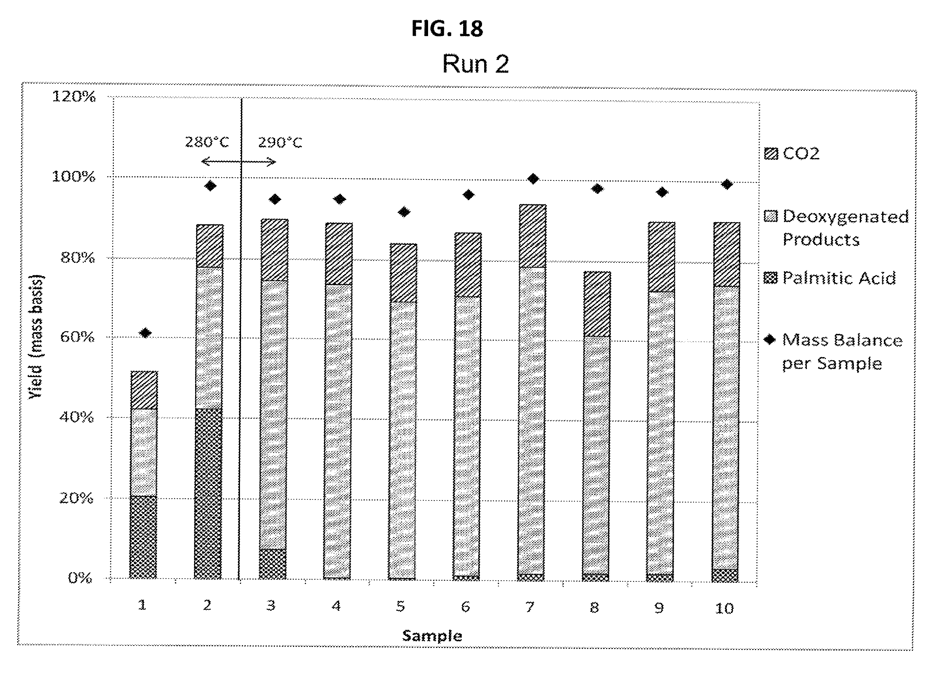

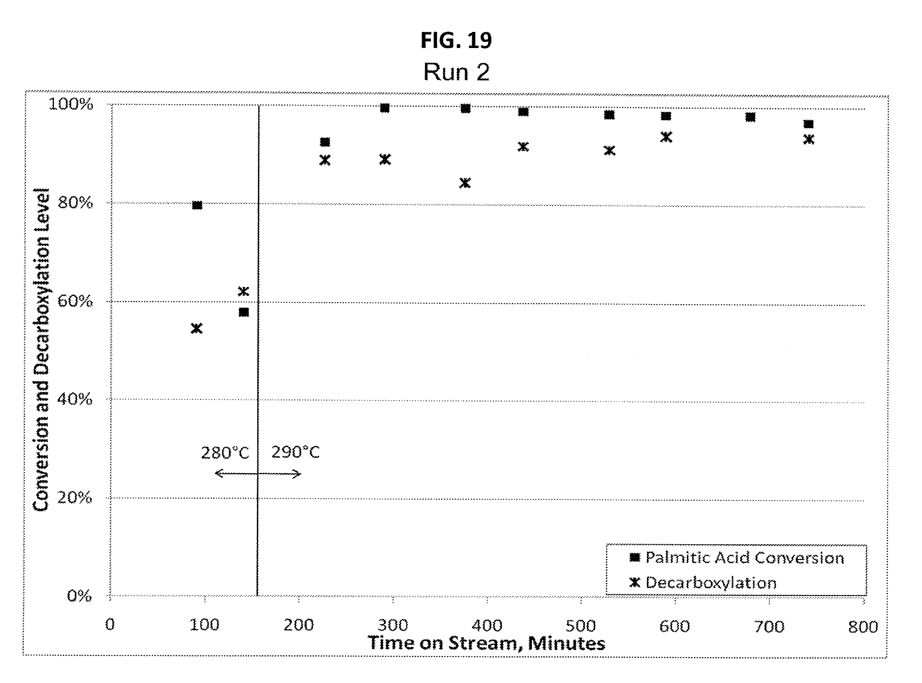

The results of Run 2 are shown in FIGS. 18 and 19. As illustrated in FIG. 18, as the temperature increased to 290°C, the percent residual palmitic acid dropped to near zero. FIG. 19 demonstrates that percent decarboxylation is closely correlated to percent palmitic acid conversion. Palmitic acid conversion was 90-100% at a temperature of 290°C over a time period of 200-800 minutes TOS.

**Run 3:** Catalyst 1 was used for Run 3, with an oleic acid feed for the first 8 samples, and a palmitic acid feed for the last two samples. The column was purged with 2.5 mL/min N₂ before beginning the oleic acid feed. Because Run 3 was performed after Runs 1-2, some residual palmitic acid remained in the column and is seen in Sample 1. The column was operated at 295°C with WHSV = 0.36 hr⁻¹. Sample acquisition times were 45-100 minutes. At the beginning of Sample 9 acquisition, the feed was switched to palmitic acid, and WHSV = 0.37 hr⁻¹. Ten samples were collected and analyzed.

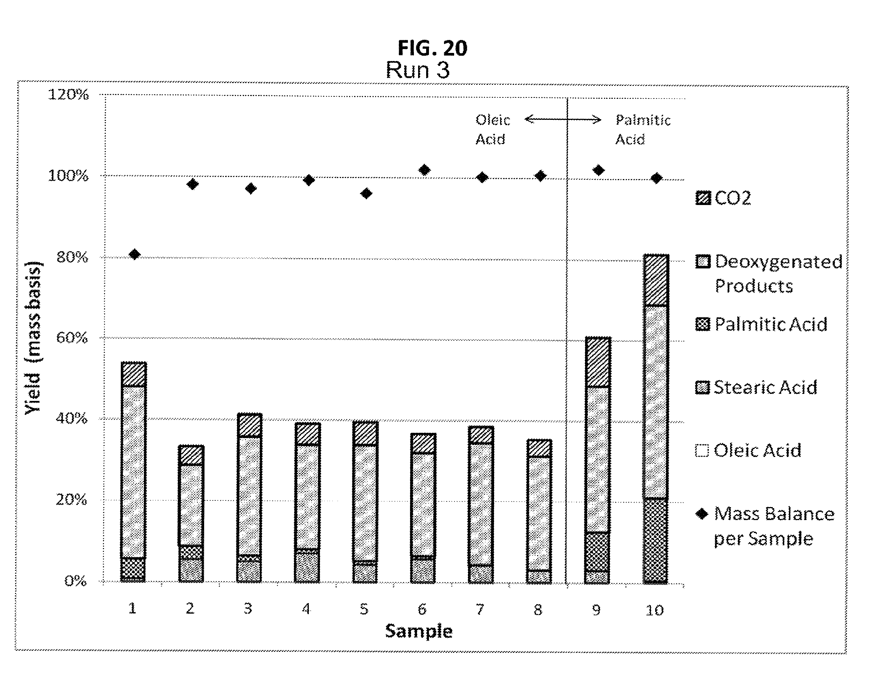

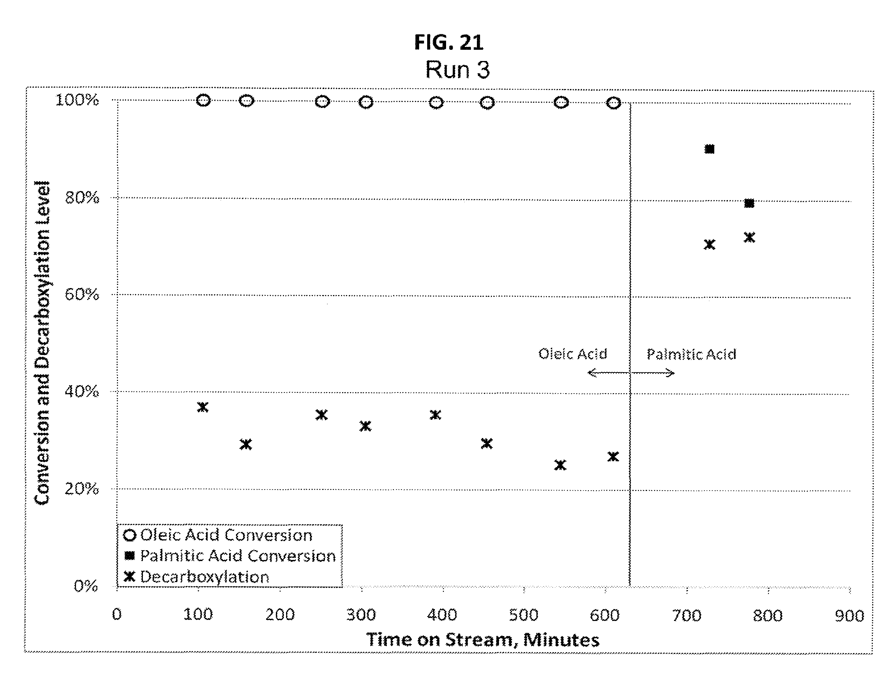

The results of Run 3 are shown in FIGS. 20 and 21. With respect to FIG. 20, exposure of unsaturated oleic acid (18:1) to Catalyst 1 produced a mixture of products, including deoxygenated products (*e.g.,* C17) and saturated stearic acid (18:0). The majority of the products were deoxygenated as expected. However, in addition to decarboxylation, Catalyst 1 has some dehydrogenation ability. Because oleic acid is hydrogen-deficient, any dehydrogenation of oleic acid molecules resulting from exposure to Catalyst 1 can result in hydrogenation of other oleic acid molecules, producing some stearic acid. Some residual palmitic acid also was seen in Samples 1-6.

It was observed that the products for Samples 1-8, including CO₂, totaled only 30-50% of the mass balance. Catalyst 1 is a somewhat acidic catalyst and can cause alkylation reactions as well as decarboxylation when unsaturated fatty acids are used. Thus, the catalyst alkylates a significant portion of the oleic acid molecules, forming heavier products, *e.g.,* C36, C54, etc., which are too heavy for GC-FID analysis.

FIG. 21 shows that substantially 100% of the oleic acid was converted over a time period of 600 minutes TOS. However, decarboxylation was 20-40%, providing further indication that a significant percentage of the unsaturated oleic acid was alkylated by the catalyst instead, thereby undergoing dimerization or oligomerization. When the feed was switched to saturated palmitic acid, decarboxylation and percent conversion were again closely correlated.

**Run 4:** Catalyst 1 was used for Run 4, with a palmitic acid feed. The column was operated at 295°C with WHSV = 0.37 hr⁻¹. The column was initially purged with 2.5 mL/min N₂, but the purge gas was switched to 3.5 mL/min 92% Ar / 8% H₂ mix at the beginning of Sample 7 acquisition. Ten samples were collected with sample acquisition times of 50-85 minutes.

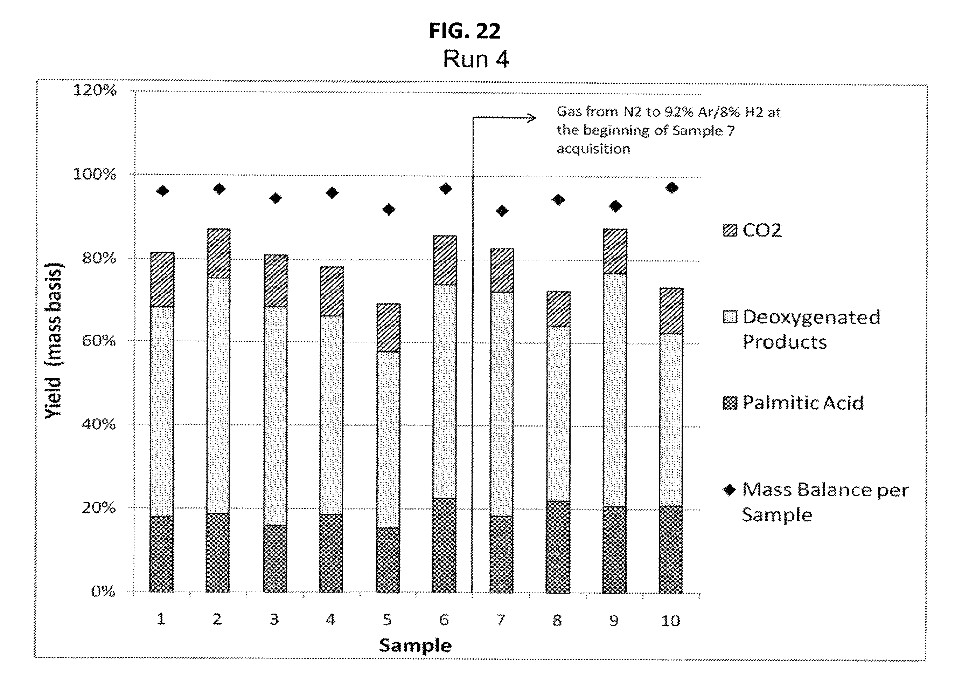

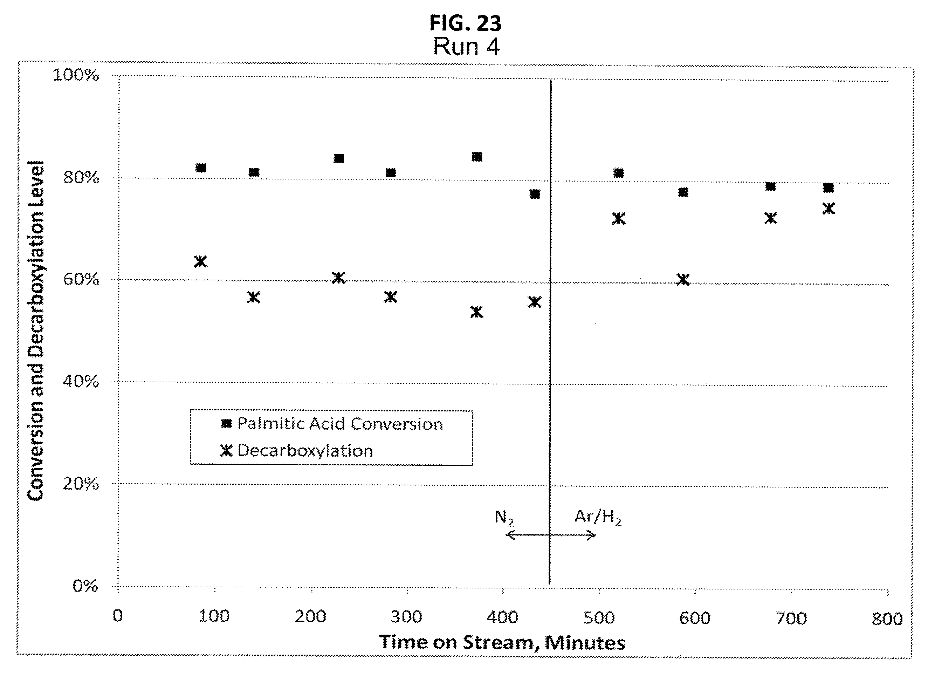

The results of Run 4 are shown in FIGS. 22 and 23. FIG. 22 shows that palmitic acid conversion remained fairly steady at near 80% over the time period of 800 minutes TOS. FIG. 23 shows that conversion of palmitic acid remained consistent at approximately 80% for up to 800 minutes TOS. Decarboxylation remained close to 60%, but increased somewhat when the gas flow was switched to Ar/H₂.

**Run 5:** Catalyst 1 was used for Run 5 with an oleic acid feed for the first 12 samples, and a palmitic acid feed for the last two samples. The column was operated at 295°C with WHSV = 0.36 h⁻¹ for oleic acid and 0.37 hr⁻¹ for palmitic acid. The column was purged with 3.5 mL/min of 92% Ar / 8% H₂ for Samples 1-8, and 2.5 mL/min N₂ for Samples 9-14. Sample acquisition times were 50-85 minutes.

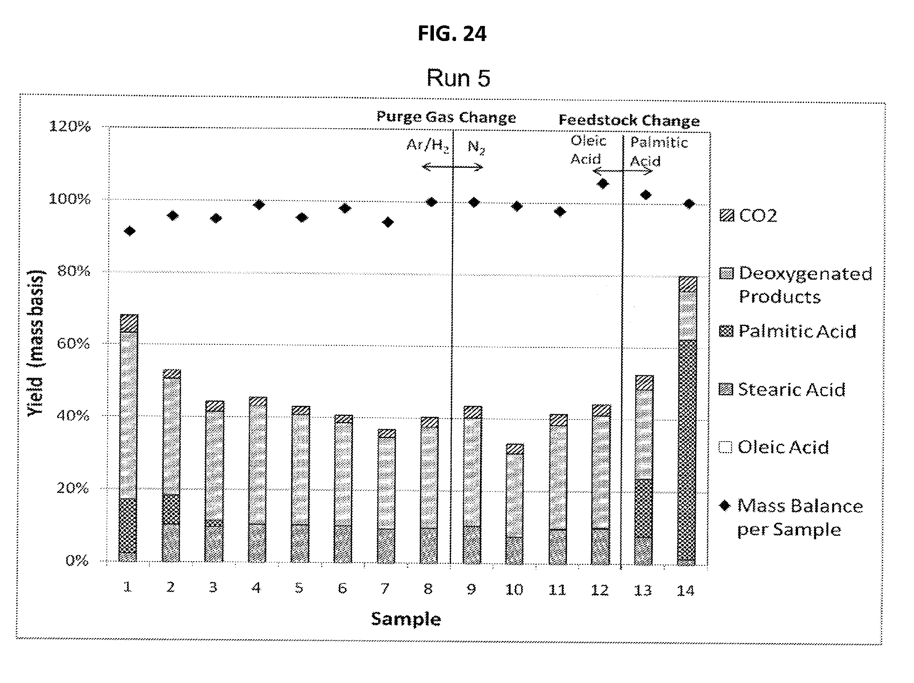

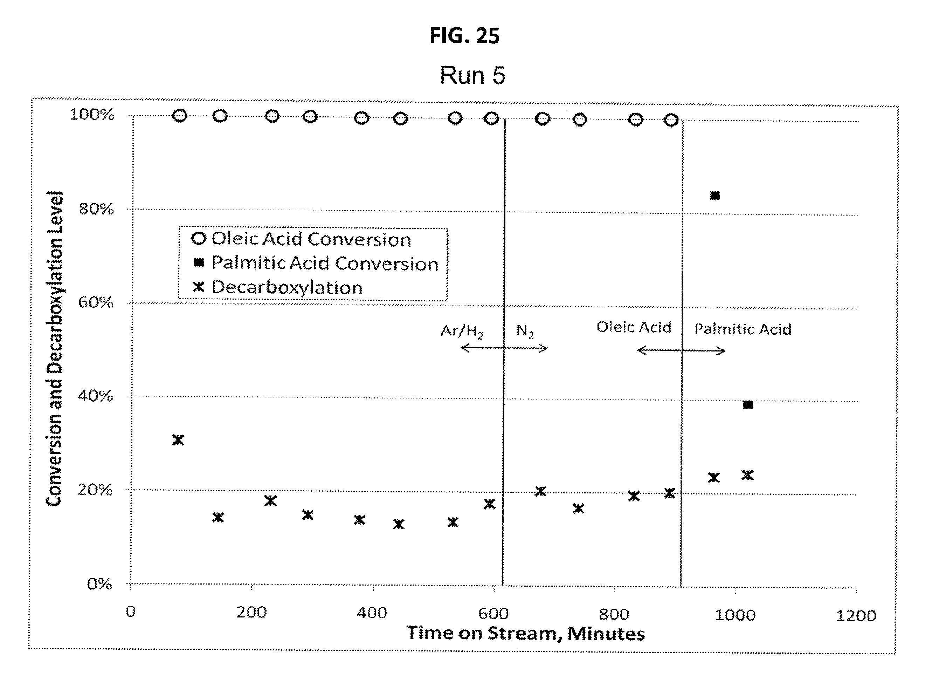

The results of Run 5 are shown in FIGS. 24 and 25. Similar to Run 3, a significant percentage of oleic acid in Samples 1-12 was alkylated and is not reflected in the yields shown in FIG. 24. FIG. 24 also shows that there was little difference in the products produced when the purge gas was Ar/H₂ compared to when the purge gas was N₂. The palmitic acid seen in samples 1-3 is attributed to residual palmitic acid from an earlier run on the column. FIG. 25 demonstrates that about 10-20% of the oleic acid feed was decarboxylated with the yield remaining fairly steady for up to 900 minutes TOS, with about 30% decarboxylation in Sample 1.

### Catalyst 2 Analysis:

Catalyst 2 was used for Run 6. An up-flow, 6 cm³ column was packed with 12.63 g of Catalyst 2. The temperature was initially 290°C, and was increased incrementally to 350°C. The column was operated at WHSV = 0.34 hr⁻¹ (0.9 mL/min.). The column was purged with 2.5 mL/min N₂ for Samples 1-8, with no purge for Samples 9-33. A feed stock of 50/50 (w/w) oleic acid and palmitic acid was used for Samples 1-26. The feedstock was changed to palmitic acid at the beginning of Sample 27 acquisition (after 287 hours time-on-stream). The column was run for a total of 367 hours time-on-stream, with samples collected typically every 9-15 hours.

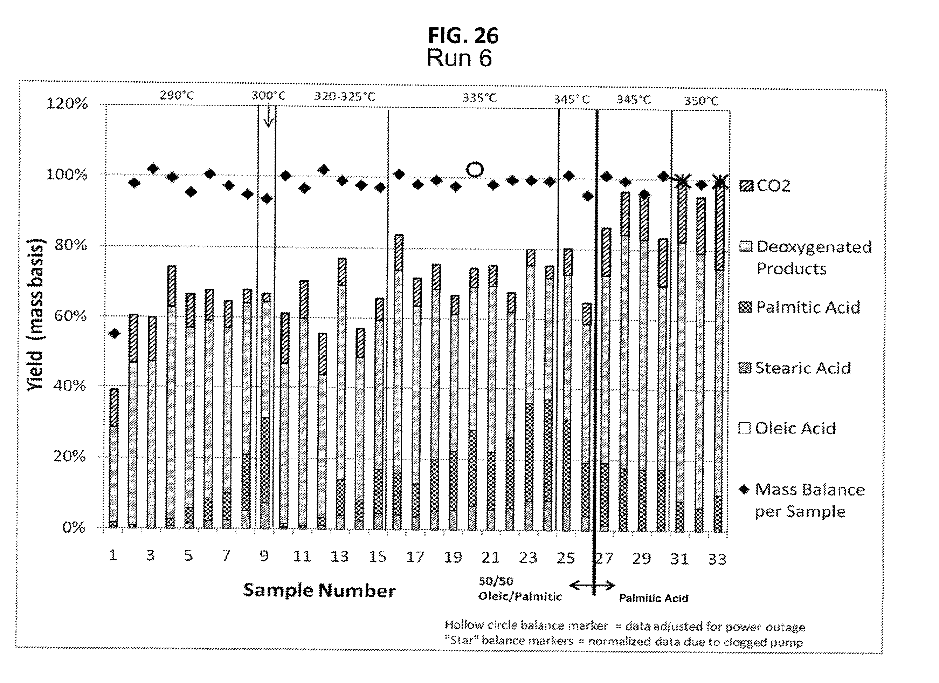

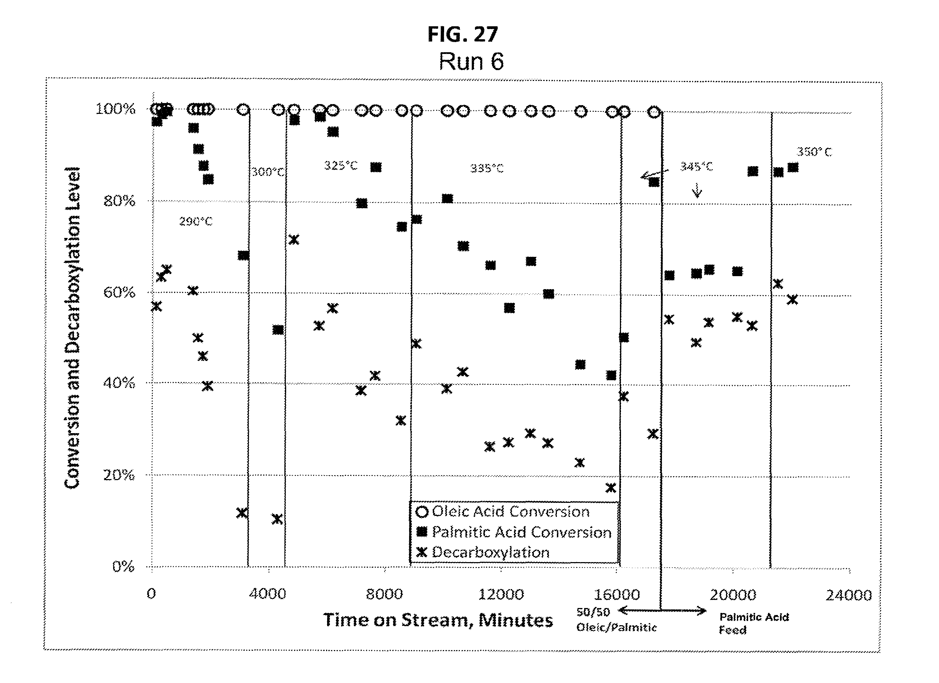

The results of Run 6 are shown in FIGS. 26-27. FIG. 26 illustrates the products formed when palmitic acid and oleic acid were exposed to the catalyst. FIG. 27 shows the percent conversion of each fatty acid and the overall percent decarboxylation as a function of time. Oleic acid was 100% converted over the course of about 17,000 minutes TOS. Consistent with earlier runs, however, the oleic acid was not completely decarboxylated and a significant percentage was alkylated to higher molecular weight products. Palmitic acid conversion was initially near 100% but decreased with time. Increasing the temperature initially increased palmitic acid conversion, but it again decreased with time. After the feed was switched from the oleic acid/palmitic acid mixture to palmitic acid, the percent palmitic acid conversion increased with time. The overall material balances were near 100%, but 30-40% of the products were unaccounted for in the GC-FID analysis; presumably these were heavy products that were not detectable by GC. When the feed was mixed, the stearic acid yield increased as catalyst decarboxylation activity decreased. After switching the feed to palmitic acid alone, the decarboxylation rate appeared steady at 345°C. The material balances and product yields were in good agreement, with nearly 100% of the products detected by GC-FID.

The gases produced by the reaction were quantified and are shown in Table 6. Gas concentrations remained consistent within each feedstock, while the total gas flow varied proportionally with the decarboxylation rate.

**Table 6**

| Gas Component | 50/50 Oleic/Palmitic Acid %(v/v) | Palmitic Acid %(v/v) |
|---|---|---|
| Propane | 0.7 | 1.3 |
| Isobutane | Trace | Trace |
| N-butane | 0.4 | 0.7 |
| H₂ | 11.7 | 18.8 |
| CO₂ | 83.0 | 69.1 |
| Ethane | 0.9 | Trace |
| CH₄ | 1.5 | 1.1 |
| CO | 1.8 | 9.0 |

### Catalyst 13 Analysis:

Catalyst 13 was evaluated for its ability to deoxygenate a stearic acid and palmitic acid mixture that was nominally 50/50 by weight in Run 7. An up-flow reactor with a nominal volume of 6 cm³ was packed with 15.94 g of Catalyst 13. The temperature was monitored by a thermocouple placed at the outlet of the catalyst bed; the temperature reported is the reading at the exit of the reactor bed. The reactor was brought to an initial temperature of 280°C. The column was initially purged with 2.5 mL/min of N₂. The N₂ remained on at 2.5 mL/min for the duration of the experiment. The feed was started with a nominal WHSV of 0.36 hr⁻¹. Ten samples were collected with collection times ranging from 3 to 16 hr. The reactor temperature was then increased to 310°C. Samples 11 through 22 were then collected with collection times ranging from 8 to 16 hr. The reactor temperature was increased at the beginning of Sample 23 to 330°C. Sample 23 had an acquisition time of 3 hr. At the culmination of Sample 23, the feed was stopped and the reactor was offline for 214 hr. During the time that the reactor was offline, the catalyst bed was kept at 100°C and the N₂ purge was flowing. After the 214 hr offline period, the reactor temperature was again increased to 330°C and the time-on-stream count started again. Samples 24 through 32 were collected with collection times ranging from 8 to 17 hr. The reactor temperature was then increased to 340°C. Samples 33 through 35 were collected with collection times ranging from 9 to 15 hr. After collecting Sample 35, the WHSV was decreased to 0.31 hr⁻¹. Samples 36 to 39 were collected with collection times ranging from 9 to 15 hr.

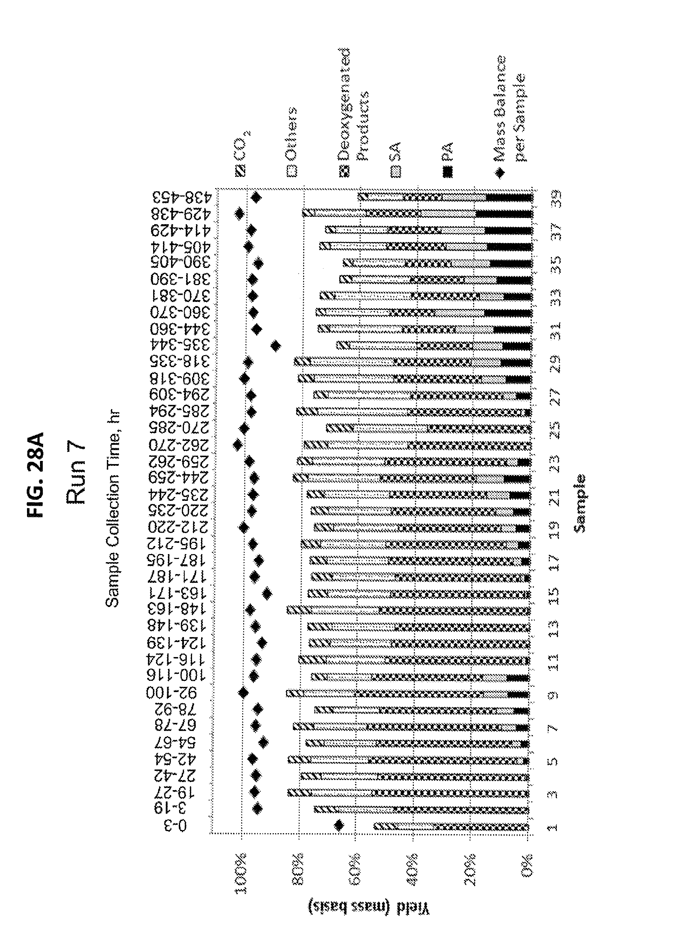

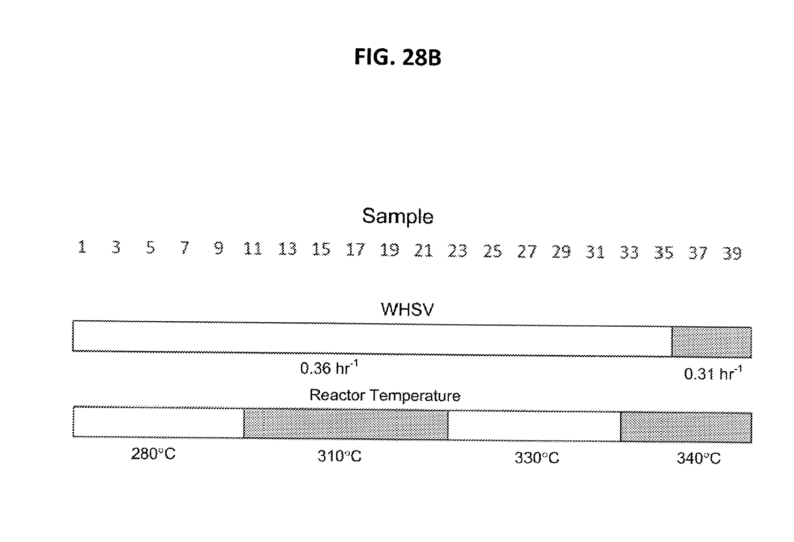

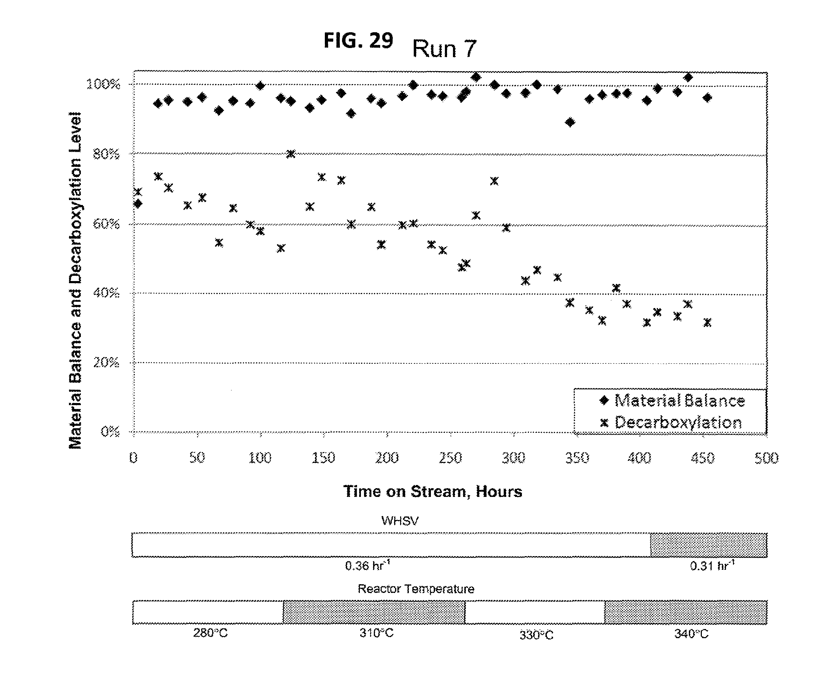

Liquid samples were analyzed using GC and a derivatization technique similar to the technique used in Example 1. Additionally, the gas effluent was also sampled and analyzed with GC. These results are illustrated in FIGS. 28a-b and 29 and Table 7. FIGS. 28a-b illustrate that at a given reactor temperature, the catalyst slowly deactivated such that palmitic acid and stearic acid eventually appeared in the liquid samples due to decreasing conversion. Raising the temperature of the reactor resulted in increased palmitic and stearic acid conversion as well as a greater yield of deoxygenated products (e.g. pentadecane and septadecane). FIG. 29 shows that raising the temperature resulted in higher decarboxylation rates to deoxygenated products. Table 6 shows the average gas composition of several samples at 330°C and 340°C.

**Table 7**

| Reactor Gas Effluent Concentrations, vol%^{a} | | |
|---|---|---|
| Feed | 50/50 Palmitic/Stearic | 50/50 Palmitic/Stearic |
| Temp, °C | 330 | 340 |
| H₂ | 29 | 36 |
| CO | 10 | 8 |
| CO₂ | 60 | 54 |
| Light Alkanes | 1 | 3 |

| | | |
|---|---|---|
| ^{a}N₂ concentration present from the carrier gas has been omitted and the results normalized. | | |

### Example 3

### Platinum/Carbon Catalysts

### Catalyst synthesis:

**Catalyst 1 (5 wt% Pt and 0.5 wt% Sn on C):** A catalyst was prepared with 5 wt% Pt and 0.5 wt% Sn on an engineered carbon support (Hyperion Catalysis International, Inc., Cambridge, MA). The Pt and Sn were impregnated simultaneously. First, the calculated amount of SnCl₂•2H₂O to give the desired percentage of tin (0.5 wt%) on the catalyst was dissolved in a sufficient amount of HCl to prevent precipitation. The concentration of HCl is not critical, but is sufficient to solubilize the SnCl₂•2H₂O. To this solution, the calculated amount of chloroplatinic acid was added to give the desired percentage of platinum (5 wt%) on the catalyst. The solution was then diluted with an appropriate amount of deionized water such that the solution volume would cause the support to reach incipient wetness upon impregnation. The solution was then added to the support. The catalyst was then dried in an oven set to 120°C. Next, the catalyst was heated to 300°C at 5°C/min in flowing nitrogen for batch testing or helium for flow testing. When 300°C was reached, the gas flow was changed to 100% hydrogen for batch testing or a mixture of 8% H₂ in He for flow testing. The temperature ramp was continued to 500°C and then held at 500°C for 2-3 hr. The catalyst was then cooled to room temperature under flowing hydrogen or 8% H₂/He gas mixture. When the catalyst was returned to room temperature, the catalyst was passivated with 2 vol% air in He. Immediately prior to usage, the catalyst was activated by reduction in a flowing stream of pure hydrogen for 2 hours for batch testing or 8% H₂ in Ar overnight for flow testing at 150°C.

**Catalyst 2 (5 wt% Pt and 0.5 wt% Ge on C):** A catalyst was prepared with 5 wt% Pt and 0.5 wt% Ge on an engineered carbon support (Norit^{®} ROX 0.8, Norit Americas Inc., Marshall, TX). The Pt and Ge were impregnated simultaneously. First, the calculated amount of GeCl₄ to give 0.5 wt% Ge on the catalyst was dissolved in a sufficient concentration of HCl to prevent precipitation. To this solution, chloroplatinic acid was added to give 5 wt% platinum on the catalyst. The solution was then diluted with an appropriate amount of concentrated HCl such that the solution volume would cause the support to reach incipient wetness upon impregnation. The solution was then added to the support and then dried at 120°C in air. The catalyst was calcined, reduced, and activated before use or testing as described above for batch testing.

**Catalyst 3 (5 wt% Pt on C):** A catalyst was prepared with 5 wt% Pt on an engineered Norit^{®} ROX 0.8 carbon support. Platinum ethanolamine (Pt-A) was used as the catalyst precursor. The Pt-A solution volume calculated to result in 5 wt% Pt on the catalyst was diluted with deionized water such that the solution would cause the carbon support to reach incipient wetness upon adding all of the impregnation solution. The catalyst was then dried at room temperature for 15 minutes, followed by hot air drying for 15 minutes, and finally dried at 120°C overnight. The catalyst was calcined, reduced, and then activated before use or testing as earlier described for batch testing.

**Catalyst 4 (5 wt% Pt and 0.5 wt% Ge on C):** A 5% Pt / 0.5% Ge catalyst was prepared using a previously prepared 5% Pt on an engineered Hyperion carbon support. A solution of GeCl₄ in an amount sufficient to give 0.5 wt% Ge on the catalyst was prepared in anhydrous ethanol of sufficient volume to reach incipient wetness of the catalyst support. The ethanolic GeCl₄ solution was added to the catalyst until the incipient wetness point of the catalyst was reached. The catalyst was then dried in an oven set to 120°C. A sample of the dried catalyst was calcined and reduced as previously described for batch testing. Prior to use the catalyst was activated as described for batch testing.

**Catalyst 5 (5 wt% Pt and 0.5 wt% Sn on C):** A 5% Pt / 0.5% Sn catalyst was prepared using a previously prepared 5% Pt on an engineered Hyperion carbon support. A solution of SnCl₂•2H₂O in an amount sufficient to give 0.5 wt% Sn on the catalyst was prepared with a sufficient amount of 6M HCl to prevent precipitation. The impregnation solution was then diluted with HCl (2-6M) to a volume such that upon addition of the solution the incipient wetness point of the catalyst was reached. The catalyst was then dried at in an oven set to 120°C. A sample of the catalyst was calcined and reduced under the same conditions as described for the batch testing. Prior to use the catalyst was activated as previously described for batch testing.

### Catalyst Analysis:

Catalyst 1 was evaluated for its ability to decarboxylate oleic acid as well as a linoleic acid/oleic acid mixture in Run 8. An up-flow reactor with a nominal volume of 6 cm³ was packed with 2.90 g of Catalyst 1. For this experiment, the temperature was monitored by a thermocouple placed into the aluminum block encompassing the reactor tube. Additionally, the temperature of an aluminum block encompassing the feed pre-heater was also monitored. The pre-heater block and reactor block were brought to an initial temperature of 260°C and 328°C, respectively. The column was purged with 2.5 mL/min of N₂ before beginning the oleic acid feed. The N₂ remained on at 2.5 mL/min for the duration of the experiment. The initial WHSV was 2.0 hr⁻¹. Samples 1 and 2 were then taken, each with a collection time of 3 hr. The WHSV was then decreased to 1.7 hr⁻¹. Sample 3 was drawn after a collection time of 12 hr. Next, the pre-heater block temperature was decreased to 54°C and the reactor block temperature was increased to 352°C. Samples 4-7 were subsequently collected with collection times ranging from 4 to 17 hrs. After Sample 7 was collected, the WHSV was decreased to 1.4 hr⁻¹. Samples 8-10 were then collected with collection times ranging from 6 to 17 hr. After Sample 10 was collected, the reactor block temperature was increased to 372°C. Samples 11-19 were then collected, with collection times ranging from 5 to 15 hr. The pre-heater block temperature was then increased from 62°C to 75°C. Sample 20 was collected after 8 hr. The WHSV was then decreased to 1.0 hr⁻¹. Sample 21 was collected after 19 hr. The pre-heater block temperature was then increased to 75°C. Sample 22 was drawn after 26 hr. The pre-heater block temperature was then decreased to 70°C. Samples 23 through 31 were drawn with collection times ranging from 22 to 26 hr. At the beginning of the collection of Sample 32, linoleic acid was added to the oleic acid feed such that the nominal composition of the feed was 50/50 by weight. Sample 32 was then collected after 24 hr. Samples 1-32 were analyzed via GC with a derivatization method similar to that in Example 1. Additionally, the gas phase effluent from the reactor was analyzed with GC.

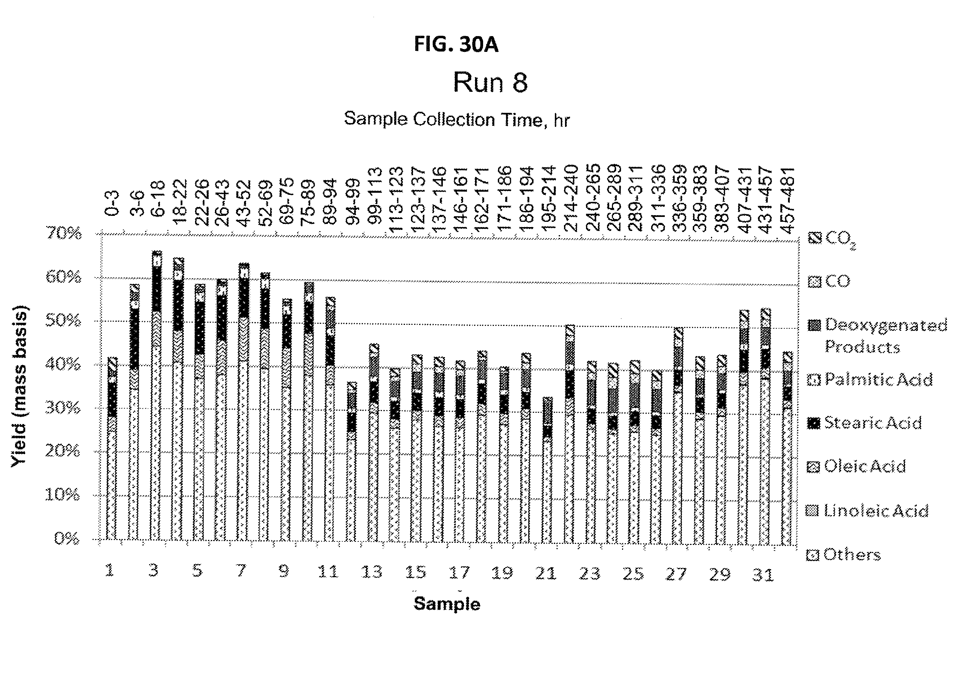

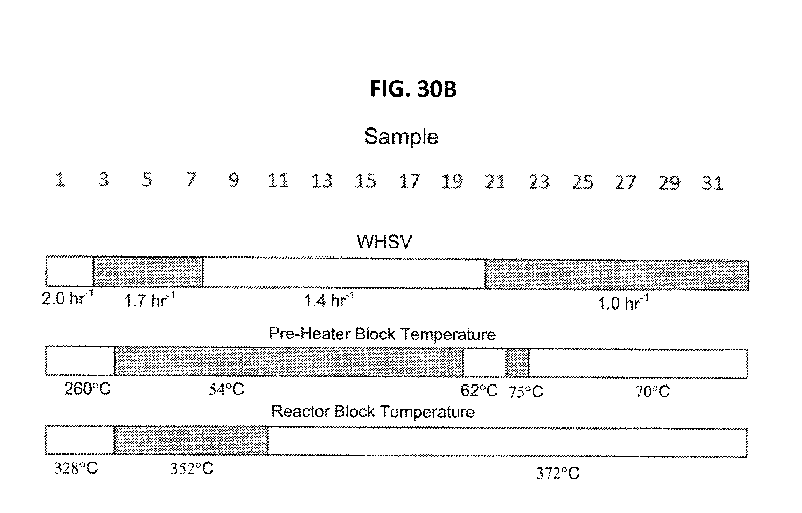

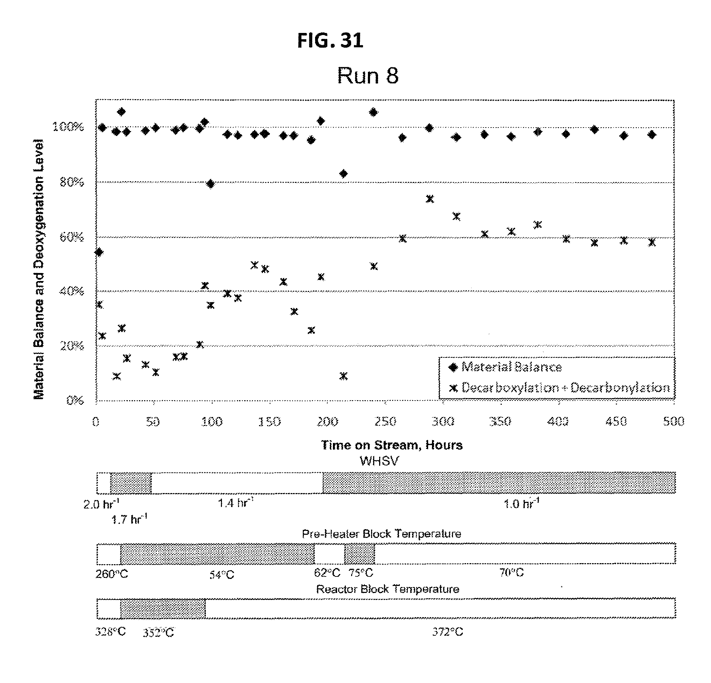

The results of Run 8 are presented in FIGS. 30 and 31 as well as Table 8. As shown in FIGS. 30a-b, a large yield of "Others" was observed in the liquid products. The "Others" category includes, but is not limited to, cracking products, aromatics and branched products of the oleic acid feed. FIGS. 30a-b also show that decreasing the WHSV and pre-heater block temperature and increasing the reactor block temperature resulted in a higher yield of deoxygenated products as well as greater conversion of oleic acid. The results for Sample 32 in FIG. 30a reveal that all of the linoleic acid fed was converted. FIG. 31 gives the combined level of decarboxylation and decarbonylation since CO and CO₂ were observed as major gaseous products. FIG. 31 reveals that the combined level of decarboxylation and decarbonylation remained reasonably steady between approximately 300 and 500 hr time-on-stream. Table 7 reveals the average gas composition of Samples 26-31.

**Table 8**

| Reactor Gas Effluent Concentrations, vol% | | |
|---|---|---|
| Feed | Oleic Acid | 50/50 Oleic Acid/Linoleic Acid |
| Sample Number | 26-31* | 32 |
| H₂ | 14 | 13 |
| CO | 22 | 22 |
| CO₂ | 20 | 19 |
| N₂ | 42 | 42 |
| Light Alkanes | 2 | 4 |

| | | |
|---|---|---|
| *The average concentrations of the samples. | | |

### Examples 4-15

**Catalyst Preparation:** Catalysts tested were largely prepared on a small batch scale (about 500 mg). Catalysts on engineered supports were generally ground to a 30-100 mesh size before addition to the catalyst screening plate. Powder catalysts were tested as received.

Most catalysts tested were prepared with liquid handling robotics employing incipient wetness impregnation techniques. The aqueous pore volume of the catalyst supports was initially determined gravimetrically in order to determine the amount of impregnation liquid to saturate the supports. The supports were added to quartz vials and placed in a vertical shaker, which allowed the supports to be agitated during impregnation. Depending on the desired concentration of metal loadings, impregnation of the supports was carried out in a one-step or two-step process. Catalysts with higher metal concentrations were prepared in a two-step impregnation that required drying while agitating under a heat lamp overnight in between impregnation steps.

Pt-ethanolamine (Pt-A) was prepared by mixing H₂Pt(OH)₆ with ethanolamine at a 1:2 Pt:ethanolamine molar ratio. Water was added such that the solution contained 7 wt% Pt. The solution was then stirred at room temperature for 24 hr.

Pt(NO₃)₂, [Pt(NH₃)₄](NO₃)₂, chloroplatinic acid (CPA), IrCl₃, Ir-acetate, Mo(NO₃)₃, and Co(NO₃)₂ were obtained from commercial sources. Aqueous solutions of the metal salts were used for impregnation.

Several catalysts were prepared with platinum, a support, and an additional component comprising a transition metal, a transition metal oxide, a non-transition metal, or a combination thereof. Depending on the catalyst, additional components were added either before or after a separate Pt impregnation step. The salts and the impregnation media used to prepare catalysts are listed in Table 9.

Catalysts with Sn or Ge were prepared by hand because of the ability of these metals to hydrolyze and form insoluble oxides. Pt catalysts with tin were prepared by co-impregnating 1 wt% Pt (CPA) with 0.5% Sn onto the supports. First, SnCl₂ was dissolved in a few drops of concentrated HCl. Next, water was added to near the appropriate volume for the incipient wetness technique for the given support. Finally, CPA was added to the impregnation solution such that the addition of the CPA resulted in the correct volume for impregnation as well as for production of a catalyst with 1 wt% Pt. The supports were then impregnated with the Pt/Sn impregnation solution. After drying, the Pt/Sn catalysts were reduced at 450°C for 2 hr in flowing H₂.

**Table 9**

| **Element** | **Salt and Impregnation Medium** |
|---|---|
| W | Ammonium tungstate in water |
| Mn | Manganese nitrate in dilute nitric acid |
| Fe | Iron(III) nitrate nonahydrate in water |
| Ni | Nickel nitrate in water |
| Zn | Zinc nitrate in water |
| Mg | Magnesium nitrate in water |
| Cu | Cupric nitrate in water |
| Ge | Ge(IV) chloride in ethanol |
| Sn | Sn(II) chloride in concentrated HCl |

Pt catalysts with germanium were prepared by sequentially impregnating 1 wt% Pt (CPA) onto the supports followed by GeCl₄ impregnation. First, CPA was diluted in ethanol to the appropriate volume and impregnated onto the catalyst. After CPA impregnation, the catalyst supports were dried at room temperature for 2 hr followed by drying at 85°C under vacuum for several hours. Next, GeCl₄ was diluted to the appropriate volume for incipient wetness with ethanol and impregnated onto the catalysts rapidly to minimize hydrolysis of the GeCl₄. After drying, the catalysts were reduced at 450°C for 2 hr in flowing H₂.

**High-Throughput Screening:** The screening experiments were carried out using a Freeslate^{®} SPR reactor. The reactor consists of a thick outer metal shell, which encapsulated a metal base plate with 24 316-SS vials. Catalysts (∼60 mg) were added to the vials, followed by the specified amount of substrate. The vials were then sealed under nitrogen in a glove box with a three-layered barrier of Teflon / Kapton / Graphite sandwiched under a rigid cover plate. The Teflon layer was pressed against the vials. The assembled plate with the individually sealed wells was removed from the glove box and loaded into the SPR reactor shell. The reactor headspace was sealed and subsequently purged with nitrogen by pressurizing to 50 psi and depressurizing three times. After purging, the reactor was re-pressurized to 50 psi and the inlet and outlet valves closed. Pressurizing the shared headspace decreased the pressure difference between the inside and outside of the sealed vials at reaction temperature, which likely discouraged leaking of the individual vials. Next, the reactor was heated to 300°C, which was the reaction temperature utilized for all tests. Heat-up took about 50 min. After the specified reaction time, the heat supplied to the reactor was stopped. However, cool down of the reactor back to room temperature took several hours. After cool down (typically overnight), the reactor was vented and the plate was removed from the SPR shell. The vials were weighed to determine mass recovery values.

**Product Derivatization and Analysis:** A liquid handling robot was used for derivatization of the samples. Heptadecanoic acid was used as an internal standard. A solution of about 670 ppm heptadecanoic acid in chloroform (CHCl₃) was prepared separately. Each sample vial was diluted with 3 mL of the chloroform/heptadecanoic acid solution, mixed, and then centrifuged. The liquid handling robot then transferred a 500 µL aliquot from each vial, added 500 µL of N,O-bis(trimethylsilyl) trifluoroacetamide (BSTFA) derivatizing agent and 500 µL of pyridine. The vials were capped and heated to 70°C for 60 min to complete the derivatization reaction.

The derivatized samples were analyzed on an Agilent 6890 gas chromatograph equipped with a DB5-HT column (15m / 0.25 mm ID / 0.1 µm FT). The temperature ramp included an 80°C starting temperature, with a 15°C/min ramp to 350°C and a 20 min hold, with a H₂ flow of 1.0 mL/min. The injector was kept at 340°C, with a 1 µL injection volume and a 150:1 split. The FID detector was held at 350°C and 30 ml/min He makeup gas, 40 mL/min H₂ flow, and 400 mL/min air flow were used. Product quantification utilized response factors determined from an external calibration method. The external calibration was performed using reference compounds of known concentration. The reference compounds included heptadecane, stearic acid, oleic acid, and linoleic acid obtained from Nu-Chek Prep, Inc. A mass spectrometer was used to assist in product identification of products that were not calibrated. Many of the products not calibrated for were only identified by class and molecular weight, and FID response factors were estimated for these products using values of similar compounds.

### Example 4

### Pt with Mn and/or Fe on Niobia and Zirconia Supports

Initial results identified a 0.7 wt% Pt/12 wt% WO₃/ZrO₂ catalyst with high activity for the selective decarboxylation of saturated fatty acids. Thus, further investigation of catalysts similar to the Pt/WO₃/ZrO₂ catalyst was performed. Namely, Plate 1 tested permutations of Pt on niobia and zirconia supports with Mn and/or Fe. The Mn and Fe were added such that the concentrations of Fe and Mn were equimolar with 9.5% W (which is identical to 12% WO₃). The concentration of Pt was also varied on selected catalysts between 0.5 and 1.5 wt%.

Mn and/or Fe was added to dried supports, dried, and subsequently calcined at 850°C for 2 hr in air. Next, Pt was added via a Pt-ethanolamine (Pt-A) precursor. After Pt addition, the catalysts were dried, and calcined again at 450°C for 2 hr in air. Stearic acid was used as the substrate in all wells on Plate 1 with 120 mg of substrate added to 60 mg of catalyst. The reaction was carried out at 300°C for 4 hr. The catalysts tested on Plate 1 are illustrated in Table 10.

**Table 10**

| Catalysts tested on Plate 1 | | | | | |
|---|---|---|---|---|---|
| 1% Pt (Pt-A) 1.5% Fe NorPro^{®} SZ31164 ZrO₂ | 1% Pt (Pt-A) 2.9% Fe NorPro^{®} SZ31164 ZrO₂ | 1% Pt (Pt-A) 5.8% Fe NorPro^{®} SZ31164 ZrO₂ | 1% Pt (Pt-A) 1.4% Mn NorPro^{®} SZ31164 ZrO₂ | 1% Pt (Pt-A) 2.8% Mn NorPro^{®} SZ31164 ZrO₂ | 1% Pt (Pt-A) 5.7% Mn NorPro^{®} SZ31164 ZrO₂ |
| 1% Pt (Pt-A) 1.5% Fe Engelhard 6518-43-11 NbO₂ | 1% Pt (Pt-A) 2.9% Fe Engelhard 6518-43-11 NbO₂ | 1% Pt (Pt-A) 5.8% Fe Engelhard 6518-43-11 NbO₂ | 1% Pt (Pt-A) 1.4% Mn Engelhard 6518-43-11 NbO₂ | 1% Pt (Pt-A) 2.8% Mn Engelhard 6518-43-11 NbO₂ | 1% Pt (Pt-A) 5.7% Mn Engelhard 6518-43-11 NbrO₂ |
| 0.5% Pt (Pt-A) 2.9% Fe NorPro^{®} SZ31164 ZrO₂ | 1.5% Pt (Pt-A)-2.9% Fe NorPro^{®} SZ31164 ZrO₂ | 0.5% Pt (Pt-A) 2.8% Mn NorPro^{®} SZ31164 ZrO₂ | 1.5% Pt (Pt-A) 2.8% Mn NorPro^{®} SZ31164 ZrO₂ | 1% Pt (Pt-A) NorPro^{®} SZ31164 ZrO₂ | 1% Pt (Pt-A) Engelhard 6518-43-11 NbO₂ |
| 0.5% Pt (Pt-A) 2.9% Fe Engelhard 6518-43-11 NbO₂ | Engelhard 1.5% Pt (Pt-A)-2.9% Fe 6518-43-11 NbO₂ | 0.5% Pt (Pt-A) 2.8% Mn Engelhard 6518-43-11 NbO₂ | NorPro^{®} 1% Pt (Pt-A) 12% WO₃ SZ31164 ZrO₂ (Instrument Prepped) | 1% Pt (Pt-A) 12% WO₃ NorPro^{®} SZ31164 ZrO₂ (Hand Prepped) 14999-95-1 | Feed Only |

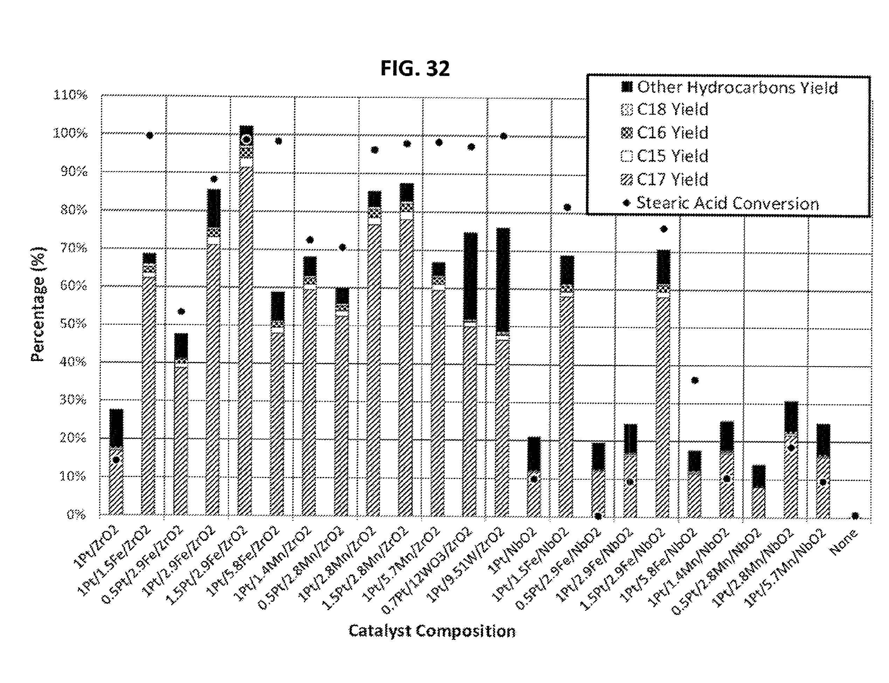

The Plate 1 catalyst screening results are illustrated in FIG. 32. Mn and Fe appeared to be excellent additions to Pt/ZrO₂ catalysts that exhibited decarboxylation activity on par with tungstated Pt/ZrO₂. No consistent effect was observed when NbO₂ was utilized as the support. However, similar C₁₇ yields were observed when 1% Pt was loaded onto ZrO₂ or NbO₂. Therefore, there was likely an interaction that occurred between the Fe and Mn and the ZrO₂ support that did not occur with the NbO₂ support.

The data from Plate 1 focused attention on the ZrO₂ and eliminated the NbO₂ support from further investigation. Furthermore, nearly 100% conversion of the stearic acid in most of the ZrO₂-supported catalyst wells suggested lowering the reaction time from 4 hr to 3 hr at 300°C in future plates. The shorter reaction time was suggested to reduce high substrate conversion such that differences in the conversion levels of the active catalysts could be readily identified.

### Example 5

### Effect of Fe and/or Mn and Pt Concentrations on Zirconia Support

Plate 2 was designed to further investigate the effect of Fe and Mn on the NorPro^{®} SZ 31164 ZrO₂ support. Several wells on Plate 2 were dedicated to retesting Fe- and Mn-containing catalysts that had exhibited near complete substrate conversion in Plate 1. Other wells were dedicated to testing concentrations of Fe or Mn added to the ZrO₂ support at levels intermediate to those tested on Plate 1. Because Pt is expected to be a contributing factor in the cost of a commercialized catalyst, wells in Plate 2 were also dedicated to investigate the effect of catalysts with lower Pt concentrations. Finally, 4 wells on Plate 2 were used for the screening of Pt/ZrO₂ catalysts with added Cu, Zn, Ni or Mg.

The catalysts tested on Plate 2 are illustrated in the matrix in Table 11. Dried ZrO₂ supports were impregnated with Fe or Mn and subsequently calcined at 850°C for 2 hr in air. Fe and Mn were added such that the concentration of metal was equimolar with 9.5% W. Next, Pt was loaded onto the catalysts with a Pt-A precursor, dried, and calcined at 450°C for 2 hr. Stearic acid was used as the substrate in all wells on Plate 2 with 120 mg of substrate added to 60 mg of catalyst. The reaction was carried out at 300°C for 3 hr.

**Table 11**

| Catalysts tested on Plate 2 | | | | | |
|---|---|---|---|---|---|
| 1% Pt (Pt-A) 2.9% Fe NorPro^{®} SZ31164 ZrO₂ | 1% Pt (Pt-A) 5.8% Fe NorPro^{®} SZ31164 ZrO₂ | 1.5% Pt (Pt-A) 2.9% Fe NorPro^{®} SZ31164 ZrO₂ | 1% Pt (Pt-A) 2.8% Mn NorPro^{®} SZ31164 ZrO₂ | 1% Pt (Pt-A) 5.7% Mn NorPro^{®} SZ31164 ZrO₂ | 1.5% Pt (Pt-A) 2.8% Mn NorPro^{®} SZ31164 ZrO₂ |
| 1% Pt (Pt-A) 1.5% Fe NorPro^{®} SZ31164 ZrO₂ | 1% Pt (Pt-A) 3.6% Fe NorPro^{®} SZ31164 ZrO₂ | 1% Pt (Pt-A) 2.0% Mn NorPro^{®} SZ31164 ZrO₂ | 1% Pt (Pt-A) 3.6% Mn NorPro^{®} SZ31164 ZrO₂ | 0.4% Pt 2.9% Fe NorPro^{®} SZ31164 ZrO₂ | 0.7% Pt (Pt-A) 2.9% Fe NorPro^{®} SZ31164 ZrO₂ |
| 0.5% Pt (Pt-A) 5.8% Fe NorPro^{®} SZ31164 ZrO₂ | 1% Pt (Pt-A) 3.4% Zn NorPro^{®} SZ31164 ZrO₂ | 1% Pt (Pt-A) 1.3% Mg NorPro^{®} SZ31164 ZrO₂ | 1% Pt (Pt-A) 2.0% Fe NorPro^{®} SZ31164 ZrO₂ | 0.4% Pt (Pt-A) 2.8% Mn NorPro^{®} SZ31164 ZrO₂ | 0.7% Pt (Pt-A) 2.8% Mn NorPro^{®} SZ31164 ZrO₂ |
| 0.5% Pt (Pt-A) 5.7% Mn NorPro^{®} SZ31164 ZrO₂ | 1% Pt (Pt-A) 3.3% Cu NorPro^{®} SZ31164 ZrO₂ | 1% Pt (Pt-A) 3.0% Ni NorPro^{®} SZ31164 ZrO₂ | 1% Pt (Pt-A) 12% WO₃ NorPro^{®} SZ31164 ZrO₂ (Instrument Prepped) | 0.7%Pt (Pt-A) 12% WO₃ NorPro^{®} SZ31164 ZrO₂ (Hand Prepped) 14999-95-1 | Feed Only |

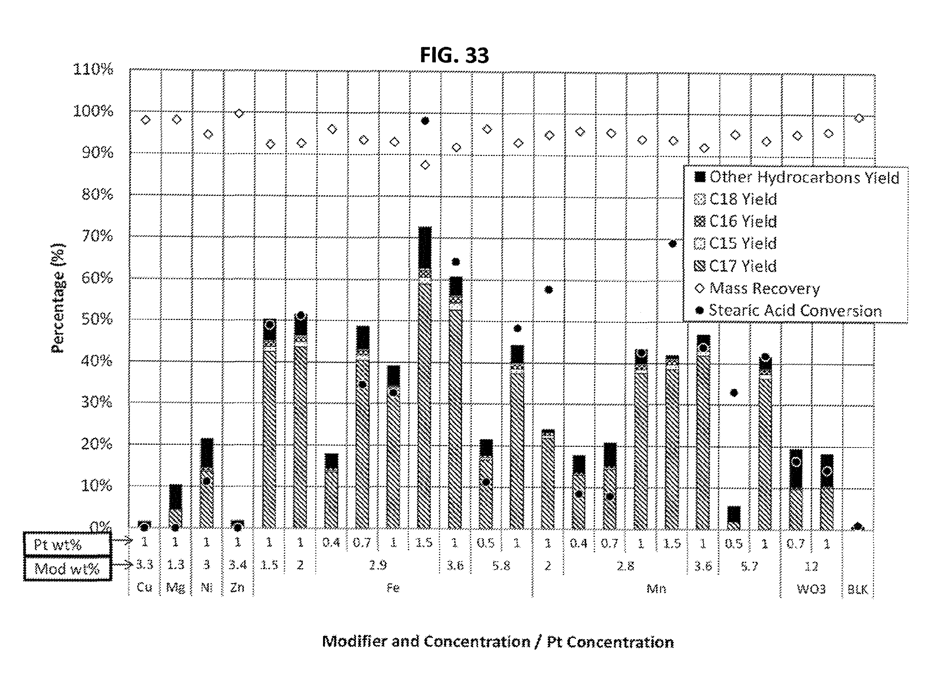

The decarboxylation activity of catalysts tested on Plate 2 can be observed in FIG. 33. Only one catalyst (1.5% Pt/2.9% Fe/ZrO₂) exhibited nearly complete stearic acid conversion. Thus, lowering the reaction time from 4 hr to 3 hr facilitated comparing the more active catalysts. Regarding the Mn and Fe concentrations, no significant beneficial effect was observed by increasing the Mn or Fe concentrations above 2.8 or 2.9 wt%, respectively. Regarding the Pt concentrations, it was observed that concentrations of at least 0.7 wt% Pt on Fe-containing catalysts and 1.0 wt% Pt on Mn-containing catalysts produced an active decarboxylation catalyst. Increasing the concentration of Pt from 1.0 wt% to 1.5 wt% on Fe- or Mn-containing catalysts increased the level of stearic acid conversion but did not always produce greater yields of C₁₇. Thus, greater Pt concentrations may have produced other products not directly identified in the GC method such as isomerized C₁₇. Cu, Mg, Ni and Zn appeared to be inferior to Mn and Fe.

### Example 6

### Screening of Carbon Supports with Platinum and Additional Metals

Plate 3 focused on further screening of carbon supports with additional metals. Most catalysts tested on Plate 3 were prepared using Pt-A as the Pt precursor. Catalysts prepared with Pt-A were calcined at 450°C for 2 hr in flowing N₂ prior to testing on Plate 4.

Various metals were added at 0.5 wt% in addition to 1% Pt. The metals were added to the support in a separate impregnation step prior to the addition of the Pt.

Two catalysts that consisted of 1.5% Pt/0.15% Sn and 5% Pt/0.5% Ge supported on carbon powder (CP) were identified during earlier testing as having high decarboxylation activity. The 1.5% Pt/0.15% Sn/CP catalyst was tested again on Plate 3 to confirm the decarboxylation activity observed during Phase 1 testing. Another catalyst with 5% Pt/0.5% Ge on Hyperion Lot 384-82 was also tested on Plate 3. The 5% Pt/0.5% Ge catalyst was included on Plate 3 as a hand-prepared control catalyst. The Pt/Ge catalyst was prepared with CPA as the catalyst precursor, calcined for 2 hr at 450°C in flowing N₂ and subsequently reduced at 450°C for 2 hr in flowing H₂.

The catalysts tested on Plate 3 are illustrated in the matrix presented in Table 12. Stearic acid was used as the substrate in all wells on Plate 3 with 120 mg of substrate added to 60 mg of catalyst. The reaction was carried out at 300°C for 3 hr.

**Table 12**

| Catalysts tested on Plate 3 | | | | |
|---|---|---|---|---|
| 1% Pt (Pt-A) 0.5% V Hyperion CS-02C-063-XD Lot 384-82 | 1% Pt (Pt-A) 0.5% Ni Hyperion CS-02C-063-XD Lot 384-82 | 1% Pt (Pt-A) 0.5% Fe Hyperion CS-02C-063-XD Lot 384-82 | 1% Pt (Pt-A) 0.5% Mn Hyperion CS-02C-063-XD Lot 384-82 | 1 % Pt (Pt-A) 0.5% W Hyperion CS-02C-063-XD Lot 384-82 |
| 1% Pt (Pt-A) 0.5% Ti Hyperion CS-02C-063-XD Lot 384-82 | Engelhard Commercial Catalyst 1.5% Pt 0.15% Sn Carbon Powder | 5% Pt (CPA) 0.5% Ge Hyp. 395-10 (Hand prepared) 14999-159-1R | 0.7% Pt ZrO₂ (Hand prepared) 14999-95-1 | Feed only |

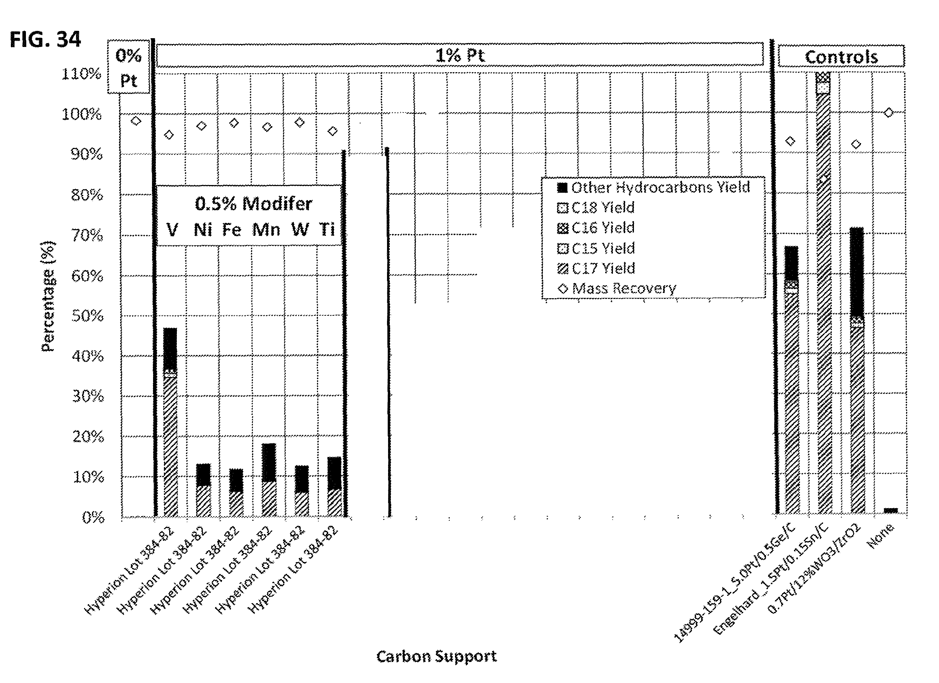

The results of catalyst screening testing on Plate 3 are illustrated in FIG. 34. Due to challenges experienced during the analysis of Plate 3, the conversion of stearic acid was unavailable.

Pt catalysts prepared on the Hyperion 384-82 support and including additional metals had generally similar activities with the exception of vanadium, which had greater activity. With the exception of V, the catalysts with additional metals besides Pt had activities similar to the catalysts without additional metals, which may have been due to Pt covering the additional metals, negating any beneficial effects. Without being bound by any particular theory, it was believed that the addition of the additional metal after the addition of the Pt could produce catalysts with greater decarboxylation activity at the Pt surface. Catalysts prepared by the sequential addition of Pt followed by the additional metal were identified for further investigation in a later screening test.

Finally, Plate 3 testing reaffirmed that the Engelhard Pt/Sn/CP material, which performed well in earlier testing, was again a highly active and selective catalyst for the decarboxylation of stearic acid to C₁₇. However, the Pt/Sn formulation is not currently available on an engineered support and the use of carbon powder (CP) in a fixed bed reactor may not be feasible. The Pt/Ge catalyst supported on Hyperion 384-82 was active for stearic acid decarboxylation, but at a lower level compared with the Engelhard catalyst on CP.

### Example 7

### Pt with Transition Metals on Titania and Zirconia Supports

Plate 4 focused on the screening catalysts comprising titania supports. Additionally, some wells on Plate 4 were dedicated to testing the effect of transition metals on the NorPro^{®} SZ 31164 ZrO₂ support. The transition metals added to the TiO₂ or ZrO₂ were equimolar compared with the W on a catalyst with 12 wt% WO₃. In contrast to previous catalysts, the catalysts tested on Plate 4 were not calcined at 850°C for 2 hr in air after the addition of the transition metals. Rather, catalysts on Plate 4 were impregnated with the transition metal salt solution, dried at 110°C overnight, impregnated with Pt, dried again, and calcined at 450°C for 2 hr in N₂. Pt-A was used as the Pt precursor in all catalysts on Plate 4. The catalysts were calcined at 450°C for 2 hr in air with no further treatment performed prior to testing.

The catalysts tested on Plate 4 are illustrated in the matrix presented in Table 13. Stearic acid was used as the substrate in all wells on Plate 4 with 120 mg of substrate added to 60 mg of catalyst. The reaction was carried out at 300°C for 3 hr.

**Table 13**

| Catalysts tested on Plate 4 | | | | |
|---|---|---|---|---|
| 1% Pt (Pt-A) 2.6% V Evonik^{®} 7711 TiO₂ | 1% Pt (Pt-A) 3.0% Ni Evonik^{®} 7711 TiO₂ | 1% Pt (Pt-A) 2.9% Fe Evonik^{®} 7711 TiO₂ | 1 % Pt (Pt-A) 2.8% Mn Evonik^{®} 7711 TiO₂ | 1 % Pt (Pt-A) 9.5% W Evonik^{®} 7711 TiO₂ |
| 1% Pt (Pt-A) 3.0% Ni NorPro^{®} SZ 31164 ZrO₂ | 1% Pt (Pt-A) 9.5% W NorPro^{®} SZ 31164 ZrO₂ | 1% Pt (Pt-A) 2.9% Fe NorPro^{®} SZ 31164 ZrO₂ | 1% Pt (Pt-A) 2.8% Mn NorPro^{®} SZ 31164 ZrO₂ | 1% Pt (Pt-A) 2.6% V NorPro^{®} SZ 31164 ZrO₂ |
| 1% Pt (Pt-A) 2.9% Fe NorPro^{®} SZ 31164 ZrO₂ (Duplicate; Instrument Prepared) 15000-104-122 | 01 % Pt (Pt-A) 12% WO₃ ZrO₂ 14999-95-1 (Hand Prepared) | | | |

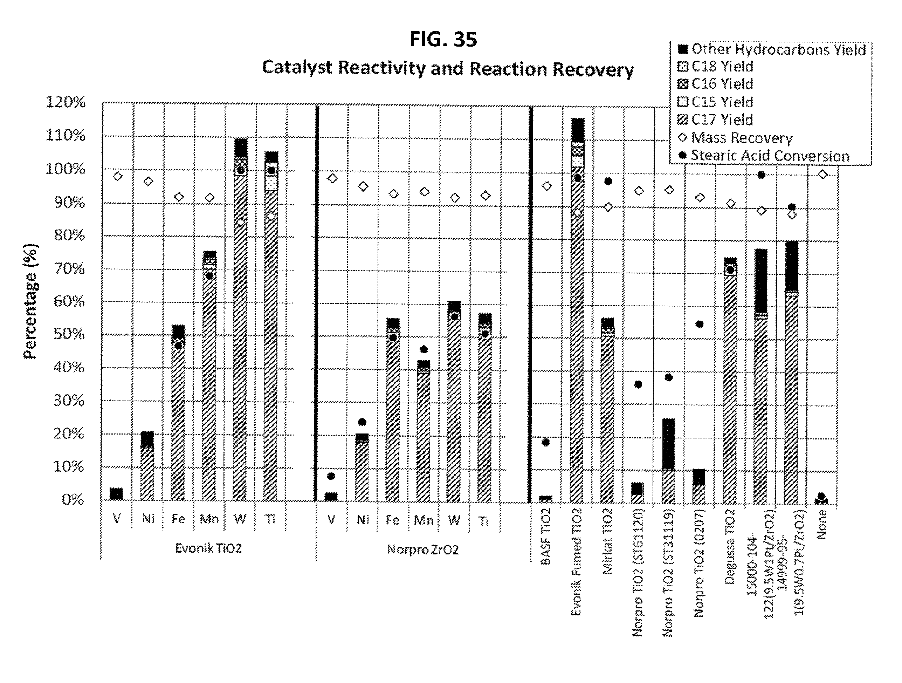

Catalyst screening results observed on Plate 4 are illustrated in FIG. 35. W and Ti exhibited greater activity on the Pt/TiO₂ catalysts than Mn, Fe, Ni and V. The diminished activity of V/Pt on titiania was particularly unexpected as V was the best on the carbon based catalysts on Plate 3.

The ZrO₂ supported Pt catalysts containing Fe, Mn, W or Ti all exhibited similar activity. As was the case with the TiO₂ supported catalyst, V and Ni exhibited diminished activity. Without being bound by a particular theory, it is hypothesized that the beneficial interaction between W, Mn or Fe and the ZrO₂ support observed on Plate 1 results from calcination at 850°C for 2 hr in air since the catalysts on Plate 4 that were not calcined after transition metal addition had activities similar to the 1% Pt on ZrO₂ catalyst without an added transition metal.

### Example 8

### Effects of Pt Precursor, Pt Concentration, Calcination Temperature, and Catalyst:Substrate Ratio

Plate 5 was designed with several goals in mind. First, the effect of Pt precursor (Pt-A versus CPA) was investigated. Previously, catalysts had been treated through the decomposition of Pt-A during calcination in air at 450°C for 2 hr. However, catalysts prepared with CPA were reduced in flowing H₂. On Plate 5, some catalysts were prepared with Pt-A and treated at 450°C for 2 hr in air. A portion of the Pt-A-prepared catalysts were further treated through reduction at 450°C for 2 hr in flowing H₂.

Catalysts prepared with CPA were dried after Pt impregnation but not calcined. The catalysts were reduced after drying. The effect of reduction temperature on catalysts prepared with CPA was investigated by reducing the catalysts at 450°C or 150°C for 2 hr in flowing H₂.

Titania catalysts including 2.9 wt% Fe and 9.5 wt% W were prepared such that the supports were calcined at 850°C for 2 hr after the addition of the Fe or W salt but before the addition of the Pt-A. Finally, the effect of decreasing the catalyst:substrate ratio from 1:2 (60 mg catalyst to 120 mg substrate) to a catalyst:substrate ratios of 1:4 was studied. The ratio was decreased by holding the mass of catalyst constant and increasing the mass of the substrate.

The catalysts tested on Plate 5 are illustrated in the matrix presented in Table 14. Stearic acid was used as the substrate in all wells on Plate 5. The reaction was carried out at 300°C for 3 hr.

**Table 14**

| Catalysts tested on Plate 5 | | | | | |
|---|---|---|---|---|---|
| 1% Pt (Pt-A) 9.5 wt% W NorPro^{®} SZ 31164 ZrO₂ 450°C, 2 hr, Air | 1.0% Pt (Pt-A) Evonik® 7711 TiO₂ 2.9% Fe (850°C, 2 hr, air after Fe addn.) 450°C, 2 hr, Air | 1% Pt (Pt-A) 9.5 wt% W SZ 31164 450°C, 2 hr, Air 450°C, 2 hr, H₂ | 1.0% Pt (Pt-A) Evonik® 7711 TiO₂ 9.5% W (850°C, 2 hr, air after W addn.) 450°C, 2 hr, Air | 1% Pt (CPA) 9.5 wt% W SZ 31164 450°C, 2 hr, H₂ | 1% Pt (Pt-A) 9.5 wt% W SZ 31164 450°C, 2 hr, Air 1:4 Cat:Sub |
| 1% Pt (CPA) 9.5 wt% W NorPro^{®} SZ 31164 ZrO₂ 150°C; 2 hr; H₂ | 0.7% Pt 12% WO₃ ZrO₂ 14999-95-1 (Hand Prepared) | Feed Only | | | |

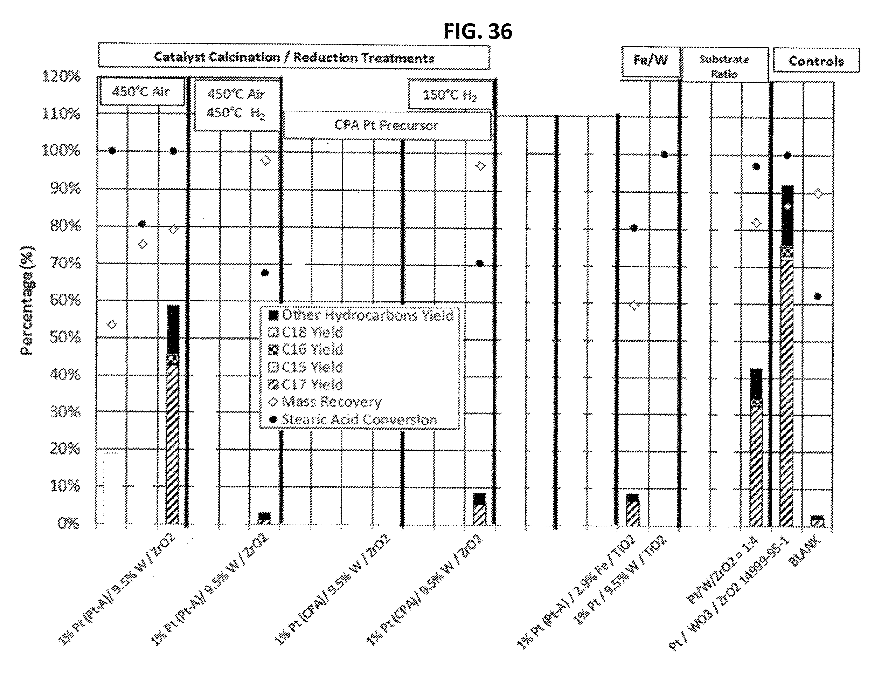

The Plate 5 catalyst screening results are illustrated in FIG. 36. Some wells leaked during Plate 5 testing as evidenced by mass recoveries significantly below 100%. However, the 1% Pt/9.5% W/ZrO₂ prepared with Pt-A, calcined at 450°C in air and reduced with H₂ had a mass recovery near 100%. Even though this well did not leak, the yield of C₁₇ was low, suggesting that reduction in H₂ had a deleterious effect.

Low C₁₇ yield was generally observed with the CPA-prepared catalysts. Therefore, it was concluded that catalysts prepared with CPA were not as active for the production of C₁₇ from stearic acid regardless of the inorganic support and any additional metals.

Fe- and W-containing titania catalysts produced only a small amount of C₁₇, indicating that the addition of Fe and W to the titania with subsequent calcination at 850°C for 2 hr in air prior to Pt addition did not produce an active catalyst.

Regarding wells with higher substrate loadings, the 1% Pt/9.5% W/ZrO₂ decarboxylated some of the stearic acid present at a 1:4 catalyst:substrate ratio.

### Example 9

### Effects of Sn, Ge, and Platinum Precursors on Carbon Supports

Plate 6 was designed to investigate both organic and inorganic carbon supports. Experiments performed during Phase 1 testing identified Pt catalysts with Sn or Ge as excellent decarboxylation catalysts. The decarboxylation activity of the commercially prepared Pt/Sn catalyst was reaffirmed on Plate 6. Therefore, Sn and Ge were investigated (1% Pt/0.5% Sn or Ge) on four diverse carbon supports: Nuchar^{®} BX-RGC-524-R-02, Hyperion CS-02C-063-XD Lot 384-82, Ceca 4013 mm n° 71354, and Norit^{®} ROX 0.8.

Sn-containing catalysts were co-impregnated with Pt (CPA) in aqueous media with a small amount of HCl added to reduce Sn hydrolysis. The Ge-containingcatalysts were prepared by impregnation of Pt (CPA) in ethanol, drying, and subsequent impregnation with GeCl₄ in ethanol. The Sn- and Ge-containing catalysts were dried and reduced at 450°C for 2 hr in H₂.

Previously, the effect of additional metals on Pt/carbon catalysts was investigated on Plate 3. However, the additional metals were added before the addition of the Pt. Catalysts on Plate 6 were designed to test the effect of adding metals *after* Pt addition with 2 metals (Fe, V). These catalysts were prepared with Pt-A and subjected to N₂ treatment at 450°C for 2 hr. Additionally, a portion of the calcined catalysts were further reduced to test the effect of reducing the catalysts in flowing H₂.

Finally, the effect of an unsaturated substrate (oleic acid) on previously identified inorganic catalysts was also investigated. Specifically, 1% Pt/2.9 % Fe/ZrO₂ and 0.7% Pt/12% WO₃/ZrO₂ catalysts were tested with oleic acid. The W catalyst was calcined at 850°C for 2 hr in air after the addition of the W and subsequently calcined at 450°C for 2 hr in air after the addition of the Pt (Pt-A). The 1% Pt/2.9% Fe/ZrO₂ catalyst was dried after the addition of the Fe at 110°C overnight followed by the addition of the Pt (Pt-A) and calcined at 450°C for 2 hr in N₂.

The catalysts tested on Plate 6 are illustrated in the matrix presented in Table 15. Stearic acid or oleic acid was used as the substrate on Plate 6. The reaction was carried out at 300°C for 3 hr.

**Table 15**

| Catalysts tested on Plate 6 | | | | | |
|---|---|---|---|---|---|
| 1% Pt (CPA) 0.5% Sn Nuchar^{®} BX-RGC-524 450°C; 2 hr H₂ | 1% Pt (CPA) 0.5% Sn Hyperion CS-02C-063-XD Lot 384-82 450°C; 2 hr H₂ | 1% Pt (CPA) 0.5% Sn Ceca AC 4013 450°C; 2 hr H₂ | 1% Pt (CPA) 0.5% Sn Norit^{®} ROX 0.8 450°C; 2 hr H₂ | 1% Pt (Pt-A) 0.5% Fe Hyperion CS-02C-063-XD Lot 384-82 450°C; 2 hr N₂ | 1% Pt (Pt-A) 0.5% V Hyperion CS-02C-063-XD Lot 384-82 450°C; 2 hr N₂ |
| 1% Pt (CPA) 0.5% Ge Nuchar^{®} BX-RGC-524 450°C; 2 hr H₂ | 1% Pt (CPA) 0.5% Ge Hyperion CS-02C-063-XD Lot 384-82 450°C; 2 hr H₂ | 1% Pt (CPA) 0.5% Ge Ceca AC 4013 450°C; 2 hr H₂ | 1% Pt (CPA) 0.5% Ge Norit^{®} ROX 0.8 450°C; 2 hr H₂ | 1% Pt (Pt-A) 0.5% Fe Hyperion CS-02C-063-XD Lot 384-82 450°C; 2 hr N₂ 450°C; 2 hr H₂ | 1% Pt (Pt-A) 0.5% V Hyperion CS-02C-063-XD Lot 384-82 450°C; 2 hr N₂ 450°C; 2 hr H₂ |
| 1% Pt (Pt-A) 2.9% Fe ZrO₂ Stearic Acid 450°C, 2 hr, N₂ | 1% Pt (Pt-A) 2.9% Fe ZrO₂ Oleic Acid 450°C, 2 hr, N₂ | 0.7 wt% Pt (Pt-A) 12 wt% WO₃ ZrO₂ Oleic Acid 14999-95-1 450°C, 2 hr, air | 0.7 wt% Pt (Pt-A) 12 wt% WO₃ ZrO₂ Stearic Acid 14999-95-1 450°C, 2 hr, air | Feed Only | |

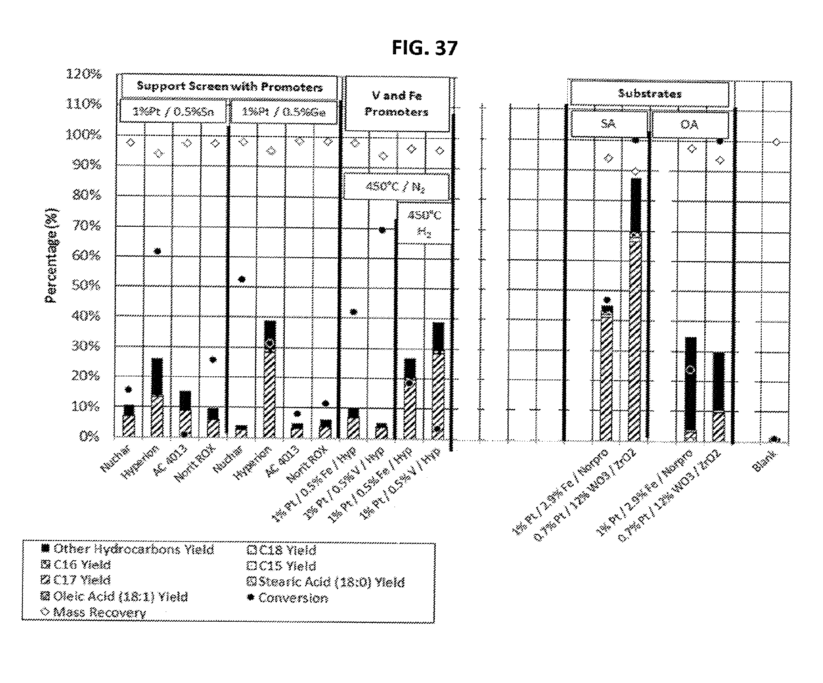

The results of Plate 6 testing are illustrated in FIG. 37. Generally, catalysts prepared with CPA as the Pt precursor had low activity. The chloride precursor may have caused the low activity since catalysts prepared with Pt-A had superior activity compared to similarly prepared CPA catalysts. The chloride precursor may be the reason that the Pt/Sn/C and Pt/Ge/C catalysts also exhibited low activity, especially when compared with the Pt/Sn/CP catalyst that had high activity on Plate 3.

The Hyperion CS-02C-063-XD Lot 384-82 supported catalysts prepared with Pt-A and Fe or V also had low activity. Therefore, adding the metals after the Pt did not significantly increase the activity of the catalysts as observed with catalysts on inorganic supports.

The Pt/Fe/NorPro^{®} ZrO₂ catalyst exhibited lower activity when compared with samples run on previous plates. The reason for the lower activity was not readily apparent. The decarboxylation activity of the benchmark catalyst 14999-95-1, the Pt/W/ZrO₂ catalyst, was similar to the activity observed on previous plates.

The Pt/W/ZrO₂ and Pt/Fe/ZrO₂ catalysts had low activity (< 10% yield) for C₁₇ when tested with an unsaturated (oleic acid) substrate.

### Example 10

### Effects of Forming a Metal Alloy

A catalyst was prepared using the Nuchar^{®} BX-RGC with 1% Pt and 0.1% Fe. The catalyst was reduced at 850°C in H₂ for 2 hr in order to induce the formation of an alloy between Fe and Pt.

The catalyst tested on Plate 7 is illustrated in Table 16. The catalyst:substrate ratio was 1:2 (60 mg catalyst: 120 mg substrate). The reaction was carried out at 300°C for 3 hr.

**Table 16**

| Catalysts tested on Plate 7 | | | | | |
|---|---|---|---|---|---|
| 1% Pt (Pt-A) 0.1% Fe Nuchar BX-RGC 850°C, 2 h, H₂ | 14999-95-1 Pt/WO₃/ZrO₂ Reference | Feed Only | | | |

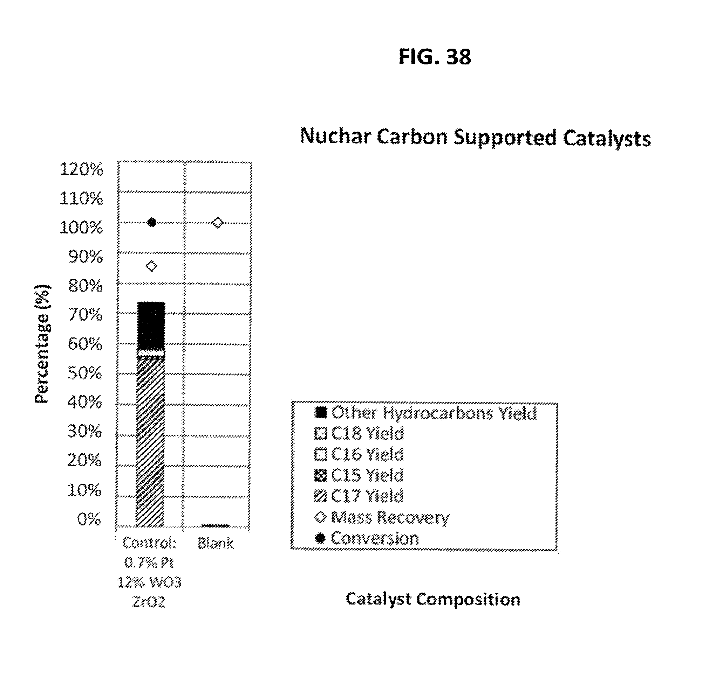

As shown in FIG. 38, the Fe/ Pt catalyst prepared on Nuchar^{®} 1621-RO6 had a relatively low decarboxylation activity.

### Example 11

### Regeneration Ability of Inorganic Catalysts and Effect of Calcination Temperature

Plates 8 and 9 were designed simultaneously in order to study the regeneration ability of promising inorganic catalysts. The design for Plate 8 is shown in Table 17. The 1% Pt/2.9% Fe/NorPro^{®} SZ 31164 ZrO₂ catalyst and the 1% Pt/9.5% W/NorPro^{®} SZ 31164 ZrO₂ catalyst were selected for regeneration testing. The ZrO₂ supported catalysts were tested with stearic acid at a 1:2 catalyst:substrate ratio (60 mg catalyst: 120 mg substrate). For the regeneration study, each catalyst and substrate combination was run in triplicate on Plate 8. After the completion of Plate 8, one of each of the triplicate wells was analyzed. The other two wells were regenerated through an oxidative treatment at 450°C or 650°C in air for 2 hr. The two regenerated wells were then reloaded with substrate and run again on Plate 9, effectively creating duplicates of each regeneration test. Plate 8 was run at 300°C for 3 hr.

**Table 17**

| Catalysts tested on Plate 8 | | | | | |
|---|---|---|---|---|---|
| 1% Pt (Pt-A) 9.5% W NorPro^{®} SZ 31164 450°C, 2 hr, air Stearic Acid 1:2 Cat/Sub | 1% Pt (Pt-A) 9.5% W NorPro^{®} SZ 31164 450°C, 2 hr, air Stearic Acid 1:2 Cat/Sub 450°C Reg. | 1% Pt (Pt-A) 9.5% W NorPro^{®} SZ 31164 450°C, 2 hr, air Stearic Acid 1:2 Cat/Sub 450°C Reg. | 1% Pt (Pt-A) 2.9% Fe NorPro^{®} SZ 31164 450°C, 2 hr, air Stearic Acid 1:2 Cat/Sub | 1% Pt (Pt-A) 2.9% Fe NorPro^{®} SZ 31164 450°C, 2 hr, air Stearic Acid 1:2 Cat/Sub 650°C Regen | 1% Pt (Pt-A) 2.9% Fe NorPro^{®} SZ 31164 450°C, 2 hr, air Stearic Acid 1:2 Cat/Sub 650°C Regen |
| 1% Pt (Pt-A) 2.9% Fe NorPro^{®} SZ 31164 450°C, 2 hr, air Stearic Acid 1:2 Cat/Sub | 1% Pt (Pt-A) 2.9% Fe NorPro^{®} SZ 31164 450°C, 2 hr, air Stearic Acid 1:2 Cat/Sub 450°C Reg. | 1% Pt (Pt-A) 2.9% Fe NorPro^{®} SZ 31164 450°C, 2 hr, air Stearic Acid 1:2 Cat/Sub 450°C Req. | 14999-95-1 Pt/WO₃/ZrO₂ Reference | Feed Only | |

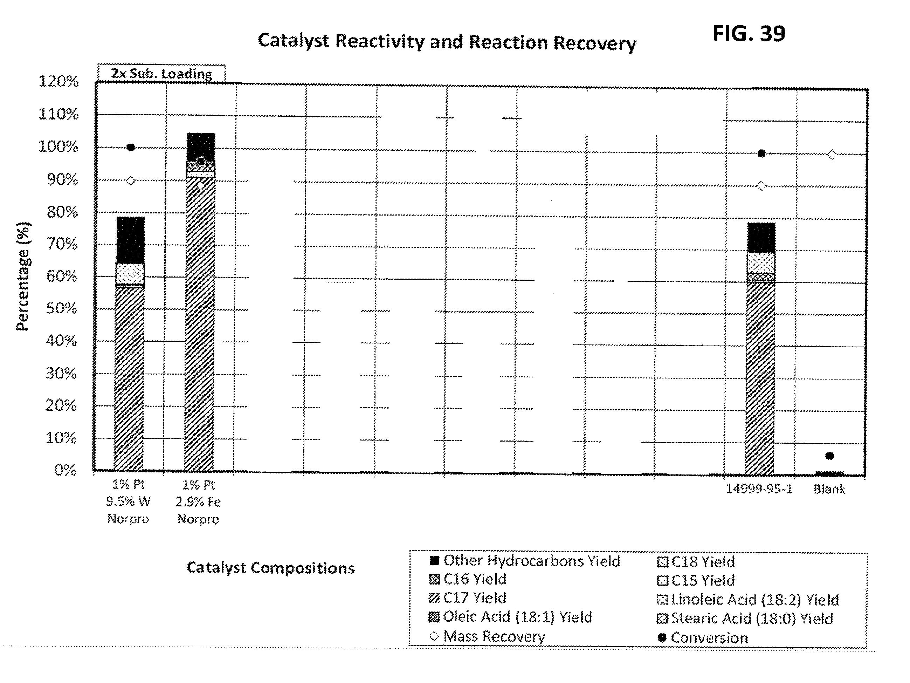

The results of Plate 8 testing are shown in FIG. 39. The ZrO₂ supported catalysts exhibited excellent decarboxylation activity. The main purpose in retesting these catalysts was to gather a basis of comparison with the regenerated catalysts tested on Plate 9.

A significant portion of Plate 9 was dedicated to wells carried over from Plate 8 for the testing of the regeneration ability of selected inorganic catalysts. These catalysts were regenerated through calcination in air at the specified temperature (450°C or 650°C) for 2 hr. The catalysts were then reloaded with substrate and retested.

Plate 9 was run at 300°C for 3 hr. The substrate and loading level for each catalyst run on Plate 9 is identified in Table 18.

**Table 18**

| Catalysts tested on Plate 9 | | | | | |
|---|---|---|---|---|---|
| **From Run on Plate 8 Regen. At 450°C** | **From Run on Plate 8 Regen. At 450°C** | **From Run on Plate 8 Regen. At 650°C** | **From Run on Plate 8 Regen. At 650°C** | **From Run on Plate 8 Regen. At 450°C** | **From Run on Plate 8 Regen. At 450°C** |
| 1 % Pt (Pt-A) 9.5% W NorPro^{®} SZ 31164 450°C, 2 hr, air Stearic Acid 1:2 Cat/Sub | 1 % Pt (Pt-A) 9.5% W NorPro^{®} SZ 31164 450°C, 2 hr, air Stearic Acid 1:2 Cat/Sub | 1 % Pt (Pt-A) 2.9% Fe NorPro^{®} SZ 31164 450°C, 2 hr, air Stearic Acid 1:2 Cat/Sub | 1 % Pt (Pt-A) 2.9% Fe NorPro^{®} SZ 31164 450°C, 2 hr, air Stearic Acid 1:2 Cat/Sub | 1 % Pt (Pt-A) 2.9% Fe NorPro^{®} SZ 31164 450°C, 2 hr, air Stearic Acid 1:2 Cat/Sub | 1 % Pt (Pt-A) 2.9% Fe NorPro^{®} SZ 31164 450°C, 2 hr, air Stearic Acid 1:2 Cat/Sub |
| 14999-95-1 Pt/WO₃/ZrO₂ Reference | Feed Only | | | | |

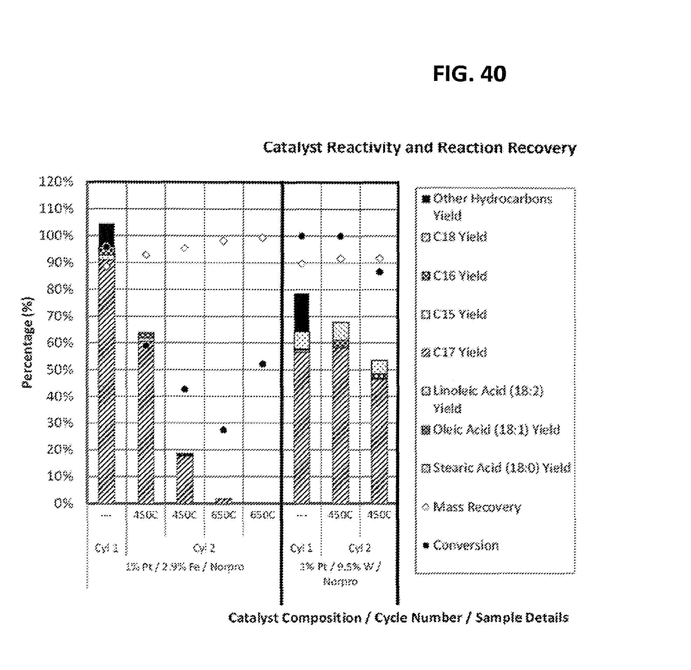

The results of the regeneration testing initiated on Plate 8 and completed on Plate 9 are illustrated in FIG. 40. In FIG. 40, data points denoted as Cyl 1 (Cycle 1) are from Plate 8 while Cyl 2 is the data collected after running the catalysts on Plate 8, regenerating, and testing on Plate 9. The 1% Pt/2.9% Fe/ZrO₂ catalyst regenerated at 450°C for 2 hr was regenerated successfully via calcination at 450°C although the activity was somewhat lower in the regenerated catalyst. In contrast, the 1% Pt/2.9% Fe/ZrO₂ catalyst regenerated via calcination at 650°C had no decarboxylation activity. The 1% Pt/9.5% W/ZrO₂ catalyst had similar activity after being regenerated via calcination at 450°C for 2 hr in air.

### Example 12

### Reduced Catalysts with Various Feedstocks

Plate 10, which was run at 300°C for 3 hr, was dedicated to testing catalysts after reduction in H₂ with various saturated and unsaturated feedstocks. Some supports without active metals present were also tested. All catalysts and supports tested were reduced at 450°C for 2 hr in flowing H₂. Catalysts tested included 1% Pt on NorPro^{®} SZ 31164 ZrO₂ with 9.5% W or 2.9% Fe.

Several substrates were tested on Plate 10. The substrates tested included stearic acid, oleic acid and linoleic acid. A substrate named Palm Oil Feed, which consisted of a mixture of 50 wt% stearic acid, 40 wt% oleic acid and 10 wt% linoleic acid, was also tested. The Palm Oil Feed was prepared to simulate the FFA mixture that would be produced from palm oil.

In addition to the fresh catalysts and supports, two catalysts previously run on Plates 8 and 9 were investigated on Plate 10. The catalysts, a 1% Pt/2.9% Fe/NorPro^{®} SZ 31164 ZrO₂ and 1% Pt/9.5% W/NorPro^{®} SZ 31164 ZrO₂, were run on Plate 8, regenerated in air and tested again on Plate 9. After Plate 9, the wells with the catalysts were analyzed. Subsequent to analysis, the catalysts were first regenerated at 450°C for 2 hr in air and then reduced at 450°C for 2 hr in flowing H₂ prior to testing on Plate 10. It should be noted that these catalysts underwent analysis after testing on Plate 9 and were therefore exposed to CHCl₃ during the analytic procedure between testing on Plate 9 and Plate 10.

Finally, one well on Plate 10 was dedicated to testing the effect of a hydrocarbon solvent on the decarboxylation activity of the benchmark 0.7% Pt/12% WO₃/NorPro^{®} SZ 31164 ZrO₂ catalyst when deoxygenating stearic acid. 60 mg of the calcined and reduced catalyst was loaded with 120 mg of stearic acid substrate and 360 mg of dodecane solvent. The design for Plate 10 is shown in Table 19.

**Table 19**

| Catalysts tested on Plate 10 | | | | | |
|---|---|---|---|---|---|
| 1 % Pt (Pt-A) 2.9% Fe NorPro^{®} SZ 31164 450°C, 4 hr, air 450°C, 2 hr, H₂ Stearic Acid 1:2 Cat/Sub | 1 % Pt (Pt-A) 9.5% W NorPro^{®} SZ 31164 450°C, 2 hr, air 450°C, 2 hr, H₂ Oleic Acid 1:2 Cat/Sub | 1 % Pt (Pt-A) 9.5% W NorPro^{®} SZ 31164 450°C, 4 hr, air 450°C, 2 hr, H₂ Stearic Acid 1:2 Cat/Sub | 1% Pt (Pt-A) 9.5% W NorPro^{®} SZ 31164 450°C, 2 hr, air 450°C, 2 hr, H₂ Palm Oil Feed 1:2 Cat/Sub | 1% Pt (Pt-A) 9.5% W NorPro^{®} SZ 31164 450°C, 2 hr, air 450°C, 2 hr, H₂ Stearic Acid 1:2 Cat/Sub | 1% Pt (Pt-A) 9.5% W NorPro^{®} SZ 31164 450°C, 2 hr, air 450°C, 2 hr, H₂ Stearic Acid 1:2 Cat/Sub (Duplicate) |
| 14999-95-1 Pt/WO₃/ZrO₂ 450°C, 2hr, air 450°C, 2 hr, H₂ Stearic Acid 1:2 Cat/Sub | Stearic Acid Feed Only | 14999-95-1 Pt/WO₃/ZrO₂ 450°C, 2hr, air 450°C, 2 hr, H₂ 60 mg Cat 120 mg SA 360 mg n-C₁₂ | | | |

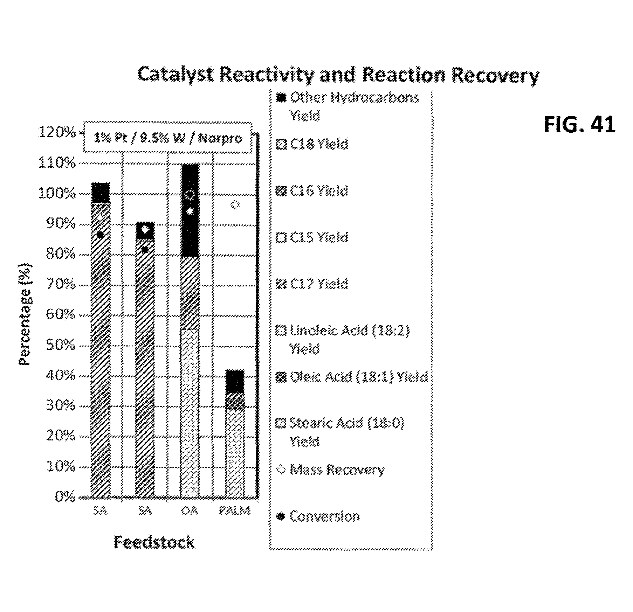

The results of catalyst testing on Plate 10 are illustrated in FIG. 41. The 1% Pt/NorPro^{®} SZ 31164 ZrO₂ catalysts exhibited decarboxylation activity through the production of C₁₇ from stearic acid.

The H₂ reduced 1% Pt/9.5% W/NorPro^{®} SZ 31164 ZrO₂ exhibited high decarboxylation activity with stearic acid. As with other catalysts, only a small amount of C₁₇ was produced from the Palm Oil Feed. However, the Pt/W/ZrO₂ catalyst did exhibit a high degree of transfer hydrogenation and even subsequent decarboxylation of the oleic acid substrate. Previously, the Pt/W/ZrO₂ catalyst had produced a large amount of material unidentifiable by the GC method that was presumed to be higher molecular weight species formed via alkylation reactions. Thus, the reduction of the Pt/W/ZrO₂ catalyst in H₂ at 450°C for 2 hr produced unexpectedly good results with the unsaturated oleic acid feedstock.

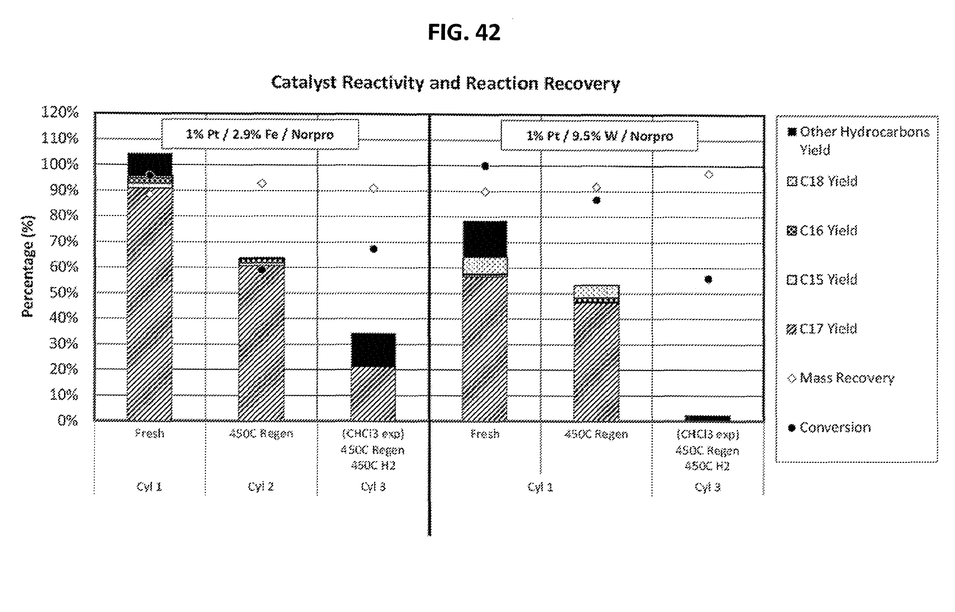

The activities of catalysts regenerated after testing on Plate 9 are shown in FIG. 42. Because these catalysts were part of the regeneration testing on Plates 8 and 9, the data from testing similar catalysts on Plate 8 (Cyl 1) and Plate 9 (Cyl 2) are shown with the data obtained from testing on Plate 10 (Cyl 3; boxes around bars). The Cyl 3 data is further noted with the fact that the catalysts were exposed to CHCl₃ between Cyl 2 and Cyl 3 due to the analysis procedure employed after Plate 9. The regenerated Pt/Fe/ZrO₂ catalyst had sufficient activity to convert stearic acid to C₁₇ at a 20% yield. The regenerated Pt/W/ZrO₂ catalyst had no decarboxylation activity and produced no C₁₇ when tested on Plate 10.

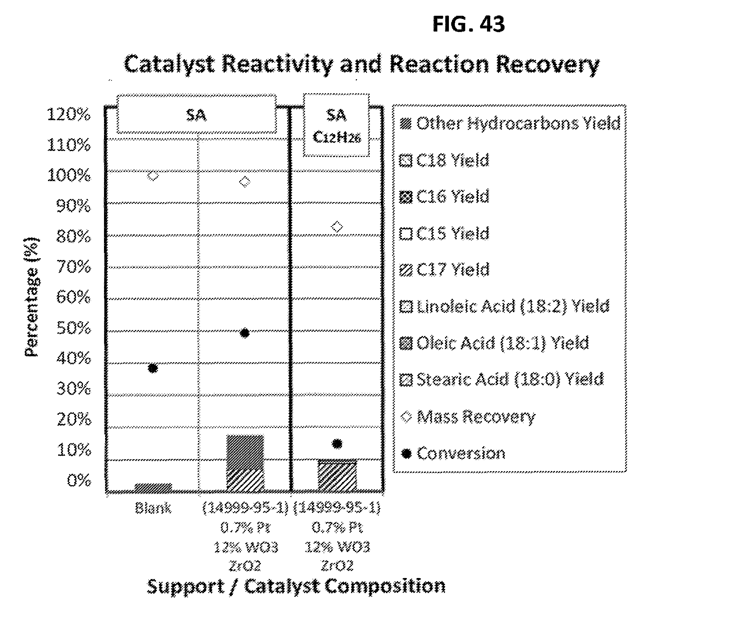

FIG. 43 illustrates that the well with 60 mg of 0.7% Pt/12% WO₃/ZrO₂, 360 mg n-dodecane and 120 mg stearic acid did have some activity for decarboxylation. However, the decarboxylation activity was not as great as when neat stearic acid was employed. It is likely that the decarboxylation activity in the n-dodecane was lower due to the lower concentration of stearic acid.

A method for deoxygenating fatty acids includes providing a catalyst comprising a) M¹/M²/M³O₂ where M¹ is a transition metal, a transition metal oxide, or a combination thereof, wherein the transition metal is Fe, Mn, Mo, V, W, or a combination thereof, M² is Pt, PtO, PtO₂, or a combination thereof, and M³ is Ti or Zr, b) Pt/Ge/C, c) Pt/Sn/C, or d) any combination thereof, exposing a composition comprising fatty acids to the catalyst, and deoxygenating at least 10% of the fatty acids with the catalyst to produce hydrocarbons. Deoxygenation includes decarboxylating, decarbonylating, dehydrating, or any combination thereof. In some embodiments, the fatty acids are obtained from a plant oil, a plant fat, an animal fat, or any combination thereof.

In any or all of the above embodiments, the composition may be exposed to the catalyst without added hydrogen. In some embodiments, at least 10% of the fatty acids in the composition are unsaturated fatty acids.

In any or all of the above embodiments, the compositon may be exposed to the catalyst at a pressure of less than 250 psi, such as a pressure of less than 100 psi.

In any or all of the above embodiments, the fatty acids in the composition may be free fatty acids, fatty acid alkyl esters, fatty acid monoglycerides, fatty acid diglycerides, fatty acid triglycerides, or any combination thereof. In any or all of the above embodiments, at least 90% of the fatty acids in the composition may be free fatty acids. In some embodiments, free fatty acids are formed by providing a source of triglycerides and hydrolyzing the triglycerides to produce the free fatty acids and glycerol. In certain embodiments, the method further includes separating the free fatty acids from the glycerol, and recovering the glycerol. In some embodiments, the triglycerides are hydrogenated before hydrolyzing the triglycerides.

In any or all of the above embodiments, the composition may further include a hydrocarbon solvent. In some embodiments, the hydrocarbon solvent is obtained by recycling at least a portion of the hydrocarbons produced by deoxygenating fatty acids with the catalyst.

In any or all of the above embodiments, at least some of the fatty acids in the composition may be unsaturated fatty acids, and the method further includes hydrogenating at least 10% of unsaturated bonds in the unsaturated fatty acids prior to exposing the composition to the catalyst. In some embodiments, the composition is stored for a period of time after hydrogenation prior to exposing the fatty acids to the catalyst.

In any or all of the above embodiments, the catalyst may be at a temperature of at least 250°C prior to exposing the composition to the catalyst, and the composition is not preheated before exposure to the catalyst. In any or all of the above embodiments, the catalyst may be at a temperature of at least 250°C and the composition is preheated to a temperature of at least 50°C before exposure to the catalyst.

In any or all of the above embodiments, the catalyst may be disposed within a column, and the composition is flowed through the column. In some embodiments, exposing the composition to the catalyst includes flowing the composition through the column at a WHSV of 0.1-2.0 hr⁻¹, such as a WHSV of 0.3-1.0 hr⁻¹. In some embodiments, the method further includes concurrently flowing a gas through the column with the composition, wherein the gas is a) an inert gas, hydrogen, air, or oxygen, or b) a mixture of inert gas with hydrogen, air, oxygen, or a combination thereof. In some embodiments, the catalyst remains capable of continuing to deoxygenate at least 10% of the fatty acids in the composition flowing through the column as the column is operated for at least 200 minutes at a temperature of 200-500°C and a WHSV of 0.1-2.0 hr⁻¹. In some embodiments, the catalyst remains capable of deoxygenating at least 10% of the fatty acids for at least 15,000 minutes.

In any or all of the above embodiments, at least 80% of the fatty acids may be deoxygenated after exposure to the catalyst.

In any or all of the above embodiments, the catalyst may be M¹/M²/M³O₂ where M³ is Zr when at least 90% of the fatty acids are saturated fatty acids. In some embodiments, the catalyst comprises 0.1 wt% to 1.5 wt% Pt and 1.5 wt% to 10 wt% Fe, Mn, W, or a combination thereof, relative to a total mass of the catalyst. In certain embodiments, the catalyst consists essentially of a) 0.7 wt % Pt and 12 wt% WO₃, relative to the total mass of the catalyst, b) 0.7 wt% to 1 wt% Pt and 9.5 wt% W, relative to the total mass of the catalyst, c) 0.7 wt% Pt and 2.9 wt% Fe, relative to the total mass of the catalyst, or d) 1 wt% Pt and 2.8 wt% Mn, relative to the total mass of the catalyst.

In any or all of the above embodiments, when at least some of the fatty acids are unsaturated fatty acids, the catalyst may be Pt/Ge/C, Pt/Sn/C, or a mixture thereof, or the catalyst may be W/Pt/ZrO₂ and at least a portion of the W is in a reduced form. In some embodiments, the catalyst comprises a) 5 wt% Pt and b) 0.5 wt% Ge or 0.5 wt% Sn, relative to a total mass of the catalyst. In certain embodiments, the catalyst is W/Pt/ZrO₂ where W is present in an amount of 9.5 wt% and Pt is present in an amount of 0.7 wt%, relative to a total mass of the catalyst. In some embodiments, exposing the unsaturated fatty acids to the catalyst results in cyclization and/or aromatization of up to 10% of the fatty acids. In certain embodiments, exposing the unsaturated fatty acids to the catalyst results in isomerization, cracking, alkylation, cyclization and/or aromatization of greater than 10% of the fatty acids.

In any or all of the above embodiments, at least a portion of the hydrocarbons are unsaturated hydrocarbons, and the method further includes hydrogenating the unsaturated hydrocarbons to produce saturated hydrocarbons. In any or all of the above embodiments, the method may further include fractionating the hydrocarbons to produce one or more hydrocarbon fractions.

In any or all of the above embodiments, the hydrocarbons may be used as fuel in an engine. In any or all of the above embodiments, the hydrocarbons may be used as an aviation fuel. In any or all of the above embodiments, at least a portion of the hydrocarbons may be used as a reactant in a chemical synthesis reaction.

In any or all of the above embodiments, exposing the composition to the catalyst may include heating the composition in the presence of the catalyst at a temperature of at least 50°C, and at least 10% of the fatty acids may be deoxygenated at a temperature of at least 250°C.

In some embodiments, the catalyst is provided in a first catalyst bed at a temperature of at least 50°C, , and deoxygenating at least 10% of the fatty acids further comprises subsequently exposing the composition to a second catalyst in a second catalyst bed at a temperature of at least 250°C, wherein the second catalyst comprises a) M¹/M²/M³O₂ where M¹ is a transition metal, a transition metal oxide, or a combination thereof, wherein the transition metal is Fe, Mn, Mo, V, W, or a combination thereof, M² is Pt, PtO, PtO₂, or a combination thereof, and M³ is Ti or Zr, b) Pt/Ge/C, c) Pt/Sn/C, or d) any combination thereof. In some embodiments, the second catalyst has substantially the same chemical composition as the first catalyst. In certain embodiments, the second catalyst has a different chemical composition than the first catalyst.

In some embodiments, the composition comprises fatty acid triglycerides, and exposing the composition to the catalyst comprises (i) hydrolyzing the fatty acid triglycerides to produce free fatty acids and glycerol, (ii) separating the free fatty acids from the glycerol, and (iii) exposing the separated free fatty acids to the catalyst, wherein exposing the free fatty acids to the catalyst comprises providing a column with the catalyst disposed therein and flowing the free fatty acids through the column without added hydrogen, at a pressure less than 100 psi, at a temperature of at least 250°C, and at a WHSV of 0.1-2.0 hr⁻¹, and (iv) deoxygenating at least 10% of the free fatty acids with the catalyst to produce hydrocarbons. In some embodiments, the triglycerides are obtained from a plant oil, a plant fat, an animal fat, or any combination thereof. In certain embodiments, the catalyst is M¹/Pt/ZrO₂, the transition metal is Fe, Mn, W, or a combination thereof, and the method further includes hydrogenating the triglycerides before hydrolyzing the triglycerides. In some embodiments, at least some of the fatty acids are unsaturated fatty acids and the catalyst is Pt/Ge/C, Pt/Sn/C, or W/Pt/ZrO₂ where at least a portion of the W is in a reduced form.

In some embodiments, a method for dehydrogenating fatty acids includes providing a catalyst comprising platinum combined with a non-transition metal on a support, exposing a composition comprising fatty acids to the catalyst, and dehydrogenating at least 10% of the fatty acids with the catalyst to produce a product comprising branched, cyclic, and/or aromatic compounds. In some embodiments, the catalyst also deoxygenates at least 10% of the product. In certain embodiments, at least 10% of the fatty acids are unsaturated fatty acids, and dehydrogenating further comprises transfer hydrogenation.

In some embodiments, a mixture includes a composition suitable for use as a renewable fuel, and the composition includes hydrocarbons in a liquid state, and at least 1 part per million (ppm) Pt, Fe, Mn, W, and/or Zr. In certain embodiments, the mixture includes at least a) 1 ppm Pt, b) at least 10 ppm Zr, and/or c) at least 10 ppm Fe, Mn, W, or any combination thereof. In some embodiments, greater than 70% of the hydrocarbons are C15-C17 hydrocarbons.

In some embodiments, a mixture includes a composition suitable for use as a renewable fuel, and the composition includes hydrocarbons in a liquid state, at least 1 part per million (ppm) Pt, and at least 0.5 ppm Ge, at least 0.5 ppm Sn, or at least 0.5 ppm of a combination of Ge and Sn. In certain embodiments, greater than 70% of the hydrocarbons are C15-C17 hydrocarbons.

In view of the many possible embodiments to which the principles of the disclosed invention may be applied, it should be recognized that the illustrated embodiments are only preferred examples of the invention and should not be taken as limiting the scope of the invention. Rather, the scope of the invention is defined by the following claims. We therefore claim as our invention all that comes within the scope and spirit of these claims.

The present invention is now described with reference to the following clauses:
1. A method, comprising:
   providing a catalyst comprising
      a) M¹/M²/M³O₂ where M¹ is a transition metal, a transition metal oxide, or a combination thereof, wherein the transition metal is Fe, Mn, Mo, V, W, or a combination thereof, M² is Pt, PtO, PtO₂, or a combination thereof, and M³ is Ti or Zr,
      b) Pt/Ge/C,
      c) Pt/Sn/C, or
      d) any combination thereof;
   exposing a composition comprising fatty acids to the catalyst; and
   deoxygenating at least 10% of the fatty acids with the catalyst to produce hydrocarbons.
2. The method of clause 1, wherein the fatty acids are obtained from a plant oil, a plant fat, an animal fat, or any combination thereof.
3. The method of clause 1, wherein the composition is exposed to the catalyst without added hydrogen.
4. The method of clause 3, wherein at least 10% of the fatty acids in the composition are unsaturated fatty acids.
5. The method of clause 1, wherein the composition is exposed to the catalyst at a pressure of less than 250 psi.
6. The method of clause 1, wherein at least 90 % of the fatty acids in the composition are free fatty acids.
7. The method of clause 6, further comprising forming the free fatty acids by providing a source of triglycerides and hydrolyzing the triglycerides to produce the free fatty acids and glycerol.
8. The method of clause 7, further comprising:
   separating the free fatty acids from the glycerol; and
   recovering the glycerol.
9. The method of clause 7 further comprising hydrogenating the triglycerides before hydrolyzing the triglycerides.
10. The method of clause 1, wherein the composition further comprises a hydrocarbon solvent.
11. The method of clause 10, wherein the hydrocarbon solvent is obtained by recycling at least a portion of the hydrocarbons produced by deoxygenating fatty acids with the catalyst.
12. The method of clause 1, wherein at least some of the fatty acids in the composition are unsaturated fatty acids, and further comprising hydrogenating at least 10% of unsaturated bonds in the unsaturated fatty acids prior to exposing the composition to the catalyst.
13. The method of clause 1, wherein the catalyst is at a temperature of at least 250°C prior to exposing the composition to the catalyst, and the composition is not preheated before exposure to the catalyst.
14. The method of clause 1, wherein the catalyst is at a temperature of at least 250°C and the composition is preheated to a temperature of at least 50°C before exposure to the catalyst.
15. The method of clause 1, further comprising disposing the catalyst within a column and flowing the composition through the column at a WHSV of 0.1-2.0 hr⁻¹.
16. The method of clause 15, wherein the catalyst is capable of continuing to deoxygenate at least 10% of the fatty acids in the composition flowing through the column as the column is operated for at least 200 minutes at a temperature of 200-500°C and a WHSV of 0.1-2.0 hr⁻¹.
17. The method of clause 1, wherein at least 80% of the fatty acids are deoxygenated after exposure to the catalyst.
18. The method of clause 1, wherein at least 90% of the fatty acids are saturated fatty acids and the catalyst is M¹/M²/M³O₂ where M³ is Zr.
19. The method of clause 18, wherein the catalyst comprises 0.1 wt% to 1.5 wt% Pt and 1.5 wt% to 10 wt% Fe, Mn, W, or a combination thereof, relative to a total mass of the catalyst.
20. The method of clause 19, wherein the catalyst consists essentially of 0.7 wt % Pt and 12 wt% WO₃, relative to the total mass of the catalyst, or the catalyst consists essentially of 0.7 wt% to 1 wt% Pt and 9.5 wt% W, relative to the total mass of the catalyst, or the catalyst consists essentially of 0.7 wt% Pt and 2.9 wt% Fe, relative to the total mass of the catalyst, or the catalyst consists essentially of 1 wt% Pt and 2.8 wt% Mn, relative to the total mass of the catalyst.
21. The method of clause 1, wherein at least some of the fatty acids are unsaturated fatty acids and the catalyst is Pt/Ge/C, Pt/Sn/C, or a mixture thereof, or the catalyst is W/Pt/ZrO₂ and at least a portion of the W is in a reduced form.
22. The method of clause 21, wherein the catalyst comprises a) 5 wt% Pt and b) 0.5 wt% Ge or 0.5 wt% Sn, relative to a total mass of the catalyst.
23. The method of clause 21, wherein the catalyst is W/Pt/ZrO₂ where W is present in an amount of 9.5 wt% and Pt is present in an amount of 0.7 wt%, relative to a total mass of the catalyst.
24. The method of clause 21, wherein exposing the unsaturated fatty acids to the catalyst results in cyclization and/or aromatization of up to 10% of the fatty acids.
25. The method of clause 21, wherein exposing the unsaturated fatty acids to the catalyst results in isomerization, cracking, alkylation, cyclization and/or aromatization of greater than 10% of the fatty acids.
26. The method of clause 1, wherein at least a portion of the hydrocarbons are unsaturated hydrocarbons, and further comprising hydrogenating the unsaturated hydrocarbons to produce saturated hydrocarbons.
27. The method of clause 1, further comprising fractionating the hydrocarbons to produce one or more hydrocarbon fractions.
28. The method of clause 1, further comprising providing the hydrocarbons for a fuel in an engine.
29. The method of clause 1, further comprising providing the hydrocarbons for an aviation fuel.
30. The method of clause 1, further comprising blending the hydrocarbons with petroleum fuel to produce a blended fuel.
31. The method of clause 1, further comprising providing the hydrocarbons as a reactant for a chemical synthesis reaction.
32. The method of clause 1, wherein exposing the composition to the catalyst comprises heating the composition in the presence of the catalyst at a temperature of at least 50°C, and wherein deoxygenating at least 10% of the fatty acids is performed at a temperature of at least 250°C.
33. The method of clause 1, wherein the catalyst is provided in a first catalyst bed at a temperature of at least 50°C, and deoxygenating at least 10% of the fatty acids further comprises subsequently exposing the composition to a second catalyst in a second catalyst bed at a temperature of at least 250°C, wherein the second catalyst comprises
   a) M¹/M²/M³O₂ where M¹ is a transition metal, a transition metal oxide, or a combination thereof, wherein the transition metal is Fe, Mn, Mo, V, W, or a combination thereof, M² is Pt, PtO, PtO₂, or a combination thereof, and M³ is Ti or Zr,
   b) Pt/Ge/C,
   c) Pt/Sn/C, or
   d) any combination thereof.
34. The method of clause 33, wherein the second catalyst comprises a different chemical composition than the catalyst.
35. The method of clause 1, wherein the composition comprises fatty acid triglycerides and exposing the composition comprising fatty acids to the catalyst comprises:
   hydrolyzing the fatty acid triglycerides to produce free fatty acids and glycerol;
   separating the free fatty acids from the glycerol; and
   exposing the separated free fatty acids to the catalyst, wherein exposing the free fatty acids to the catalyst comprises providing a column with the catalyst disposed therein and flowing the free fatty acids through the column without added hydrogen, at a pressure less than 100 psi, at a temperature of at least 250°C, and at a WHSV of 0.1-2.0 hr⁻¹.
36. The method of clause 35, wherein the catalyst is M¹/Pt/ZrO₂ and the transition metal is Fe, Mn, W, or a combination thereof, and further comprising hydrogenating the triglycerides before hydrolyzing the triglycerides.
37. The method of clause 35, wherein at least some of the fatty acids are unsaturated fatty acids and the catalyst is Pt/Ge/C, Pt/Sn/C, or W/Pt/ZrO₂ where at least a portion of the W is in a reduced form.
38. A method, comprising:
   providing a catalyst comprising platinum combined with a non-transition metal on a support;
   exposing a composition comprising fatty acids to the catalyst; and
   dehydrogenating at least 10% of the fatty acids with the catalyst to produce a product comprising branched, cyclic, and/or aromatic compounds.
39. The method of clause 38 wherein the catalyst deoxygenates at least 10% of the product.
40. A mixture comprising:
   a composition suitable for use as a renewable fuel, comprising:
      hydrocarbons in a liquid state; and
      at least 1 part per million (ppm) Pt, Fe, Mn, W, and/or Zr.
41. The mixture of clause 40, comprising at least a) 1 ppm Pt, b) at least 10 ppm Zr, and/or c) at least 10 ppm Fe, Mn, W, or any combination thereof.
42. A mixture comprising:
   a composition suitable for use as a renewable fuel, comprising:
      hydrocarbons in a liquid state;
      at least 1 part per million (ppm) Pt; and
      at least 0.5 ppm Ge, at least 0.5 ppm Sn, or at least 0.5 ppm of a combination of Ge and Sn.

## Claims

1. A method, comprising:
providing a catalyst comprising
a) Pt/Ge/C,
b) Pt/Sn/C,
c) a combination of a) and b), or
d) platinum combined with a non-transition metal on a support;
exposing a composition comprising fatty acids to the catalyst; and
deoxygenating at least 10% of the fatty acids with the catalyst to produce hydrocarbons;
and/or, when the catalyst comprises platinum combined with a non-transition metal on a support, dehydrogenating at least 10% of the fatty acids with the catalyst to produce a product comprising branched, cyclic, and/or aromatic compounds.

2. The method of claim 1, wherein the fatty acids are obtained from a plant oil, a plant fat, an animal fat, or any combination thereof; and/or, wherein at least some of the fatty acids in the composition are unsaturated fatty acids, and further comprising hydrogenating at least 10% of unsaturated bonds in the unsaturated fatty acids prior to exposing the composition to the catalyst; and/or, wherein at least a portion of the hydrocarbons are unsaturated hydrocarbons, and further comprising hydrogenating the unsaturated hydrocarbons to produce saturated hydrocarbons.

3. The method of claim 1, wherein the composition: is exposed to the catalyst without added hydrogen; optionally, wherein at least 10% of the fatty acids in the composition are unsaturated fatty acids; and/or, is exposed to the catalyst at a pressure of less than 250 psi.

4. The method of claim 1, wherein at least 90 % of the fatty acids in the composition are free fatty acids; optionally, further comprising forming the free fatty acids by providing a source of triglycerides and hydrolyzing the triglycerides to produce the free fatty acids and glycerol; optionally, further comprising:
separating the free fatty acids from the glycerol; and
recovering the glycerol; and/or, further comprising hydrogenating the triglycerides before hydrolyzing the triglycerides.

5. The method of claim 1, wherein the composition further comprises a hydrocarbon solvent; optionally, wherein the hydrocarbon solvent is obtained by recycling at least a portion of the hydrocarbons produced by deoxygenating fatty acids with the catalyst.

6. The method of claim 1, wherein the catalyst is: at a temperature of at least 250°C prior to exposing the composition to the catalyst, and the composition is not preheated before exposure to the catalyst; or, at a temperature of at least 250°C and the composition is preheated to a temperature of at least 50°C before exposure to the catalyst.

7. The method of claim 1, further comprising disposing the catalyst within a column and flowing the composition through the column at a WHSV of 0.1-2.0 hr⁻¹; optionally, wherein the catalyst is capable of continuing to deoxygenate at least 10% of the fatty acids in the composition flowing through the column as the column is operated for at least 200 minutes at a temperature of 200-500°C and a WHSV of 0.1-2.0 hr⁻¹.

8. The method of claim 1, wherein: at least 80% of the fatty acids are deoxygenated after exposure to the catalyst; and/or,
exposing the composition to the catalyst comprises heating the composition in the presence of the catalyst at a temperature of at least 50°C, and wherein deoxygenating at least 10% of the fatty acids is performed at a temperature of at least 250°C.

9. The method of claim 1, wherein at least some of the fatty acids are unsaturated fatty acids and the catalyst is Pt/Ge/C, Pt/Sn/C, or a mixture thereof; optionally, wherein the catalyst comprises a) 5 wt% Pt and b) 0.5 wt% Ge or 0.5 wt% Sn, relative to a total mass of the catalyst; or, wherein exposing the unsaturated fatty acids to the catalyst results in cyclization and/or aromatization of up to 10% of the fatty acids; or, wherein exposing the unsaturated fatty acids to the catalyst results in isomerization, cracking, alkylation, cyclization and/or aromatization of greater than 10% of the fatty acids.

10. The method of claim 1, further comprising: fractionating the hydrocarbons to produce one or more hydrocarbon fractions; or,
providing the hydrocarbons for a fuel in an engine; or,
providing the hydrocarbons for an aviation fuel; or,
blending the hydrocarbons with petroleum fuel to produce a blended fuel; or,
providing the hydrocarbons as a reactant for a chemical synthesis reaction.

11. The method of claim 1, wherein the catalyst is provided in a first catalyst bed at a temperature of at least 50°C, and deoxygenating at least 10% of the fatty acids further comprises subsequently exposing the composition to a second catalyst in a second catalyst bed at a temperature of at least 250°C, wherein the second catalyst comprises
a) Pt/Ge/C,
b) Pt/Sn/C, or
c) a combination thereof; optionally,
wherein the second catalyst comprises a different chemical composition than the catalyst.

12. The method of claim 1, wherein the composition comprises fatty acid triglycerides and exposing the composition comprising fatty acids to the catalyst comprises:
hydrolyzing the fatty acid triglycerides to produce free fatty acids and glycerol;
separating the free fatty acids from the glycerol; and
exposing the separated free fatty acids to the catalyst, wherein exposing the free fatty acids to the catalyst comprises providing a column with the catalyst disposed therein and flowing the free fatty acids through the column without added hydrogen, at a pressure less than 100 psi, at a temperature of at least 250°C, and at a WHSV of 0.1-2.0 hr⁻¹; optionally, wherein at least some of the fatty acids are unsaturated fatty acids and the catalyst is Pt/Ge/C or Pt/Sn/C.

13. The method of claim 1, wherein the catalyst comprises platinum combined with a non-transition metal on a support, and wherein the catalyst further deoxygenates at least 10% of the product.

14. A mixture comprising:
a composition suitable for use as a renewable fuel, comprising:
hydrocarbons in a liquid state;
at least 1 part per million (ppm) Pt; and
at least 0.5 ppm Ge, at least 0.5 ppm Sn, or at least 0.5 ppm of a combination of Ge and Sn.
